(19) Europäisches Patentamt
European Patent Office
Office européen des brevets

(11) Veröffentlichungsnummer: **0 463 994 B1**

(12) # EUROPÄISCHE PATENTSCHRIFT

(45) Veröffentlichungstag der Patentschrift: **08.11.95**

(21) Anmeldenummer: **91810464.7**

(22) Anmeldetag: **18.06.91**

(51) Int. Cl.$^{6}$: **C07F 9/6571**, C08K 5/5313, C08K 5/5399

(54) **Dioxaphosphorinanverbindungen als Stabilisatoren für organische Materialien.**

(30) Priorität: **26.06.90 CH 2126/90**

(43) Veröffentlichungstag der Anmeldung:
**02.01.92 Patentblatt 92/01**

(45) Bekanntmachung des Hinweises auf die Patenterteilung:
**08.11.95 Patentblatt 95/45**

(84) Benannte Vertragsstaaten:
**BE DE ES FR GB IT NL**

(56) Entgegenhaltungen:
**DE-A- 1 300 695**
**FR-A- 1 244 020**
**US-A- 3 388 105**

**BULLETIN OF THE ACADEMY OF SCIENCES OF THE USSR DIVISION OF CHEMICAL SCIENCE, a translation of Izvestiya Akademii Nauk SSSR, Seriya Khimicicheskaya, Band 30, Nr. 12, Teil 2, 20. Juni 1982, Seiten 2336-2338, Plenum Publishing Corp.; B.A. Arbuzov et al: "Reaction of hypophosphorud acid with benzaldehyde"**

**BULLETIN OF THE ACADEMY OF SCIENCES OF THE USSR DIVISION OF CHEMICAL SCIENCE, Band 30, Nr. 12, Teil 2, 20. Juni 1982, Seiten 2312-2316, Plenum Publishing Corp.; B.A. ARBUZOV et al.: "Reaction of 2,4,6-triisopropyl-1,3,5- dioxaphosphorinane and its sulfide with chloral and p-fluorobenzaldehyde", & IZV. AKAD. NAUK SSSR, SER. KHIM. 2803-6(12), 1981 (Kat. D)**

(73) Patentinhaber: **CIBA-GEIGY AG**
**Klybeckstrasse 141**
**CH-4002 Basel (CH)**

(72) Erfinder: **Nesvadba, Peter, Dr.**
**Route du Nord 5**
**CH-1723 Marly (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Zusammensetzungen enthaltend ein organisches Polymer, einen Schmierstoff, eine Metallbearbeitungsflüssigkeit oder eine Hydraulikflüssigkeit und mindestens eine Dioxaphosphorinanverbindung. Weitere Gegenstände der Erfindung sind neue Dioxaphosphorinanverbindungen.

Dioxaphosphorinane und ihre Herstellung sind z.B. in den US-A 2 984 551, 2 984 683, 3 005 020 und 3 328 319 sowie in Izv. Akad. Nauk. SSSR, Ser. Khim. 2803-6(12), 1981 und 2550-4(11), 1983 beschrieben. Aus diesen Publikationen sind auch verschiedene Verwendungsmöglichkeiten für solche Verbindungen bekannt. Die US-A 3 005 020 offenbart die Verwendung von Dioxaphosphorinanen als Komplexbildner für die Extraktion von Metallen, insbesondere Uran, aus Erzen. Ihre Verwendung als Vorentzündungs-Hemmer in Treibstoffen ist aus der US-A 2 984 551 und als Reaktionsbeschleuniger zur Härtung von Epoxidharzen aus der US-A 3 328 319 bekannt.

Es wurde nun gefunden, dass sich Dioxaphosphorinane ganz überraschend zur Stabilisierung von Polymeren, Schmierstoffen, Metallbearbeitungsflüssigkeiten und Hydraulikflüssigkeiten gegen oxidativen, thermischen und/oder actinischen Abbau sowie als Verschleissschutzmittel und Hochdruckadditive in Schmierstoffen eignen.

Weiterhin wurden neue Dioxaphosphorinane gefunden, welche die obenerwähnte Eigenschaft besitzen.

Gegenstand der vorliegenden Erfindung sind Zusammensetzungen enthaltend ein organisches Polymer, ausgenommen Polymere auf Epoxidharzbasis, einen Schmierstoff, eine Metallbearbeitungsflüssigkeit oder eine Hydraulikflüssigkeit und mindestens eine Dioxaphosphorinanverbindung der Formeln

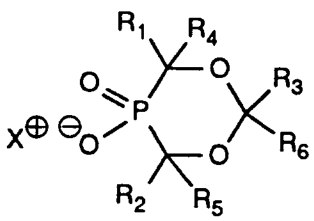

(I),

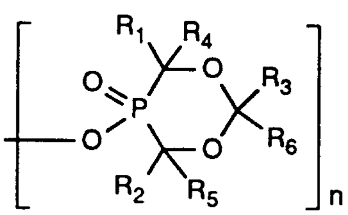

(II) oder/und

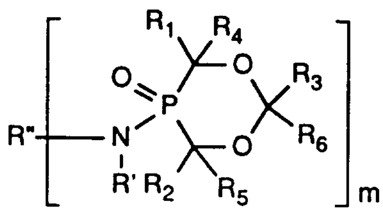

(III),

worin

$R_1$, $R_2$, $R_3$, $R_4$, $R_5$ und $R_6$ unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, Cyclohexenyl, unsubstituiertes oder durch $C_1$-$C_{18}$-Alkyl, Hydroxy, $C_1$-$C_{18}$-Alkoxy, $C_2$-$C_{18}$-Alkoxycarbonyl oder/und $C_1$-$C_{18}$-Alkylmercapto substituiertes Phenyl, eine Gruppe

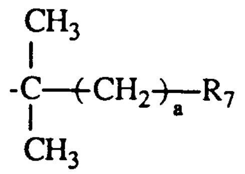

worin a Null oder Eins ist und $R_7$ -S-$R_8$,

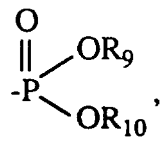

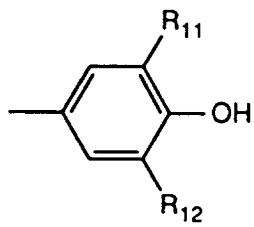 oder 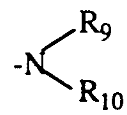 ist,

$R_8$ $C_1$-$C_{18}$-Alkyl, $C_2$-$C_{12}$-Alkenyl, Phenyl, Benzyl oder -$CH_2$-$COOR_{13}$,
$R_9$ und $R_{10}$ unabhängig voneinander Wasserstoff, $C_1$-$C_{18}$-Alkyl, $C_5$-$C_{12}$-Cycloalkyl oder Phenyl,
$R_{11}$ und $R_{12}$ unabhängig voneinander Wasserstoff, $C_1$-$C_4$-Alkyl, Cyclohexyl oder Phenyl,
$R_{13}$ Wasserstoff, $C_1$-$C_{18}$-Alkyl, $C_2$-$C_{12}$-Alkenyl, $C_5$-$C_{12}$-Cycloalkyl oder Benzyl bedeuten, oder

$R_1$, $R_2$, $R_3$, $R_4$, $R_5$ und $R_6$ unabhängig voneinander eine Gruppe -$COOR_{13}$,

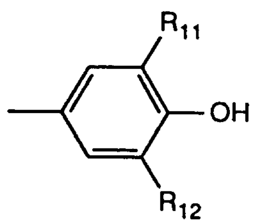 oder 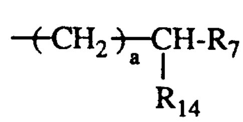

bedeuten, worin $R_7$, $R_{11}$, $R_{12}$, $R_{13}$ und a die oben angegebene Bedeutung haben und $R_{14}$, bei a = Null Wasserstoff, und bei a = 1 Wasserstoff, Methyl oder Phenyl ist,

$X^{\oplus}$ $H^{\oplus}$ oder eine Gruppe der Formeln

$$\frac{M^{r\oplus}}{r}$$

oder $N^{\oplus}(R_{15})$ $(R_{16})$ $(R_{17})$ $(R_{18})$ darstellt, wobei $M^{r\oplus}$ ein r-wertiges Metallkation, r die Zahlen 1, 2 oder 3, $R_{15}$, $R_{16}$, $R_{17}$, $R_{18}$ unabhängig voneinander Wasserstoff, $C_1$-$C_{18}$-Alkyl, $C_5$-$C_{12}$-Cycloalkyl, unsubstituiertes oder durch $C_1$-$C_{18}$-Alkyl substituiertes Phenyl bedeuten oder $R_{17}$ und $R_{18}$ zusammen mit dem N-Atom einen Pyrrolidin-, Imidazolidin-, Piperidin-, Piperazin- oder Morpholinrest, oder $R_{16}$, $R_{17}$ und $R_{18}$ zusammen mit dem N-Atom

einen Pyridin-, Picolin-, Pyrazin-, Chinolin- oder Isochinolinrest bilden,

n die Zahlen 1, 2, 3 oder 4 bedeutet,

A, wenn n 1 ist,
ununterbrochenes oder durch O, S oder NH unterbrochenes $C_1$-$C_{30}$-Alkyl, $C_2$-$C_{12}$-Alkenyl, unsubstituiertes oder durch $C_1$-$C_4$-Alkyl substituiertes $C_5$-$C_{12}$-Cycloalkyl, Benzyl, unsubstituiertes oder durch $C_1$-$C_{18}$-Alkyl substituiertes Phenyl, eine Gruppe

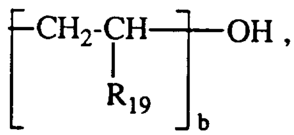

worin $R_{19}$ Wasserstoff oder Methyl ist und b eine Zahl von 1 bis 10 bedeutet, oder ein Rest

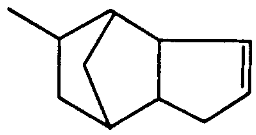 oder 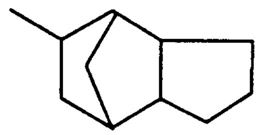

ist,
wenn n 2 ist,
$C_2$-$C_{18}$-Alkylen oder durch -O-, -NH- oder -S- unterbrochenes $C_2$-$C_{18}$-Alkylen, wenn n 3 ist,
eine Gruppe

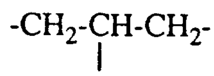

ist, und,
wenn n 4 ist,
eine Gruppe

$$C(CH_2-)_4$$

bedeutet,

m die Zahlen 1 oder 2 bedeutet, wobei,
wenn m 1 ist,

R' und R'' unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, unsubstituiertes oder durch $C_1$-$C_{18}$-Alkyl substituiertes Phenyl, Benzyl oder eine Gruppe

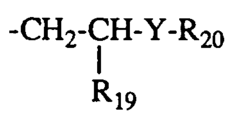

sind, worin Y -O- oder -NH- bedeutet, $R_{19}$ die oben angegebene Bedeutung hat und $R_{20}$ Wasserstoff, -CO-($C_1$-$C_{18}$-Alkyl) oder -CO-($C_2$-$C_{12}$-Alkenyl) ist, oder

R' Wasserstoff und R'' $C_1$-$C_{12}$-Alkoxy, eine Gruppe

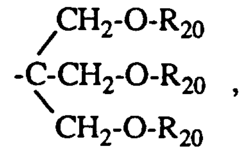

worin $R_{20}$ die oben angegebene Bedeutung hat, oder eine Gruppe

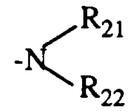

ist, worin $R_{21}$ und $R_{22}$ unabhängig voneinander Wasserstoff, $C_1$-$C_{18}$-Alkyl, $C_2$-$C_{12}$-Alkenyl, unsubstituiertes oder durch $C_1$-$C_{18}$-Alkyl substituiertes Phenyl, -CO$+$($C_1$-$C_{18}$-Alkyl) oder -CO$+$($C_2$-$C_{12}$-Alkenyl) , Benzoyl oder zusammen eine Gruppe =CH-$R_{23}$ sind, worin $R_{23}$ Wasserstoff, $C_1$-$C_{18}$-Alkyl, $C_2$-$C_{12}$-Alkenyl, $C_5$-$C_{12}$-Cycloalkyl oder Phenyl ist, oder

R' und R'' zusammen mit dem Stickstoffatom an das sie gebunden sind, einen Pyrrolidin-, Imidazolidin-, Piperidin-, Piperazin- oder Morpholinrest bilden, und, wenn m 2 ist,

R' Wasserstoff und R'' $C_2$-$C_{18}$-Alkylen ist.

Stellen etwaige Substituenten $C_1$-$C_{18}$-Alkyl dar, so handelt es sich dabei um verzweigte oder unverzweigte Reste. Beispiele hierfür sind Methyl, Ethyl, Propyl, Isopropyl, n-Butyl, Isobutyl, t-Butyl, Pentyl, Isopentyl, Hexyl, Heptyl, 3-Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl oder 1-Methylundecyl. Der Rest A bedeutet als $C_1$-$C_{30}$-Alkyl zusätzlich auch z.B. Eicosyl, Heneicosyl, Tricosyl, Tetracosyl, Pentacosyl oder Triacontyl. Etwaige $C_1$-$C_4$-Alkylreste bedeuten Methyl, Ethyl, Propyl, Isopropyl, n-Butyl, Isobutyl oder t-Butyl.

Bedeuten Substituenten $C_2$-$C_{12}$-Alkenyl, so kann es sich um verzweigtes oder unverzweigtes Alkenyl handeln, wie z.B. Vinyl, Allyl, 2-Methylallyl, Hexenyl, Decenyl und Dodecenyl.

Jedweder Substituent, der $C_5$-$C_{12}$-Cycloalkyl bedeuten kann, stellt z.B. Cyclopentyl, Cyclohexyl, Cycloheptyl, Cyclooctyl oder Cyclododecyl dar. Cyclopentyl und insbesondere Cyclohexyl sind bevorzugt.

Beispiele für etwaige $C_1$-$C_{18}$-Alkoxygruppen leiten sich von den vorstehend für $C_1$-$C_{18}$-Alkylgruppen aufgezählten Resten ab und können formal durch Anhängen des Suffix -oxy definiert werden. Dasselbe, jedoch mit dem Suffix -mercapto, gilt für etwaige $C_1$-$C_{18}$-Alkylmercaptogruppen.

$X^{\oplus}$ ist vorzugsweise $H^{\oplus}$ oder insbesondere eine Gruppe der Formel

$$\frac{M^{r\oplus}}{r} .$$

Stellt $X^{\oplus}$ eine Gruppe der Formel

$$\frac{M^{r\oplus}}{r}$$

dar, so handelt es sich bei $M^{r\oplus}$ beispielsweise um ein Alkalimetall-, Erdalkalimetall-, Aluminium- oder Uebergangsmetallkation, wie z.B. $Na^{\oplus}$, $K^{\oplus}$, $Mg^{2\oplus}$, $Ca^{2\oplus}$, $Sr^{2\oplus}$, $Ba^{2\oplus}$, $Zn^{2\oplus}$, $Mn^{2\oplus}$, $Cu^{2\oplus}$, $Ni^{2\oplus}$, $Cd^{2\oplus}$, $Co^{3\oplus}$,$Al^{3\oplus}$ und $Cr^{3\oplus}$, insbesondere aber um ein ein- oder zweiwertiges Metallkation (r = 1 oder 2) und bevorzugt um $Na^{\oplus}$, $K^{\oplus}$, $Ca^{2\oplus}$, $Mg^{2\oplus}$, $Zn^{2\oplus}$, $Cu^{2\oplus}$ oder $Ni^{2\oplus}$.

Bedeuten $R_{15}$, $R_{16}$, $R_{17}$ und $R_{18}$ $C_5$-$C_6$-Cycloalkyl, dann handelt es sich z.B. um Cyclopentyl oder insbesondere um Cyclohexyl.

Als durch $C_1$-$C_{18}$-Alkyl substituiertes Phenyl bedeuten $R_{15}$, $R_{16}$, $R_{17}$ und $R_{18}$ vorzugsweise durch $C_{12}$-$C_{18}$-Alkyl substituiertes Phenyl.

Als Beispiele für $N^{\oplus}(R_{15})$ $(R_{16})$ $(R_{17})$ $(R_{18})$ seien genannt; $N^{\oplus}H_4$, $N^{\oplus}H_3CH_3$, $N^{\oplus}H_2(CH_3)_2$, $N^{\oplus}H_3C_2H_5$, $N^{\oplus}H_2(C_2H_5)_2$, $N^{\oplus}H_3C_3H_7$-iso, $N^{\oplus}H_3$-n-Octadecyl, $N^{\oplus}H_3$-Cyclohexyl, $N^{\oplus}H_2$-(Cyclohexyl)$_2$, $N^{\oplus}H_2(CH_3)(C_6H_5)$, $N^{\oplus}H_3C_6H_5$, $N^{\oplus}H_3$-p-Octadecylphenyl und $N^{\oplus}(CH_3)_4$.

Von besonderem Interesse sind erfindungsgemässe Zusammensetzungen enthaltend Verbindungen der Formeln I, II oder III, worin $R_1$, $R_2$ und $R_3$ gleich sind und die oben angegebene Bedeutung haben und $R_4$, $R_5$ und $R_6$ Wasserstoff bedeuten.

Von ganz besonderem Interesse sind erfindungsgemässe Zusammensetzungen enthaltend Verbindungen der Formeln I, II oder III, worin $R_1$, $R_2$ und $R_3$ gleich sind und $C_1$-$C_{18}$-Alkyl, Cyclohexyl, Cyclohexenyl oder eine Gruppe

$$-(CH_2)_2-R_7$$

bedeuten, $R_7$ eine Gruppe -S-($C_1$-$C_{18}$-Alkyl) ,

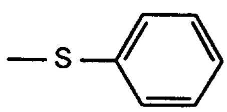 , 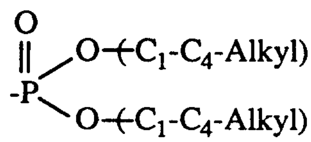 oder

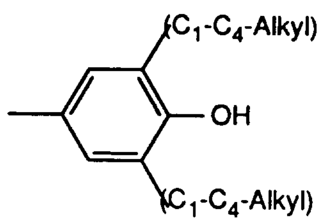

ist und $R_4$, $R_5$ und $R_6$ Wasserstoff sind.

Bevorzugt sind erfindungsgemässe Zusammensetzungen enthaltend Verbindungen der Formeln I, II und III, worin $R_1$, $R_2$, $R_3$, $R_4$, $R_5$ und $R_6$ die obenerwähnte erste und insbesondere die zweite bevorzugte Bedeutung haben und

$X^{\oplus}$ — $H^{\oplus}$ oder eine Gruppe der Formeln

$$\frac{M^{r\oplus}}{r}$$

oder $N^{\oplus}(R_{15})(R_{16})(R_{17})(R_{18})$ darstellt, wobei $M^{r\oplus}$ ein ein- oder zweiwertiges Metallkation ist und $R_{15}$, $R_{16}$, $R_{17}$, $R_{18}$ unabhängig voneinander Wasserstoff, $C_1$-$C_{12}$-Alkyl oder Cyclohexyl bedeuten,

n — die Zahlen 1 oder 2 bedeutet,

A, — wenn n 1 ist,
$C_1$-$C_{18}$-Alkyl, Cyclohexyl, unsubstituiertes oder durch $C_1$-$C_4$-Alkyl substituiertes Phenyl oder Benzyl bedeutet,
wenn n 2 ist,
$C_2$-$C_{12}$-Alkylen oder durch -O- oder -S- unterbrochenes $C_2$-$C_{12}$-Alkylen bedeutet,

m — die Zahlen 1 oder 2 bedeutet, wobei,
wenn m 1 ist,

R' und R'' — unabhängig voneinander Wasserstoff, $C_1$-$C_{18}$-Alkyl, Cyclohexyl, Phenyl, Benzyl oder Hy-

droxy-$C_1$-$C_4$-alkyl sind, oder

R' Wasserstoff und R'' Amino, $C_1$-$C_6$-Alkylamino, $C_2$-$C_{12}$-Dialkylamino, $C_1$-$C_6$-Alkoxy oder eine Gruppe

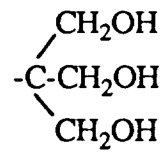

bedeutet,

oder R' und R'' zusammen mit dem N-Atom den Piperidin-, Piperazin- oder Morpholinorest bilden, oder,

wenn m 2 ist,

R' Wasserstoff und R'' $C_2$-$C_{12}$-Alkylen ist, wobei vorzugsweise $X^{\oplus}$ $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$ oder $Ni^{2\oplus}/2$, A $C_1$-$C_{18}$-Alkyl, Phenyl, Benzyl, $C_2$-$C_{12}$-Alkylen oder durch -O- oder -S- unterbrochenes $C_2$-$C_{12}$-Alkylen, R' und R'' unabhängig voneinander Wasserstoff, $C_1$-$C_{12}$-Alkyl, Phenyl, Benzyl oder Hydroxy-$C_2$-$C_4$-alkyl oder R' Wasserstoff und R'' $C_1$-$C_4$-Alkoxy, Amino oder $C_2$-$C_{18}$-Alkylen bedeuten, oder R' und R'' zusammen mit dem N-Atom den Piperidin-, Piperazin- oder Morpholinorest bilden.

Besonders zu erwähnen sind erfindungsgemässe Zusammensetzungen, die Verbindungen der Formeln I, II oder III enthalten, worin $X^{\oplus}$ $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$, $Ni^{2\oplus}/2$ oder $^{\oplus}N(R_{15})(R_{16})(R_{17})(R_{18})$ ist und $R_{15}$, $R_{16}$, $R_{17}$ und $R_{18}$ unabhängig voneinander für Wasserstoff oder $C_1$-$C_6$-Alkyl stehen,
n die Zahlen 1 oder 2 bedeutet,

A, wenn n 1 ist, $C_1$-$C_{12}$-Alkyl,
wenn n 2 ist, $C_2$-$C_{12}$-Alkylen oder durch -O- unterbrochenes $C_2$-$C_{12}$-Alkylen,

m die Zahlen 1 oder 2 bedeutet, wobei, wenn m 1 ist,
R' und R'' unabhängig voneinander Wasserstoff, $C_1$-$C_6$-Alkyl, Hydroxy-$C_2$-$C_4$-alkyl, oder R' Wasserstoff und R'' Amino oder $C_1$-$C_4$-Alkoxy ist,
oder R' und R'' zusammen mit dem N-Atom den Piperidin-, Piperazin- oder Morpholinorest bilden,
wenn m 2 ist, R' Wasserstoff und R'' $C_2$-$C_{18}$-Alkylen bedeuten,
$R_1$, $R_2$ und $R_3$ gleich sind und $C_1$-$C_{12}$-Alkyl, Cyclohexenyl oder eine Gruppe der Formel $-(CH_2)_2$-$R_7$ bedeuten, worin $R_7$ -S-$C_1$-$C_{14}$-Alkyl,

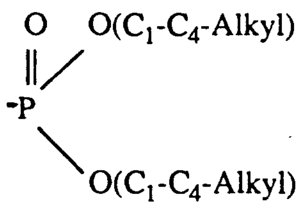

oder

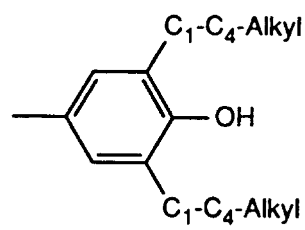

ist und $R_4$, $R_5$ und $R_6$ Wasserstoff bedeuten.

Die Dioxaphosphorinane der Formeln I, II und/oder III liegen in den erfindungsgemässen Zusammensetzungen zweckmässig zu 0,001 bis 10, beispielsweise zu 0,05 bis 5, vorzugsweise zu 0,01 bis 5, insbesondere jedoch zu 0,1 bis 2 Gew.%, bezogen auf die zu stabilisierenden Materialien (z.B. Polymere, Schmierstoffe, u.s.w.) vor. Es kann sich dabei um eine oder mehrere dieser Verbindungen handeln, und die

Gewichtsprozentangaben beziehen sich auf die gesamte Menge dieser Verbindungen.

Beispielhaft für Polymere, die erfindungsgemäss mit Hilfe der Verbindungen der Formel I, II und/oder III stabilisiert werden können, seien erwähnt:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-(α-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder a-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd oder Polypropylenoxyd.

12. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS

modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Urethanacrylaten oder Polyester-acrylaten.

24. Alkydharze, Polyesterharze und Acrylatharze, die mit Melaminharzen, Harnstoffharzen oder Polyisocyanaten vernetzt sind.

25. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

26. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

Bevorzugt sind Zusammensetzungen, die ein Polymer enthalten, insbesondere einen thermoplastischen Kunststoff oder ein Elastomer. Vor allem sind Zusammensetzungen hervorzuheben, die ein Polyolefin als Polymer enthalten.

Ebenfalls bevorzugt sind Zusammensetzungen, die einen Schmierstoff, eine Metallbearbeitungsflüssigkeit oder eine Hydraulikflüssigkeit, insbesondere einen Schmierstoff, enthalten.

Die in Frage kommenden Schmierstoffe basieren beispielsweise auf mineralischen oder synthetischen Oelen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, Heidelberg, 1974) und in "Ullmanns Enzyklopädie der technischen Chemie", Bd. 13, Seiten 85-94 (Verlag Chemie, Weinheim, 1977) beschrieben.

Die Schmierstoffe sind insbesondere Oele und Fette, beispielsweise basierend auf einem Mineralöl. Bevorzugt sind Oele.

Eine weitere Gruppe von Schmierstoffen, die zur Anwendung gelangen können, sind pflanzliche oder tierische Oele, Fette, Talge und Wachse oder deren Gemische untereinander oder Gemische mit den erwähnten mineralischen oder synthetischen Oelen. Pflanzliche und tierische Oele, Fette, Talge und Wachse sind beispielsweise Palmkernöl, Palmöl, Olivenöl, Rueböl, Rapsöl, Leinöl, Erdnussöl, Sojabohnenöl, Baumwollöl, Sonnenblumenöl, Kürbiskernöl, Kokosnussöl, Maisöl, Rizinusöl, Baumnussöl und Mischungen davon, Fischöle, Talge von Schlachttieren wie Rindertalg, Klauenfett und Knochenöl sowie deren modifizierte, epoxidierte und sulfoxidierte Formen, beispielsweise epoxidiertes Sojabohnenöl.

Die Mineralöle basieren insbesondere auf Kohlenwasserstoffverbindungen.

Beispiele von synthetischen Schmierstoffen umfassen Schmierstoffe auf der Basis der aliphatischen oder aromatischen Carboxylester, der polymeren Ester, der Polyalkylenoxide, der Phosphorsäureester, der Poly-$\alpha$-olefine oder der Silicone, eines Diesters einer zweiwertigen Säure mit einem einwertigen Alkohol, wie z.B. Dioctylsebacat oder Dinonyladipat, eines Triesters von Trimethylolpropan mit einer einwertigen Säure oder mit einem Gemisch solcher Säuren, wie z.B. Trimethylolpropantripelargonat, Trimethylolpropantricaprylat oder Gemische davon, eines Tetraesters von Pentaerythrit mit einer einwertigen Säure oder mit einem Gemisch solcher Säuren, wie z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure oder von einem Gemisch davon. Besonders geeignet sind neben Mineralölen z.B. Poly-$\alpha$-Olefine, Schmierstoffe auf Esterbasis, Phosphate, Glykole, Polyglykole und Polyalkylenglykole, sowie deren Mischungen mit Wasser.

Metallbearbeitungsflüssigkeiten und Hydraulikflüssigketen können auf Basis der gleichen Substanzen hergestellt werden wie vorstehend für die Schmiermittel beschrieben. Häufig handelt es sich dabei auch um Emulsionen solcher Substanzen in Wasser oder anderen Flüssigkeiten.

Die Einarbeitung in die obenerwähnten organischen Materialien kann beispielsweise durch Einmischen der Verbindungen der Formeln I, II und/oder III und gegebenenfalls weiterer Additive nach den in der Technik üblichen Methoden erfolgen. Handelt es sich um Polymere, insbesondere synthetische Polymere, kann die Einarbeitung vor oder während der Formgebung, oder durch Aufbringen der gelösten oder dispergierten Verbindungen auf das Polymere, gegebenenfalls unter nachträglichem Verdunsten des Lösungsmittels erfolgen. Im Fall von Elastomeren können diese auch als Latices stabilisiert werden. Eine weitere Möglichkeit der Einarbeitung der Verbindungen der Formeln I, II und/oder III in Polymere besteht in deren Zugabe vor, während oder unmittelbar nach der Polymerisation der entsprechenden Monomeren bzw. vor der Vernetzung. Sie können dabei als solche, aber auch in einkapsulierter Form (z.B. in Wachsen, Oelen oder Polymeren) zugesetzt werden. Im Falle der Zugabe vor oder während der Polymerisation können die Verbindungen der Formeln I, II und/oder III auch als Regulatoren für die Kettenlänge der Polymeren (Kettenabbrecher) wirken.

Die Verbindungen der Formeln I, II und/oder III oder Mischungen davon können auch in Form eines Masterbatches, der diese Verbindungen beispielsweise in einer Konzentration von 2,5 bis 25 Gew.-% enthält, den zu stabilisierenden Kunststoffen zugesetzt werden.

Zweckmässig kann die Einarbeitung der Verbindungen der Formeln I, II und/oder III nach folgenden Methoden erfolgen:

- als Emulsion oder Dispersion (z.B. zu Latices oder Emulsionspolymeren)
- Als Trockenmischung während des Vermischens von Zusatzkomponenten oder Polymermischungen
- durch direktes Zugeben in die Verarbeitungsapparatur (z.B. Extruder, Innenmischer usw.)
- als Lösung oder Schmelze.

Erfindungsgemässe Polymerzusammensetzungen können in verschiedener Form angewendet bzw. zu verschiedenen Produkten verarbeitet werden, z.B. als (zu) Folien, Fasern, Bändchen, Formmassen, Profilen, oder als Bindemittel für Lacke, Klebstoffe oder Kitte.

Erfindungsgemässe Schmierstoffzusammensetzungen finden z.B. Verwendung in Verbrennungsmotoren, z.B. in Kraftfahrzeugen.

Zusätzlich zu den erfindungsgemässen Verbindungen bzw. Mischungen können die erfindungsgemässen Zusammensetzungen, insbesondere wenn sie Polymere, vorzugsweise synthetische Polymere enthalten, noch weitere übliche Additive enthalten. Beispiele für solche Additive sind:

1. Antioxidantien

1.1. Alkylierte Monophenole, z.B. 2,6-Di-tert.butyl-4-methylphenol, 2-Tert.butyl-4,6-di-methylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-($\alpha$-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydioxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4. Alkyliden-Bisphenole, z.B. 2,2'-Methylen-bis-(6-tert.butyl-4-methylphenol), 2,2'-Methylen-bis-(6-tert.butyl-4-ethylphenol),2,2'-Methylen-bis-[4-methyl-6-($\alpha$-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-di-methylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methyl-phenyl)-3-n-dodecylmercaptobutan, Ethylenglycol-bis-[3,3-bis-(3'-tert.butyl-4'-hydroxyphenyl)-butyrat],Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat.

1.5 Benzylverbindungen, z.B. 1,3,5-Tris-(3,5-di-tert.butyl-4-hydroxy-benzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino )-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octa- decanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzylmalonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazi n, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit.

5. Peroxidzerstörende Verbindungen, wie z.B. Ester der $\beta$-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-($\beta$-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Handelt es sich bei den erfindungsgemässen Zusammensetzungen um solche auf Basis von Schmierstoffen und Hydraulikflüssigkeiten bzw. Metallbearbeitungsflüssigkeiten,können diese ebenfalls weitere Additive enthalten, die zugegeben werden, um gewisse Gebrauchseigenschaften zu verbessern, wie z.B. weitere Antioxidantien, Metalldesaktivatoren, Rostinhibitoren, Viskositäts-Index-Verbesserer, Stockpunkterniedriger, Dispergiermittel/Tenside und Verschleissschutzadditive.

Beispiele für Antioxidantien sind der weiter oben wiedergegebenen Auflistung unter dem Titel "1. Antioxidantien", insbesondere Punkte 1.1 bis 1.10 zu entnehmen. Beispiele für weitere zusätzliche Additive sind die folgenden:

Beispiele für aminische Antioxidantien:

N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methylphenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, 2,3-Dihydro-3,3-dimethyl-4H-1,4-benzothiazin, Phenothiazin, N-Allylphenothiazin.

<u>Beispiele für weitere Antioxidantien:</u>

Aliphatische oder aromatische Phosphite, Ester der Thiodipropionsäure oder der Thiodiessigsäure, oder Salze der Dithiocarbamid- oder Dithiophosphorsäure.

<u>Beispiele für Metall-Desaktivatoren, z.B. für Kupfer, sind:</u>

Triazole, Benztriazole und deren Derivate, Tolutriazole und deren Derivate, 2-Mercaptobenzthiazol, 2-Mercaptobenztriazol, 2,5-Dimercaptobenztriazol, 2,5-Dimercaptobenzthiadiazol,5,5'-Methylenbisbenztriazol, 4,5,6,7-Tetrahydrobenztriazol, Salicyliden-propylendiamin, Salicylaminoguanidin und dessen Salze.

<u>Beispiele für Rost-Inhibitoren sind:</u>

a) Organische Säuren, ihre Ester, Metallsalze und Anhydride, z.B.:
N-Oleoyl-sarcosin, Sorbitan-mono-oleat, Blei-naphthenat, Alkenylbernsteinsäure-anhydrid, z.B. Dodecenylbernsteinsäure-anhydrid, Alkenylbernsteinsäure-Teilester und -Teilamide, 4-Nonylphenoxy-essigsäure.
b) Stickstoffhaltige Verbindungen, z.B.:
  I. Primäre, sekundäre oder tertiäre aliphatische oder cycloaliphatische Amine und Amin-Salze von organischen und anorganischen Säuren, z.B. öllösliche Alkylammoniumcarboxylate.
  II. Heterocyclische Verbindungen, z.B.:
  Substituierte Imidazoline und Oxazoline.
c) Phosphorhaltige Verbindungen, z.B.:
Aminsalze von Phosphorsäurepartialestern oder Phosphonsäurepartialestern, Zinkdialkyldithiophosphate.
d) Schwefelhaltige Verbindungen, z.B.:
Barium-dinonylnaphthalin-sulfonate, Calciumpetroleum-sulfonate.

<u>Beispiele für Viskositätsindex-Verbesserer sind:</u>

Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

<u>Beispiele für Stockpunkterniedriger sind:</u>

Polymethacrylat, alkylierte Naphthalinderivate.

<u>Beispiele für Dispergiermittel/Tenside sind:</u>

Polybutenylbernsteinsäureamide oder -imide, Polybutenylphosphonsäurederivate, basische Magnesium-, Calcium-, und Bariumsulfonate und -phenolate.

<u>Beispiele für Verschleissschutz-Additive sind:</u>

Schwefel und/oder Phosphor und/oder Halogen enthaltende Verbindungen, wie geschwefelte pflanzliche Oele, Zinkdialkyldithiophosphate, Tritolylphosphat, chlorierte Paraffine, Alkyl- und Aryldi- und tri-sulfide, Triphenylphosphorothionate, Diethanolaminomethyltolyltriazol, Di(2-ethylhexyl)aminomethyltolyltriazol.

Die Dioxaphosphorinanverbindungen der Formeln I, II und III, worin mindestens eins von $R_1$, $R_2$, $R_3$, $R_4$, $R_5$ und $R_6$ eine Gruppe

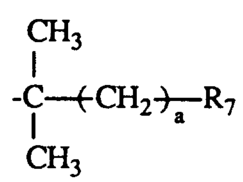 , 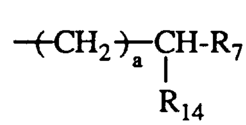 oder

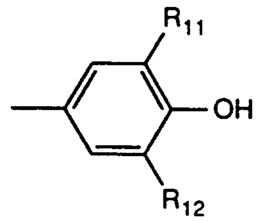

mit der oben angegebenen Bedeutung ist, sind neu und ebenfalls Gegenstand der vorliegenden Erfindung.

Die Erfindung betrifft demnach auch Verbindungen der Formeln I, II und III

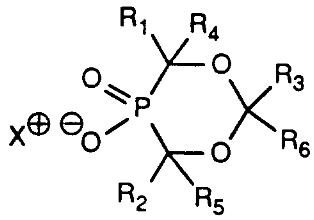

(I),

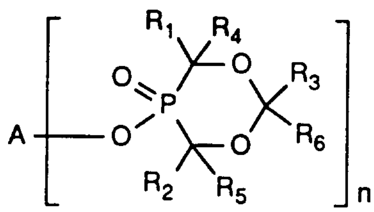

(II) oder

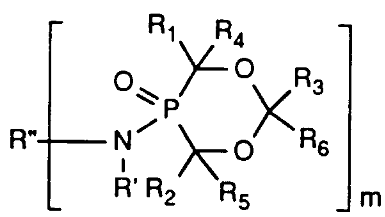

(III),

worin

$R_1$, $R_2$, $R_3$, $R_4$, $R_5$ und $R_6$ unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, Cyclohexenyl, unsubstituiertes oder durch $C_1$-$C_{18}$-Alkyl, Hydroxy, $C_1$-$C_{18}$-Alkoxy, $C_2$-$C_{18}$-Alkoxycarbonyl oder/und $C_1$-$C_{18}$-Alkylmercapto substituiertes Phenyl, eine Gruppe

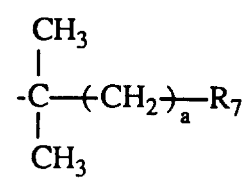

, worin a Null oder Eins ist und $R_7$ -S-$R_8$,

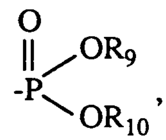

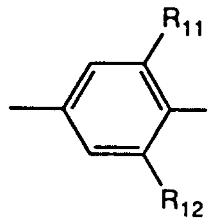 oder 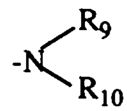

ist,

$R_8$ $C_1$-$C_{18}$-Alkyl, $C_2$-$C_{12}$-Alkenyl, Phenyl, Benzyl oder -$CH_2$-$COOR_{13}$,

$R_9$ und $R_{10}$ unabhängig voneinander Wasserstoff, $C_1$-$C_{18}$-Alkyl, $C_5$-$C_{12}$-Cycloalkyl oder Phenyl,

$R_{11}$ und $R_{12}$ unabhängig voneinander Wasserstoff, $C_1$-$C_4$-Alkyl, Cyclohexyl oder Phenyl,

$R_{13}$ Wasserstoff, $C_1$-$C_{18}$-Alkyl, $C_2$-$C_{12}$-Alkenyl, $C_5$-$C_{12}$-Cycloalkyl oder Benzyl bedeuten, oder

$R_1$, $R_2$, $R_3$, $R_4$, $R_5$ und $R_6$ unabhängig voneinander eine Gruppe -$COOR_{13}$,

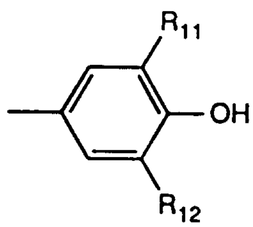 oder 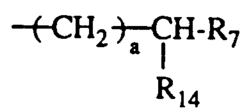

bedeuten, worin $R_7$, $R_{11}$, $R_{12}$, $R_{13}$ und a die oben angegebene Bedeutung haben und $R_{14}$, bei a = Null Wasserstoff, und bei a = 1 Wasserstoff, Methyl oder Phenyl ist,

mit der Bedingung, dass mindestens eines von $R_1$, $R_2$, $R_3$, $R_4$, $R_5$ und $R_6$ eine Gruppe

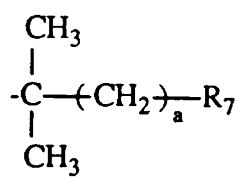 , 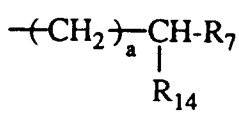 oder 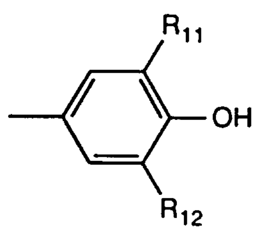

mit der oben angegebenen Bedeutung sein muss,

$X^{\oplus}$ $H^{\oplus}$ oder eine Gruppe der Formeln

$$\frac{M^{r\oplus}}{r}$$

oder $N^{\oplus}(R_{15})(R_{16})(R_{17})(R_{18})$ darstellt, wobei $M^{r\oplus}$ ein r-wertiges Metallkation, r die Zahlen 1, 2 oder 3, $R_{15}$, $R_{16}$, $R_{17}$, $R_{18}$ unabhängig voneinander Wasserstoff, $C_1$-$C_{18}$-Alkyl, $C_5$-$C_{12}$-Cycloalkyl, unsubstituiertes oder durch $C_1$-$C_{18}$-Alkyl substituiertes Phenyl bedeuten oder $R_{17}$ und $R_{18}$ zusammen mit dem N-Atom einen Pyrrolidin-, Imidazolidin-, Piperidin-, Piperazin- oder Morpholinrest, oder $R_{16}$, $R_{17}$ und $R_{18}$ zusammen mit dem N-Atom einen Pyridin-, Picolin-, Pyrazin-, Chinolin- oder Isochinolinrest bilden,

n die Zahlen 1, 2, 3 oder 4 bedeutet,

A, wenn n 1 ist, ununterbrochenes oder durch O, S oder NH unterbrochenes $C_1$-$C_{30}$-Alkyl, $C_2$-$C_{12}$-Alkenyl, unsubstituiertes oder durch $C_1$-$C_4$-Alkyl substituiertes $C_5$-$C_{12}$-Cycloalkyl, Benzyl, unsubstituiertes oder durch $C_1$-$C_{18}$-Alkyl substituiertes Phenyl, eine Gruppe

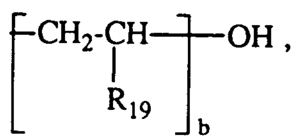

worin $R_{19}$ Wasserstoff oder Methyl ist und b eine Zahl von 1 bis 10 bedeutet, oder ein Rest

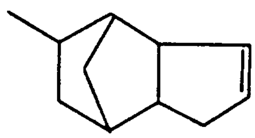

oder

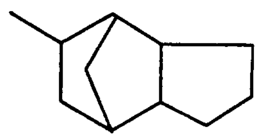

ist,

wenn n 2 ist, $C_2$-$C_{18}$-Alkylen oder durch -O-, -S- oder -NH- unterbrochenes $C_2$-$C_{18}$-Alkylen bedeutet,

wenn n 3 ist, eine Gruppe

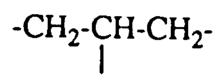

ist, und,

wenn n 4 ist, eine Gruppe

$$C(CH_2-)_4$$

bedeutet,

m die Zahlen 1 oder 2 bedeutet, wobei,

wenn m 1 ist,

R' und R" unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, unsubstituiertes oder durch $C_1$-$C_{18}$-Alkyl substituiertes Phenyl, Benzyl oder eine Gruppe

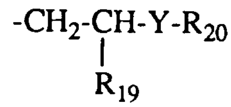

sind, worin Y -O- oder -NH- bedeutet, $R_{19}$ die oben angegebene Bedeutung hat und $R_{20}$ Wasserstoff, -CO-($C_1$-$C_{18}$-Alkyl) oder -CO-($C_2$-$C_{12}$-Alkenyl) ist, oder

R' Wasserstoff und R'' $C_1$-$C_{12}$-Alkoxy, eine Gruppe

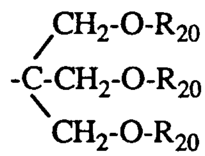
,

worin $R_{20}$ die oben angegebene Bedeutung hat,
oder eine Gruppe

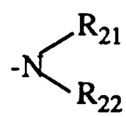

ist,
worin $R_{21}$ und $R_{22}$ unabhängig voneinander Wasserstoff, $C_1$-$C_{18}$-Alkyl, $C_2$-$C_{12}$-Alkenyl, unsubstituiertes oder durch $C_1$-$C_{18}$-Alkyl substituiertes Phenyl, -CO-($C_1$-$C_{18}$-Alkyl) oder -CO-($C_2$-$C_{12}$-Alkenyl) , Benzoyl oder zusammen eine Gruppe =CH-$R_{23}$ sind, worin $R_{23}$ Wasserstoff, $C_1$-$C_{18}$-Alkyl, $C_2$-$C_{12}$-Alkenyl, $C_5$-$C_{12}$-Cycloalkyl oder Phenyl ist, oder

R' und R'' zusammen mit dem Stickstoffatom an das sie gebunden sind einen Pyrrolidin-, Imidazolidin-, Piperidin-, Piperazin- oder Morpholinrest bilden,
und, wenn m 2 ist,

R' Wasserstoff und R'' $C_2$-$C_{18}$-Alkylen ist.

Bevorzugt sind Verbindungen der Formeln

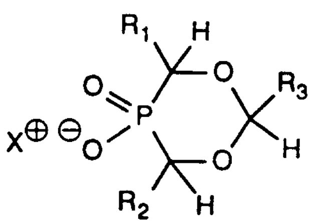
(IV),

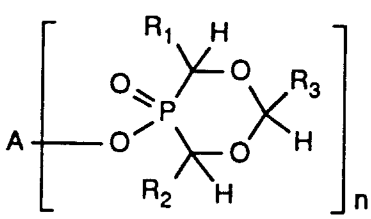
(V) und

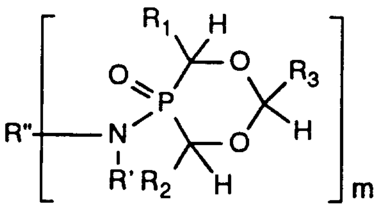

(VI),

worin

$R_1$, $R_2$ und $R_3$ gleich sind und die oben angegebene Bedeutung haben,

$X^{\oplus}$ $H^{\oplus}$ oder eine Gruppe der Formeln

$$\frac{M^{r\oplus}}{r}$$

oder $N^{\oplus}(R_{15})(R_{16})(R_{17})(R_{18})$ darstellt, wobei $M^{r\oplus}$ ein ein- oder zweiwertiges Metallkation ist und $R_{15}$, $R_{16}$, $R_{17}$, $R_{18}$ unabhängig voneinander Wasserstoff, $C_1$-$C_{12}$-Alkyl oder Cyclohexyl bedeuten,

n die Zahlen 1 oder 2 bedeutet,

A, wenn n 1 ist,
$C_1$-$C_{18}$-Alkyl, Cyclohexyl, unsubstituiertes oder durch $C_1$-$C_4$-Alkyl substituiertes Phenyl oder Benzyl bedeutet,
wenn n 2 ist,
$C_2$-$C_{12}$-Alkylen oder durch -O- unterbrochenes $C_2$-$C_{12}$-Alkylen,

m die Zahlen 1 oder 2 bedeutet, wobei,
wenn m 1 ist,

R' und R'' unabhängig voneinander Wasserstoff, $C_1$-$C_{18}$-Alkyl, Cyclohexyl, Phenyl, Benzyl oder Hydroxy-$C_2$-$C_4$-alkyl sind, oder

R' Wasserstoff und R'' Amino, $C_1$-$C_6$-Alkoxy oder eine Gruppe

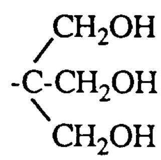

bedeutet, oder R' und R'' zusammen mit dem N-Atom den Piperidin-, Piperazin- oder Morpholinring bilden, und,
wenn m 2 ist,

R' Wasserstoff und R'' $C_2$-$C_{18}$-Alkylen ist.

Besonders bevorzugt sind Verbindungen der Formeln IV, V und VI, worin $R_1$, $R_2$ und $R_3$ gleich sind und eine Gruppe

$$-(CH_2)_2-R_7$$

bedeuten, $R_7$ eine Gruppe -S-($C_1$-$C_{14}$-Alkyl) ,

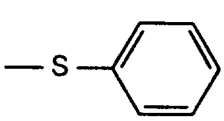 , 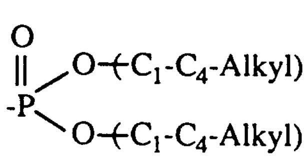 oder

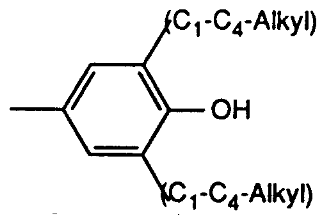

ist und $R_4$, $R_5$ und $R_6$ Wasserstoff sind, $X^{\oplus}$ $H^{\oplus}$, $Na^{\oplus}$, $K^{\oplus}$,$Ca^{2\oplus}/2$, $Mg^{2\oplus}/2$, $Zn^{2\oplus}/2$, $Cu^{2\oplus}/2$ oder $Ni^{2\oplus}/2$, n 1, A $C_1$-$C_{18}$-Alkyl, m 1, R' Wasserstoff und R'' $C_1$-$C_4$-Alkyl, $-CH_2$-$CH_2OH$ oder $-NH_2$ bedeuten.

Ein weiterer Gegenstand der Erfindung ist die Verwendung von Verbindungen der Formeln I, II und/oder III zum Stabilisieren von organischen Polymeren, Schmierstoffen, Metallbearbeitungsflüssigkeiten und Hydraulikflüssigkeiten gegen oxidativen, thermischen und/oder actinischen Abbau, sowie als Verschleissschutzmittel und Hochdruckadditive in Schmierstoffen.

Die Erfindung besteht auch in einem Verfahren zum Stabilisieren von organischen Polymeren, Schmierstoffen, Metallbearbeitungsflüssigkeiten und Hydraulikflüssigkeiten gegen oxidativen, thermischen und/oder actinischen Abbau, dadurch gekennzeichnet, dass man diesen Materialien als Stabilisator mindestens eine Verbindung der Formeln I, II oder III zusetzt bzw. auf diese aufbringt.

Die Herstellung der erfindungsgemässen Verbindungen sowie der weiteren in den erfindungsgemässen Zusammensetzungen eingesetzten Dioxaphosphorinanverbindungen erfolgt nach an sich bekannten Methoden, beispielsweise nach den in den US-A 3 328 319 und 2 984 551 beschriebenen Verfahren und kann durch folgendes Schema zusammengefasst werden:

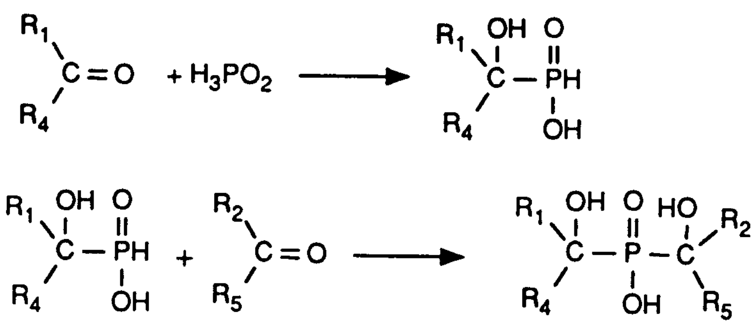

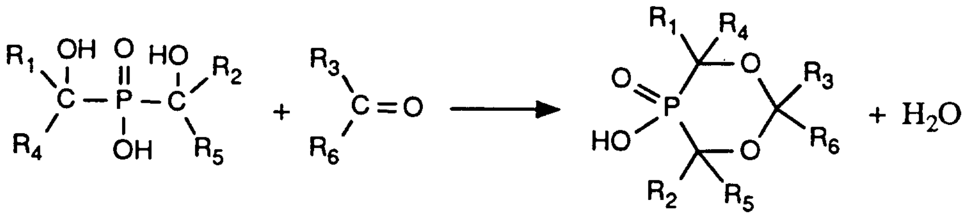


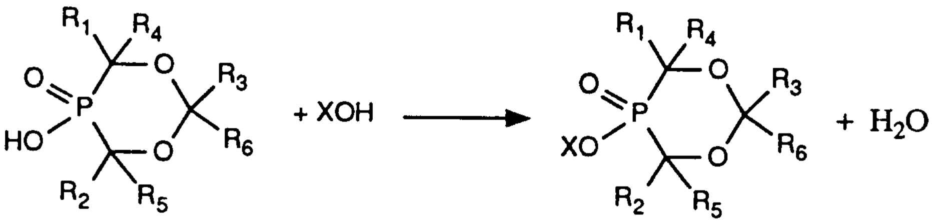


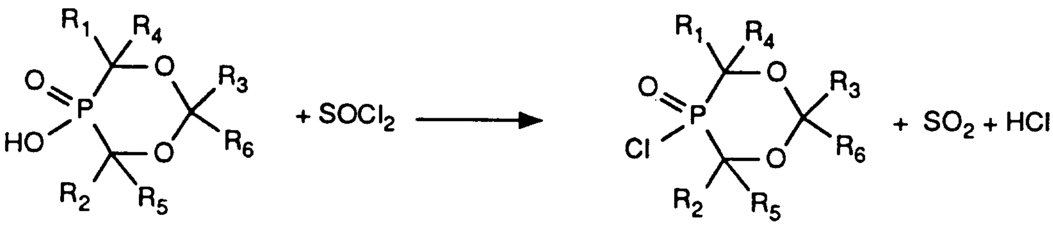


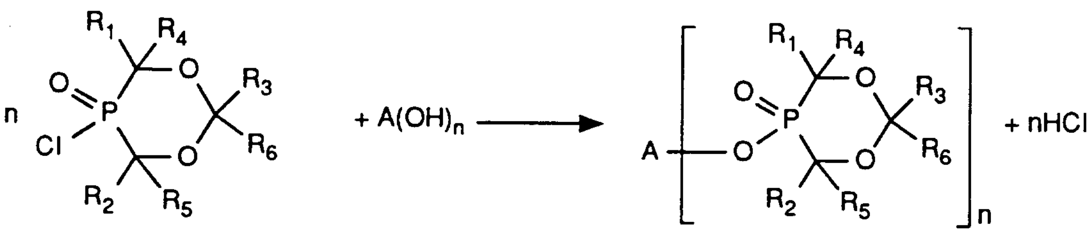


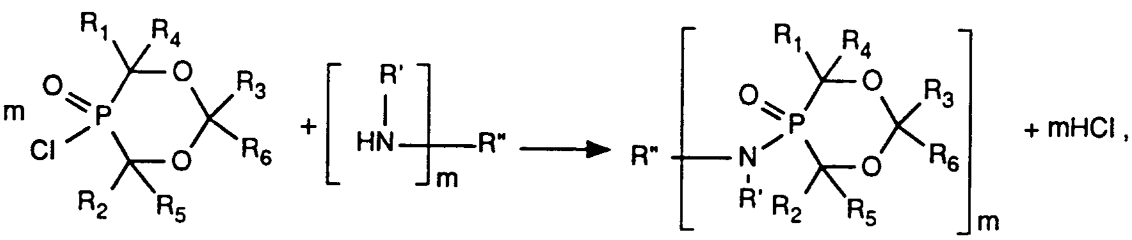


wobei die jeweiligen Substituenten $R_1$, $R_2$, $R_3$, $R_4$, $R_5$, $R_6$, X, A, R' und R" sowie die Symbole m und n die oben angegebene Bedeutung haben.

Die Umsetzungen erfolgen zweckmässig unter den gleichen Reaktionsbedingungen, wie sie in den obenerwähnten US-PS beschrieben sind.

Die freien symmetrischen Dioxaphosphorinansäuren sind allgemein z.B. durch einfaches Kochen des entsprechenden Aldehyds mit wässriger unterphosphoriger Säure in Toluol am Wasserabscheider zugänglich, nach dem Schema

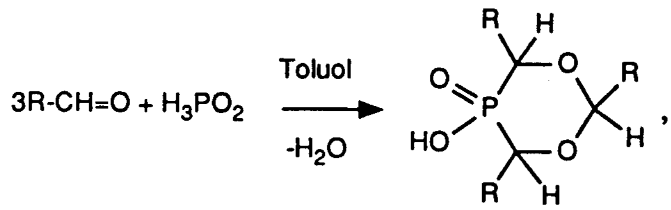


wobei R eine der für $R_1$, $R_2$, und $R_3$ angegebenen Bedeutung hat.

Die Herstellung der Salze der Dioxaphosphorinansäuren erfolgt zweckmässig durch Neutralisation der letzteren mit den entsprechenden Metallhydroxiden bzw. Aminen.

Die Herstellung der Ester, Amide und Hydrazide der Dioxaphosphorinansäuren kann durch die Umsetzung der entsprechenden leicht zugänglichen Säurechloride mit Alkoholen, Aminen oder Hydrazinen bewerkstelligt werden.

Einige der beschriebenen Herstellungsverfahren sind in den nachfolgenden Beispielen ausführlich erläutert.

Die für die oben beschriebenen Herstellungsverfahren benötigten Ausgangsverbindungen sind bekannt oder können in an sich bekannter Weise nach üblichen Methoden hergestellt werden.

Die nachfolgenden Beispiele erläutern die Erfindung. Soweit nichts anderes angegeben ist, bedeuten darin Prozentangaben Gewichtsprozent.

Beispiel 1: 372 g (5,0 Mol) Isobutyraldehyd und 220 g (1,667 Mol) unterphosphorige Säure werden unter Stickstoff in 500 ml Toluol am Wasserabscheider unter Rühren zum Rückfluss erwärmt. Nach 6 Stunden sind 139,45 g Wasser abgeschieden. Das Toluol wird bei 150 °C Oelbadtemperatur abdestilliert und der Rückstand wird in 1 l Acetonitril gelöst. Die so entstandene Lösung wird kurz zum Rückfluss erwärmt und anschliessend in einen breithalsigen 2 l-Erlenmeyer-Kolben gegossen. Zur Kristallisation wird der Erlenmeyer in Eis gestellt und sein Inhalt gut gerührt, bis seine Temperatur ~ 0 °C erreicht. Die ausgefallenen weissen Kristalle werden abgenutscht, mit 400 ml kaltem (0 °C) Acetonitril gewaschen und 15 Stunden bei 60 °C im Vakuumtrockenschrank getrocknet. Man erhält 375,75 (85,3 % d. Th.) der schneeweissen, gut rieselfähigen Verbindung 1 (Tabelle I) mit Schmelzpunkt 110-130 °C.

Beispiel 2: 18,43 g (0,1 Mol) Laurinaldehyd und 4,40 g (0,033 Mol) 50%iger wässriger $H_3PO_2$-Lösung werden in 100 ml Toluol unter Argon am Wasserabscheider gekocht. Nach 4 Stunden sind 2,7 ml Wasser abgeschieden. Das Toluol wird am Rotationsverdampfer abgedampft und der Rückstand wird in 150 ml Ethanol gelöst. Der nach Abkühlen auf 0 °C gebildete dicke Kristallbrei wird mit 100 ml Acetonitril verdünnt, abgenutscht und mit Acetonitril gewaschen. Eine nochmalige Kristallisation auf gleiche Art mit wenig Aktivkohle liefert 16 g (79,9 % d. Th.) der farblosen Verbindung 12 (Tabelle I) mit Schmelzpunkt 60-63 °C.

Beispiel 3: In 5 ml destilliertem Wasser werden 3,86 g (0,05 Mol) Calciumhydroxid suspendiert, dann werden 100 ml Ethanol und 26,43 g (0,1 Mol) der Verbindung 1 (Tabelle I) zugegeben. Das Gemisch wird gerührt, wobei fast alles in leicht exothermer Reaktion in die Lösung übergeht. Nach Stehen über Nacht wird das Reaktionsgemisch filtriert und anschliessend am Rotationsverdampfer vom Alkohol befreit. Der weisse feste Rückstand wird danach noch 3 Stunden bei 80 °C/0,1 mbar getrocknet. Es werden 26,84 g (95 % d. Th.) der Verbindung 16 (Tabelle I) erhalten; Schmelzpunkt >250 °C.

Beispiel 4: 13,2 g Verbindung 1 (Tabelle I) werden in 40 ml Methylenchlorid gelöst, mit 10 ml Thionylchlorid und 3 Tropfen Dimethylformamid versetzt und danach solange bei 50 °C gerührt, bis keine Gasentwicklung mehr stattfindet. Das Lösungsmittel wird dann im Vakuum abdestilliert und der Rückstand wird bei 80 °C/0,1 mbar während 30 Minuten getrocknet.

Anschliessend werden 40 ml Methylenchlorid zugegeben und danach 10,9 ml Butylamin zugetropft. Nach Stehen über Nacht wird das Reaktionsgemisch mit Wasser, verdünnter HCl und $NaHCO_3$ gewaschen und über $MgSO_4$ getrocknet. Das Lösungsmittel wird abgedampft, und der Rückstand wird aus Petrolether umkristallisiert. Es werden 10,2 g (55 % d. Th.) der weissen Verbindung 5 (Tabelle I) mit Schmelzpunkt 137-160 °C (Isomerengemisch) erhalten.

Alle in der nachfolgenden Tabelle I aufgeführten und noch nicht in den Beispielen 1 bis 4 erwähnten Dioxaphosphorinanverbindungen wurden nach den in den Beispielen 1-4 angegebenen Methoden aus den entsprechenden bekannten Ausgangsprodukten hergestellt.

Tabelle I

| Nr. | Verbindung | Smp. °C | Analyse | C | H | N | P |
|---|---|---|---|---|---|---|---|
| 1 | 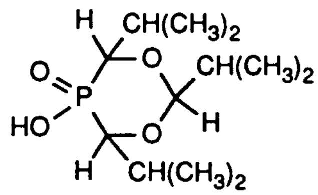 | 110-130 | ber. | 54,53 | 9,53 | — | * |
| | | | gef. | 54,45 | 9,52 | — | * |
| 2 | 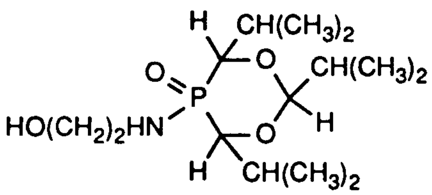 | 145-155 | ber. | 54,71 | 9,84 | 4,56 | * |
| | | | gef. | 54,46 | 9,75 | 4,42 | * |
| 3 | 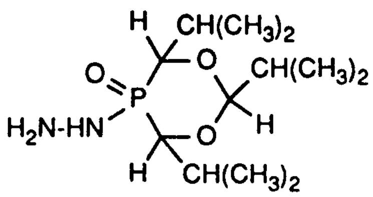 | 180-185 | ber. | 51,78 | 9,78 | 10,06 | * |
| | | | gef. | 51,66 | 9,62 | 9,93 | * |
| 4 | 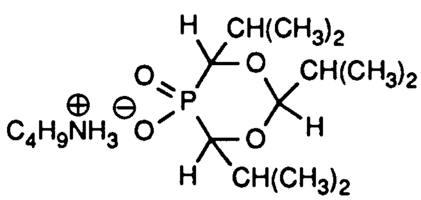 | 163-170 | ber. | 56,95 | 10,75 | 4,15 | * |
| | | | gef. | 56,91 | 10,76 | 4,06 | * |
| 5 | 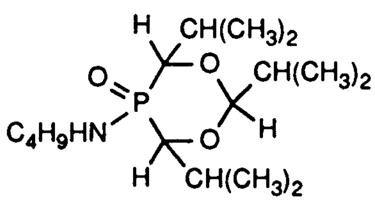 | 137-160 | ber. | 60,16 | 10,73 | 4,38 | * |
| | | | gef. | 60,15 | 10,67 | 4,40 | * |
| 6 | 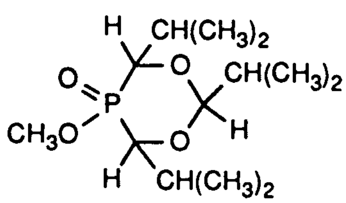 | 46-48 | Strukturbestätigung durch $^1$H-NMR | | | | |

*) nicht bestimmt

Tabelle I (Fortsetzung)

| Nr. | Verbindung | Smp. °C | Analyse | C | H | N | P |
|---|---|---|---|---|---|---|---|
| 7 | 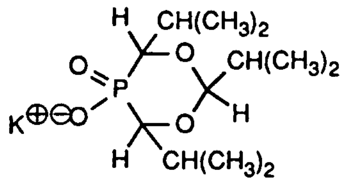 | > 300 | Strukturbestätigung durch $^{1}$H-NMR | | | | |
| 8 | 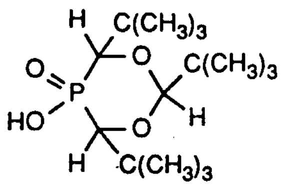 | 182-186 | ber. | 58,80 | 10,20 | — | * |
| | | | gef. | 58,65 | 10,10 | — | * |
| 9 | 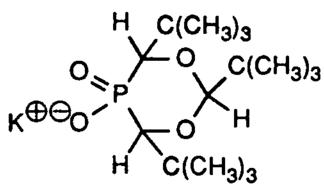 | >300°C | Strukturbestätigung durch $^{1}$H-NMR | | | | |
| 10 | 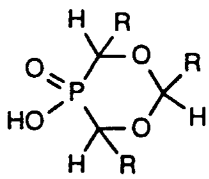 R = 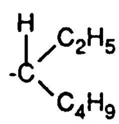 | Oel | Strukturbestätigung durch $^{1}$H-NMR | | | | |
| 11 | 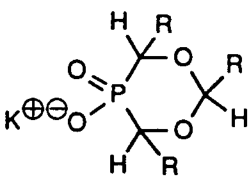 R = 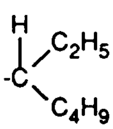 | Harz | Strukturbestätigung durch $^{1}$H-NMR | | | | |
| 12 | 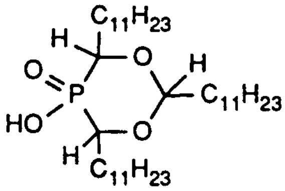 | 60-63 | ber. | 71,95 | 12,24 | — | 5,15 |
| | | | gef. | 71,96 | 12,22 | — | 5,19 |

*) nicht bestimmt

Tabelle I (Fortsetzung)

| Nr. | Verbindung | Smp. °C | Analyse | C | H | N | P |
|---|---|---|---|---|---|---|---|
| 13 | 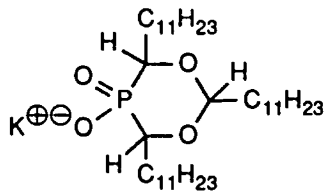 | 210-240 | Strukturbestätigung durch $^1$H-NMR | | | | |
| 14 | 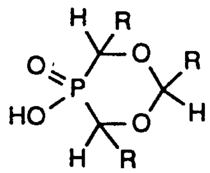<br>$R = -(CH_2)_2-S-C_{12}H_{25}$ | 70-75 | ber. | 65,64 | 11,14 | — | * |
| | | | gef. | 65,58 | 11,14 | — | * |
| 15 | 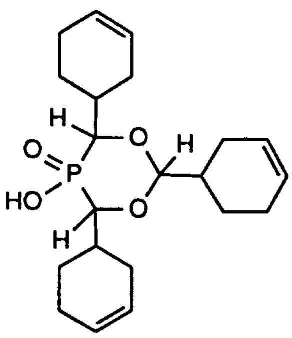 | 185-205 | ber. | 66,65 | 8,26 | — | * |
| | | | gef. | 66,65 | 8,15 | — | * |
| 16 | 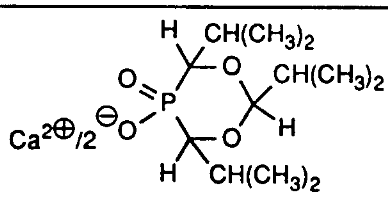 | >250° | ber. | 50,87 | 8,54 | — | * |
| | | | gef. | 50,93 | 8,56 | — | * |
| 17 | 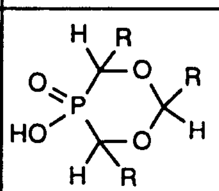<br>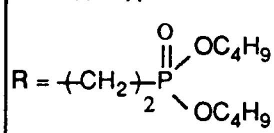 | Oel | Strukturbestätigung durch $^1$H-NMR | | | | |

*) nicht bestimmt

Tabelle I (Fortsetzung)

| Nr. | Verbindung | Smp. °C | Analyse | C | H | N | P |
|---|---|---|---|---|---|---|---|
| 18 | 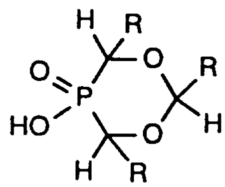 R = 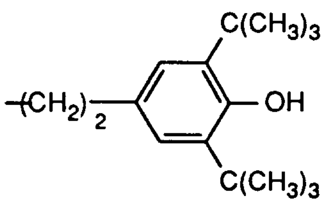 | 180-90° | ber. | 73,35 | 9,53 | — | * |
| | | | gef. | 73,20 | 9,54 | — | * |

*) nicht bestimmt

Die Verbindungen 8, 10, 14, 17 und 18 werden in Analogie zu Beispiel 1, die Verbindungen 4**), 7, 9, 11, 13 und 16 in Analogie zu Beispiel 3 und die Verbindungen 2, 3, 5 und 6***) in Analogie zu Beispiel 4 hergestellt.

**) Zugabe des Amins an Stelle des Hydroxids

***) Zugabe von $CH_3OH$ an Stelle von Amin.

Analog zu den Beispielen 3 und 4 werden die in Tabelle II angegebenen Verbindungen erhalten.

Tabelle II

| Nr. | Verbindung | Smp. °C | Analyse C | H | N |
|---|---|---|---|---|---|
| 19 | 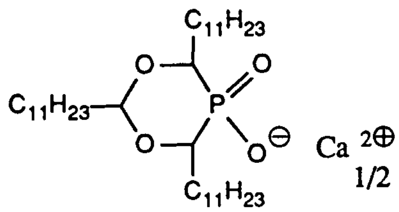 | Harz | Bestimmung von Ca:<br>Berechnet Ca: 3,23 %<br>Gefunden Ca: 3,22 % | | |
| 20 | 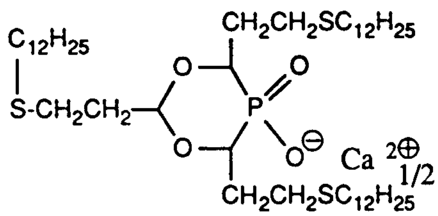 | Harz | Bestimmung von Ca:<br>Berechnet Ca: 2,38 %<br>Gefunden Ca: 2,37 % | | |
| 21 | 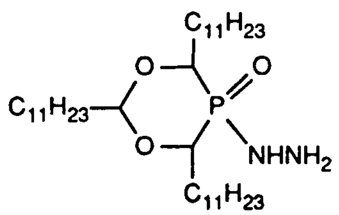 | 53-59 | ber. 70,31<br>gef. 70,24 | 12,29<br>12,11 | -<br>- |
| 22 | 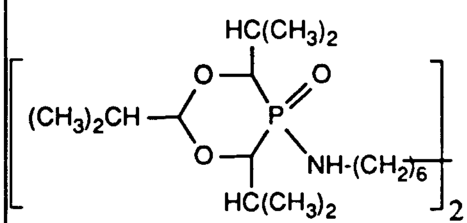 | 170-180 | ber. 62,40<br>gef. 62,47 | 10,76<br>10,76 | -<br>- |
| 23 | 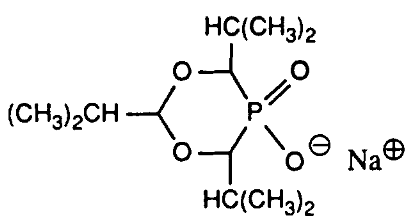 | >250°C | ber. 50,35<br>gef. 50,13 | 8,45<br>8,51 | -<br>- |

Tabelle II (Fortsetzung)

| Nr. | Verbindung | Smp. °C | Analyse | C | H | N |
|---|---|---|---|---|---|---|
| 24 | 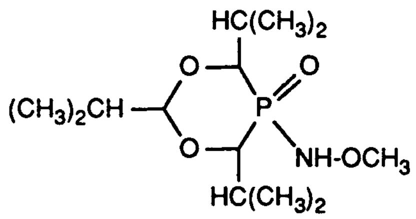 | 115-145 | ber.<br>gef. | 53,23<br>53,32 | 9,62<br>9,68 | 4,77<br>4,50 |
| 25 | 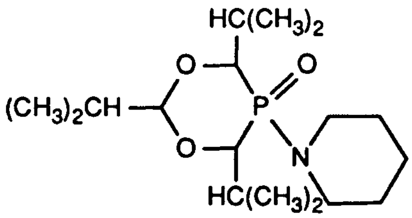 | Oel | ber.<br>gef. | 61,61<br>61,46 | 10,34<br>10,48 | 4,23<br>4,16 |
| 26 | 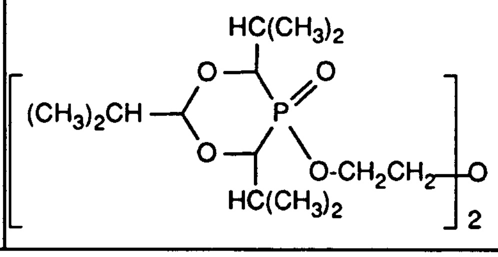 | Oel | ber.<br>gef. | 56,17<br>56,04 | 9,43<br>9,70 | -<br>- |

Die Verbindungen 19, 20 und 23 werden in Analogie zu Beispiel 3, die Verbindungen 21, 22, 24, 25 und 26*) in Analogie zu Beispiel 4 hergestellt.

Beispiel 5: Stabilisierung von SBS gegen Vernetzung während Brabenderalterung

0,4 % der Verbindung 1 (Tabelle I) werden in einem Brabendermischer einem thermoplastischen SBS-Elastomeren (®Finaprene 416) zugesetzt. Das so stabilisierte Muster weist während der Brabenderalterung bei 200 °C, 60 U/Min., eine Induktionszeit von 23 Minuten auf bis Vernetzung (Drehmomentanstieg) beobachtet wird. Ohne Zugabe von 1 findet die Vernetzung bereits nach 4 Minuten statt.

Beispiel 6: Stabilisierung von Polypropylen gegen Verfärbungen während der Verarbeitung

1,3 kg Polypropylenpulver werden mit 0,05 % Tris(2,4-di-tert.-butylphenyl)phospit, 0,05 % Tetrakis-[3,5-di-tert.butyl-4-hydroxyphenylpropionyloxymethyl]-methan, 0,05 % Ca-stearat und den in Tabelle III angegebenen Stabilisatoren vermischt. Diese Mischung wird in einem Extruder mit einem Zylinderdurchmesser von 20 mm und einer Länge von 400 mm bei 100 Umdrehungen pro Minute extrudiert, wobei 3 Heizzonen auf 260 °C, 270 °C und 280 °C eingestellt sind. Das Extrudat wird zur Kühlung durch ein Wasserbad gezogen und anschliessend granuliert. Das erhaltene Granulat wird 3 Mal extrudiert. Nach der 3. Extrusion wird aus dem Granulat eine 2 mm Pressplatte hergestellt, an der der Yellowness Index YI nach ASTM D-1925-70 gemessen wird. Niedrige YI-Werte bedeuten wenig Verfärbung, hohe YI-Werte stärkere Verfärbung der Platten. Resultate siehe Tabelle III.

*) Zugabe von Alkohol an Stelle von Amin

Tabelle III

Yellowness-Indices YI von PP-Pressplatten (2 mm) nach Mehrfachextrusion bei 280°C.
Polymer: ®Propathene HF20.
Basisstabilisierung:
0,05 % Tetrakis-[3,5-di-tert.butyl-4-hydroxyphenylpropionyloxymethyl]-methan
+ 0,05 % Ca-stearat
+ 0,05 % Tris(2,4-di-tert.-butylphenyl)phosphit

| Formulierung | YI nach 3. Extrusion |
|---|---|
| Basis | 4,2 |
| + 0,05 % Verbindung 1 aus Tabelle I | 2,8 |
| + 0,05 % Verbindung 16 aus Tabelle I | 2,7 |
| + 0,025 % Verbindung 3 aus Tabelle I | 1,9 |
| + 0,05 % Verbindung 15 aus Tabelle I | 2,5 |
| + 0,05 % Verbindung 5 aus Tabelle I | 1,9 |
| + 0,05 % Verbindung 23 aus Tabelle II | 2,1 |

Beispiel 7: Verwendung in Schmieröl

Test auf Verschleissschutz

Zur Prüfung auf Eignung als Verschleisschutzadditiv wird die ASTM-Standarmethode D-2783-81 unter Verwendung des Shell-Vierkugelapparates herangezogen. Als Basisöl wird ®Mobil BB der Firma Shell verwendet. Ermittelt werden

a) die Schweisslast WL (Weld Load) als die Last (in kg), bei der die 4 Kugeln innerhalb von 10 sec. zusammenschweissen, und

b) der mittlere Verschleiss-Narben-Durchmesser (Wear Scar Diameter) bei einer Last von 20 kg während 1 Std. (in mm).

| Verbindung (Tabelle I) | Zusatzmenge (Gew.%) | Weld Load (kg) | Wear Scar Diameter (mm) |
|---|---|---|---|
| -- | --- | 1300 | 0,82 |
| 10 | 0,25<br>1,0 | --<br>1600 | 0,37<br>0,31 |
| 12 | 0,25<br>1,0 | --<br>1600 | 0,33<br>0,33 |
| 14 | 0,25<br>1,0 | --<br>1600 | 0,37<br>0,41 |

## Patentansprüche

## Patentansprüche für folgende Vertragsstaaten : BE, DE, FR, GB, IT, NL

1. Zusammensetzung enthaltend ein organisches Polymer, ausgenommen Polymere auf Epoxidharzbasis, ein Schmierstoff, eine Metallbearbeitungsflüssigkeit oder eine Hydraulikflüssigkeit und mindestens eine Dioxaphosphorinanverbindung der Formeln

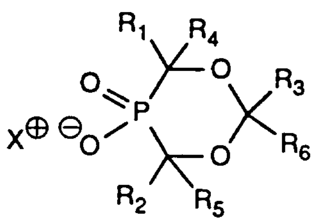

(I),

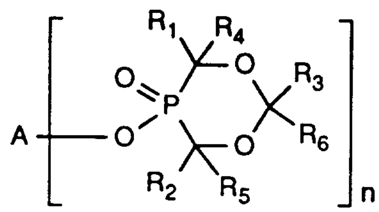

(II) oder/und

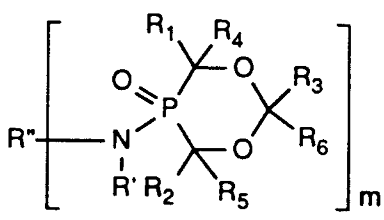

(III),

worin

$R_1$, $R_2$, $R_3$, $R_4$, $R_5$ und $R_6$ unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, Cyclohexenyl, unsubstituiertes oder durch $C_1$-$C_{18}$-Alkyl, Hydroxy, $C_1$-$C_{18}$-Alkoxy, $C_2$-$C_{18}$-Alkoxycarbonyl oder/und $C_1$-$C_{18}$-Alkylmercapto substituiertes Phenyl, eine Gruppe

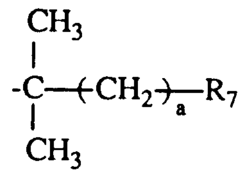 ,

worin a Null oder Eins ist und $R_7$ $-S-R_8$,

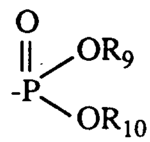 ,

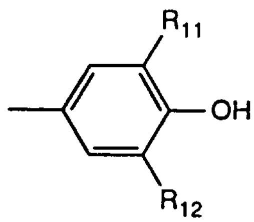 oder 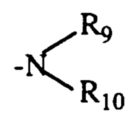 ist,

$R_8$ $C_1$-$C_{18}$-Alkyl, $C_2$-$C_{12}$-Alkenyl, Phenyl, Benzyl oder $-CH_2-COOR_{13}$,
$R_9$ und $R_{10}$ unabhängig voneinander Wasserstoff, $C_1$-$C_{18}$-Alkyl, $C_5$-$C_{12}$-Cycloalkyl oder Phenyl,
$R_{11}$ und $R_{12}$ unabhängig voneinander Wasserstoff, $C_1$-$C_4$-Alkyl, Cyclohexyl oder Phenyl,
$R_{13}$ Wasserstoff, $C_1$-$C_{18}$-Alkyl, $C_2$-$C_{12}$-Alkenyl, $C_5$-$C_{12}$-Cycloalkyl oder Benzyl bedeuten, oder

$R_1$, $R_2$, $R_3$, $R_4$, $R_5$ und $R_6$ unabhängig voneinander eine Gruppe $-COOR_{13}$,

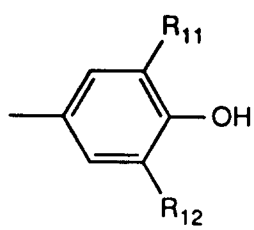 oder 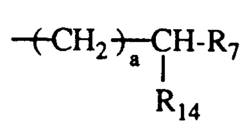

bedeuten, worin $R_7$, $R_{11}$, $R_{12}$, $R_{13}$ und a die oben angegebene Bedeutung haben und $R_{14}$, bei a = Null Wasserstoff, und bei a = 1 Wasserstoff, Methyl oder Phenyl ist,

$X^{\oplus}$ $H^{\oplus}$ oder eine Gruppe der Formeln

$$\frac{M^{r\oplus}}{r}$$

oder $N^{\oplus}(R_{15})$ $(R_{16})$ $(R_{17})$ $(R_{18})$ darstellt, wobei $M^{r\oplus}$ ein r-wertiges Metallkation, r die Zahlen 1, 2 oder 3, $R_{15}$, $R_{16}$, $R_{17}$, $R_{18}$ unabhängig voneinander Wasserstoff, $C_1$-$C_{18}$-Alkyl, $C_5$-$C_{12}$-Cycloalkyl, unsubstituiertes oder durch $C_1$-$C_{18}$-Alkyl substituiertes Phenyl bedeuten oder $R_{17}$ und $R_{18}$ zusammen mit dem N-Atom einen Pyrrolidin-, Imidazolidin-, Piperidin-, Piperazin- oder Morpholinrest, oder $R_{16}$, $R_{17}$ und $R_{18}$

zusammen mit dem N-Atom einen Pyridin-, Picolin-, Pyrazin-, Chinolin- oder Isochinolinrest bilden,

n die Zahlen 1, 2, 3 oder 4 bedeutet,

A, wenn n 1 ist, ununterbrochenes oder durch O, S oder NH unterbrochenes $C_1$-$C_{30}$-Alkyl, $C_2$-$C_{12}$-Alkenyl, unsubstituiertes oder durch $C_1$-$C_4$-Alkyl substituiertes $C_5$-$C_{12}$-Cycloalkyl, Benzyl, unsubstituiertes oder durch $C_1$-$C_{18}$-Alkyl substituiertes Phenyl, eine Gruppe

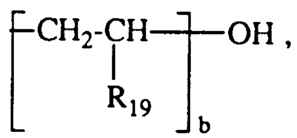

worin $R_{19}$ Wasserstoff oder Methyl ist und b eine Zahl von 1 bis 10 bedeutet, oder ein Rest

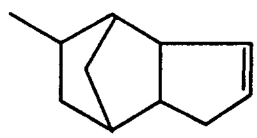

oder

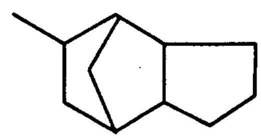

ist,
wenn n 2 ist,
$C_2$-$C_{18}$-Alkylen oder durch -O-, -NH- oder -S- unterbrochenes $C_2$-$C_{18}$-Alkylen,
wenn n 3 ist,
eine Gruppe

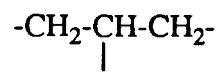

ist, und,
wenn n 4 ist,
eine Gruppe

$$C(CH_2)_4$$

bedeutet,

m die Zahlen 1 oder 2 bedeutet, wobei, wenn m 1 ist,

R' und R'' unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, unsubstituiertes oder durch $C_1$-$C_{18}$-Alkyl substituiertes Phenyl, Benzyl oder eine Gruppe

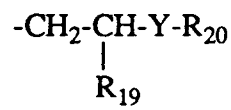

sind, worin Y -O- oder -NH- bedeutet, $R_{19}$ die oben angegebene Bedeutung hat und $R_{20}$ Wasserstoff, -CO-($C_1$-$C_{18}$-Alkyl) oder

$-CO\!-\!(C_2\text{-}C_{12}\text{-Alkenyl})$ ist, oder

R' — Wasserstoff und R'' $C_1$-$C_{12}$-Alkoxy, eine Gruppe

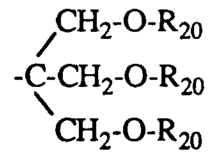

,

worin $R_{20}$ die oben angegebene Bedeutung hat, oder eine Gruppe

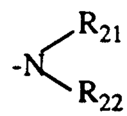

ist, worin $R_{21}$ und $R_{22}$ unabhängig voneinander Wasserstoff, $C_1$-$C_{18}$-Alkyl, $C_2$-$C_{12}$-Alkenyl, unsubstituiertes oder durch $C_1$-$C_{18}$-Alkyl substituiertes Phenyl, $-CO\!-\!(C_1\text{-}C_{18}\text{-Alkyl})$ oder $-CO\!-\!(C_2\text{-}C_{12}\text{-Alkenyl})$, Benzoyl oder zusammen eine Gruppe $=CH\text{-}R_{23}$ sind, worin $R_{23}$ Wasserstoff, $C_1$-$C_{18}$-Alkyl, $C_2$-$C_{12}$-Alkenyl, $C_5$-$C_{12}$-Cycloalkyl oder Phenyl ist, oder

R' und R'' — zusammen mit dem Stickstoffatom an das sie gebunden sind, einen Pyrrolidin-, Imidazolidin-, Piperidin-, Piperazin- oder Morpholinrest bilden, und, wenn m 2 ist,

R' — Wasserstoff und R'' $C_2$-$C_{18}$-Alkylen ist.

**2.** Zusammensetzung gemäss Anspruch 1, dadurch gekennzeichnet, dass in den Dioxaphosphorinanverbindungen der Formeln I, II und III $R_1$, $R_2$ und $R_3$ gleich sind und die in Anspruch 1 angegebene Bedeutung haben und $R_4$, $R_5$ und $R_6$ Wasserstoff bedeuten.

**3.** Zusammensetzung gemäss Anspruch 1, dadurch gekennzeichnet, dass in den Dioxaphosphorinanverbindungen der Formeln I, II und III $R_1$, $R_2$ und $R_3$ gleich sind und $C_1$-$C_{18}$-Alkyl, Cyclohexyl, Cyclohexenyl oder eine Gruppe

$$-(CH_2)_2-R_7$$

bedeuten, $R_7$ eine Gruppe $-S\!-\!(C_1\text{-}C_{18}\text{-Alkyl})$,

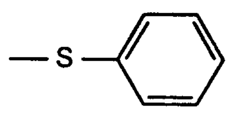

,

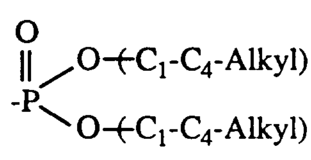

oder

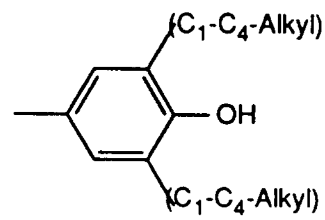

ist und $R_4$, $R_5$ und $R_6$ Wasserstoff sind.

**4.** Zusammensetzung gemäss Anspruch 2, dadurch gekennzeichnet, dass in den Dioxaphosphorinanverbindungen der Formeln I, II und III

$X^{\oplus}$ $H^{\oplus}$ oder eine Gruppe der Formeln

$$\frac{M^{r\oplus}}{r}$$

oder $N^{\oplus}(R_{15})(R_{16})(R_{17})(R_{18})$ darstellt, wobei $M^{r\oplus}$ ein ein- oder zweiwertiges Metallkation ist und $R_{15}$, $R_{16}$, $R_{17}$, $R_{18}$ unabhängig voneinander Wasserstoff, $C_1$-$C_{12}$-Alkyl oder Cyclohexyl bedeuten,

n die Zahlen 1 oder 2 bedeutet,

A, wenn n 1 ist,
$C_1$-$C_{18}$-Alkyl, Cyclohexyl, unsubstituiertes oder durch $C_1$-$C_4$-Alkyl substituiertes Phenyl oder Benzyl bedeutet,
wenn n 2 ist,
$C_2$-$C_{12}$-Alkylen oder durch -O- oder -S- unterbrochenes $C_2$-$C_{12}$-Alkylen bedeutet,

m die Zahlen 1 oder 2 bedeutet, wobei,
wenn m 1 ist,

R' und R'' unabhängig voneinander Wasserstoff, $C_1$-$C_{18}$-Alkyl, Cyclohexyl, Phenyl, Benzyl oder Hydroxy-$C_1$-$C_4$-alkyl sind, oder

R' Wasserstoff und R'' Amino, $C_1$-$C_6$-Alkylamino, $C_2$-$C_{12}$-Dialkylamino, $C_1$-$C_6$-Alkoxy oder eine Gruppe

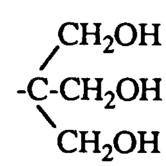

bedeutet,
oder R' unr R'' zusammen mit dem N-Atom den Piperidin-, Piperazin- oder Morpholinring bilden, und,
wenn m 2 ist,

R' Wasserstoff und R'' $C_2$-$C_{18}$-Alkylen ist.

**5.** Zusammensetzung gemäss Anspruch 1, dadurch gekennzeichnet, dass in den Dioxaphosphorinonverbindungen der Formeln I, II und III
$X^{\oplus}$ $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$, $Ni^{2\oplus}/2$, oder $^{\oplus}N(R_{15})(R_{16})(R_{17})(R_{18})$ ist und $R_{15}$, $R_{16}$, $R_{17}$ und $R_{18}$ unabhängig voneinander für Wasserstoff oder $C_1$-$C_6$-Alkyl stehen,
n die Zahlen 1 oder 2 bedeutet,
A, wenn n 1 ist, $C_1$-$C_{12}$-Alkyl,
wenn n 2 ist, $C_2$-$C_{12}$-Alkylen oder durch -O- unterbrochenes $C_2$-$C_{12}$-Alkylen,
m die Zahlen 1 oder 2 bedeutet, wobei, wenn m 1 ist,

R' und R" unabhängig voneinander Wasserstoff, $C_1$-$C_6$-Alkyl, Hydroxy-$C_2$-$C_4$-alkyl, oder R' Wasserstoff und R" Amino oder $C_1$-$C_4$-Alkoxy ist,
oder R' und R" zusammen mit dem N-Atom den Piperidin-, Piperazin- oder Morpholinorest bilden,
wenn m 2 ist, R' Wasserstoff und R" $C_2$-$C_{18}$-Alkylen bedeuten,
$R_1$, $R_2$ und $R_3$ gleich sind und $C_1$-$C_{12}$-Alkyl, Cyclohexenyl, oder eine Gruppe der Formel $-(CH_2)_2-R_7$ bedeuten, worin $R_7$ -S-$C_1$-$C_{14}$-Alkyl,

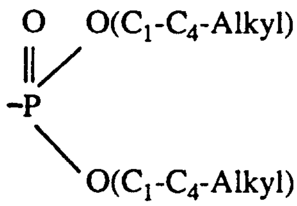

oder

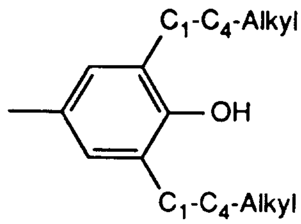

ist und $R_4$, $R_5$ und $R_6$ Wasserstoff bedeuten.

6. Zusammensetzung gemäss Anspruch 4, dadurch gekennzeichnet, dass in den Dioxaphosphorinanverbindungen der Formeln I, II und III $X^{\oplus}$ $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$ oder $Ni^{2\oplus}/2$, A $C_1$-$C_{18}$-Alkyl, Phenyl, Benzyl, $C_2$-$C_{12}$-Alkylen oder durch -O- oder -S- unterbrochenes $C_2$-$C_{12}$-Alkylen, R' und R" unabhängig voneinander Wasserstoff, $C_1$-$C_{12}$-Alkyl, Phenyl, Benzyl oder Hydroxy-$C_2$-$C_4$-alkyl oder R' Wasserstoff und R" $C_1$-$C_4$-Alkoxy, Amino oder $C_2$-$C_{18}$-Alkylen bedeuten, oder R' und R" zusammen mit dem N-Atom den Piperidin-, Piperazin- oder Morpholinorest bilden.

7. Zusammensetzung gemäss Anspruch 1 enthaltend ein organisches Polymer und mindestens eine Dioxaphosphorinanverbindung der Formeln I, II oder III.

8. Zusammensetzung gemäss Anspruch 7, worin das organische Polymer ein thermoplastischer Kunststoff, insbesondere ein Polyolefin, oder ein Elastomer ist.

9. Zusammensetzung gemäss Anspruch 1 enthaltend einen Schmierstoff, eine Metallbearbeitungsflüssigkeit oder eine Hydraulikflüssigkeit und mindestens eine Dioxaphosphorinanverbindung der Formeln I, II oder III.

10. Zusammensetzung gemäss Anspruch 1, die zusätzlich weitere Stabilisatoren, wie Antioxidantien, Lichtschutzmittel und Verarbeitungsstabilisatoren (Hitzestabilisatoren) enthält.

**11.** Dioxaphosphorinanverbindungen der Formeln I, II und III

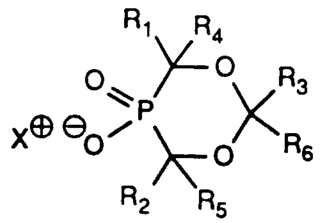

(I),

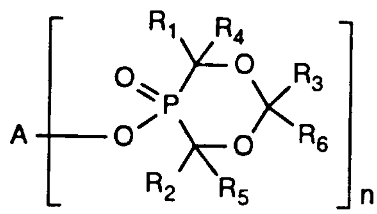

(II),

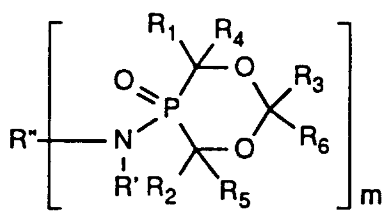

(III),

worin

$R_1$, $R_2$, $R_3$, $R_4$, $R_5$ und $R_6$ unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, Cyclohexenyl, unsubstituiertes oder durch $C_1$-$C_{18}$-Alkyl, Hydroxy, $C_1$-$C_{18}$-Alkoxy, $C_2$-$C_{18}$-Alkoxycarbonyl oder/und $C_1$-$C_{18}$-Alkylmercapto substituiertes Phenyl, eine Gruppe

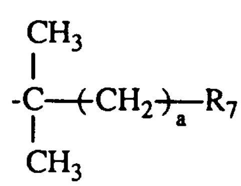 ,

worin a Null oder Eins ist und $R_7$ -S-$R_8$,

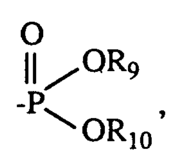

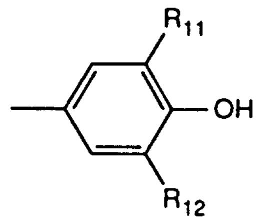 oder 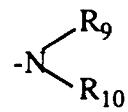

ist,

$R_8$ $C_1$-$C_{18}$-Alkyl, $C_2$-$C_{12}$-Alkenyl, Phenyl, Benzyl oder -$CH_2$-$COOR_{13}$,

$R_9$ und $R_{10}$ unabhängig voneinander Wasserstoff, $C_1$-$C_{18}$-Alkyl, $C_5$-$C_{12}$-Cycloalkyl oder Phenyl,

$R_{11}$ und $R_{12}$ unabhängig voneinander Wasserstoff, $C_1$-$C_4$-Alkyl, Cyclohexyl oder Phenyl,

$R_{13}$ Wasserstoff, $C_1$-$C_{18}$-Alkyl, $C_2$-$C_{12}$-Alkenyl, $C_5$-$C_{12}$-Cycloalkyl oder Benzyl bedeuten, oder

$R_1$, $R_2$, $R_3$, $R_4$, $R_5$ und $R_6$ unabhängig voneinander eine Gruppe -$COOR_{13}$,

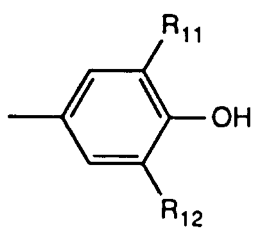 oder 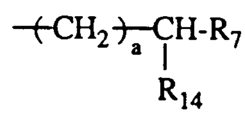

bedeuten, worin $R_7$, $R_{11}$, $R_{12}$, $R_{13}$ und a die oben angegebene Bedeutung haben und $R_{14}$, bei a = Null Wasserstoff, und bei a = 1 Wasserstoff, Methyl oder Phenyl ist,

mit der Bedingung, dass mindestens eines von $R_1$, $R_2$, $R_3$, $R_4$, $R_5$ und $R_6$ eine Gruppe

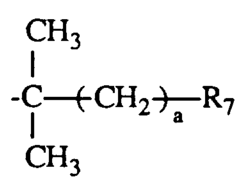 , 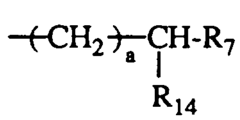 oder 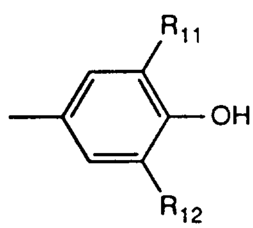

mit der oben angegebenen Bedeutung sein muss,

$X^{\oplus}$ $H^{\oplus}$ oder eine Gruppe der Formeln

$$\frac{M^{r\oplus}}{r}$$

oder $N^{\oplus}(R_{15})(R_{16})(R_{17})(R_{18})$ darstellt, wobei $M^{r\oplus}$ ein r-wertiges Metallkation, r die Zahlen 1, 2 oder 3, $R_{15}$, $R_{16}$, $R_{17}$, $R_{18}$ unabhängig voneinander Wasserstoff, $C_1$-$C_{18}$-Alkyl, $C_5$-$C_{12}$-Cycloalkyl, unsubstituiertes oder durch $C_1$-$C_{18}$-Alkyl substituiertes Phenyl bedeuten oder $R_{17}$ und $R_{18}$ zusammen mit dem N-Atom einen Pyrrolidin-, Imidazolidin-, Piperidin-, Piperazin- oder Morpholinrest, oder $R_{16}$, $R_{17}$ und $R_{18}$ zusammen mit dem N-Atom einen Pyridin-, Picolin-, Pyrazin-, Chinolin- oder Isochinolinrest bilden,

n die Zahlen 1, 2, 3 oder 4 bedeutet,

A, wenn n 1 ist,
ununterbrochenes oder durch O, S oder NH unterbrochenes $C_1$-$C_{30}$-Alkyl, $C_2$-$C_{12}$-Alkenyl, unsubstituiertes oder durch $C_1$-$C_4$-Alkyl substituiertes $C_5$-$C_{12}$-Cycloalkyl, Benzyl, unsubstituiertes oder durch $C_1$-$C_{18}$-Alkyl substituiertes Phenyl, eine Gruppe

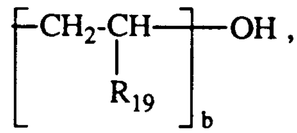

worin $R_{19}$ Wasserstoff oder Methyl ist und b eine Zahl von 1 bis 10 bedeutet, oder ein Rest

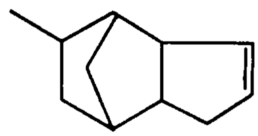
oder
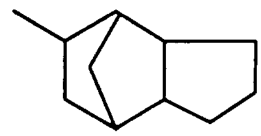

ist,
wenn n 2 ist,
$C_2$-$C_{18}$-Alkylen oder durch -O-, -NH oder -S- unterbrochenes $C_2$-$C_{18}$-Alkyl bedeutet,
wenn n 3 ist,
eine Gruppe

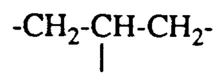

ist, und,
wenn n 4 ist,
eine Gruppe

$$C(CH_2)_4$$

bedeutet,

m die Zahlen 1 oder 2 bedeutet, wobei, wenn m 1 ist,

R' und R'' unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, unsubstituiertes oder durch $C_1$-$C_{18}$-Alkyl substituiertes Phenyl, Benzyl oder eine Gruppe

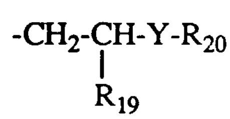

sind,
worin Y -O- oder -NH- bedeutet, $R_{19}$ die oben angegebene Bedeutung

hat und $R_{20}$ Wasserstoff, $-CO-(C_1-C_{18}$-Alkyl) oder $-CO-(C_2-C_{12}$-Alkenyl) ist, oder

R' Wasserstoff und R'' $C_1-C_{12}$-Alkoxy, eine Gruppe

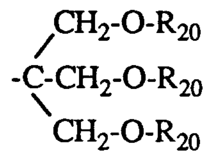 ,

worin $R_{20}$ die oben angegebene Bedeutung hat,
oder eine Gruppe

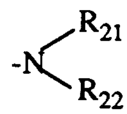

ist,
worin $R_{21}$ und $R_{22}$ unabhängig voneinander Wasserstoff, $C_1-C_{18}$-Alkyl, $C_2-C_{12}$-Alkenyl, unsubstituiertes oder durch $C_1-C_{18}$-Alkyl substituiertes Phenyl, $-CO-(C_1-C_{18}$-Alkyl) oder $-CO-(C_2-C_{12}$-Alkenyl) , Benzoyl oder zusammen eine Gruppe $=CH-R_{23}$ sind, worin $R_{23}$ Wasserstoff, $C_1-C_{18}$-Alkyl, $C_2-C_{12}$-Alkenyl, $C_5-C_{12}$-Cycloalkyl oder Phenyl ist, oder

R' und R'' zusammen mit dem Stickstoffatom an das sie gebunden sind einen Pyrrolidin-, Imidazolidin-, Piperidin-, Piperazin- oder Morpholinrest bilden,

und, wenn m 2 ist,

R' Wasserstoff und R'' $C_2-C_{18}$-Alkylen ist.

**12.** Dioxaphosphorinanverbindungen gemäss Anspruch 11 der Formeln

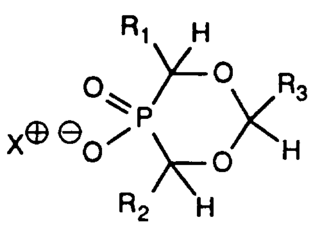

(IV),

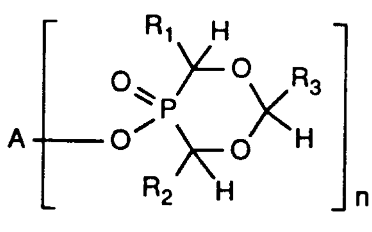

(V) und

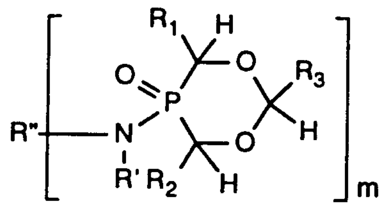

(VI),

worin

| | |
|---|---|
| $R_1$, $R_2$ und $R_3$ | gleich sind und die in Anspruch 11 angegebene Bedeutung haben, |
| $X^{\oplus}$ | $H^{\oplus}$ oder eine Gruppe der Formeln |

$$\frac{M^{r\oplus}}{r}$$

| | |
|---|---|
| | oder $N^{\oplus}(R_{15})(R_{16})(R_{17})(R_{18})$ darstellt, wobei $M^{r\oplus}$ ein ein- oder zweiwertiges Metallkation ist und $R_{15}$, $R_{16}$, $R_{17}$, $R_{18}$ unabhängig voneinander Wasserstoff, $C_1$-$C_{12}$-Alkyl oder Cyclohexyl bedeuten, |
| n | die Zahlen 1 oder 2 bedeutet, |
| A, | wenn n 1 ist, $C_1$-$C_{18}$-Alkyl, Cyclohexyl, unsubstituiertes oder durch $C_1$-$C_4$-Alkyl substituiertes Phenyl oder Benzyl bedeutet, wenn n 2 ist, $C_2$-$C_{12}$-Alkylen oder durch -O- unterbrochenes $C_2$-$C_{12}$-Alkylen |
| m | die Zahlen 1 oder 2 bedeutet, wobei, wenn m 1 ist, |
| R' und R'' | unabhängig voneinander Wasserstoff, $C_1$-$C_{18}$-Alkyl, Cyclohexyl, Phenyl, Benzyl oder Hydroxy-$C_2$-$C_4$-alkyl sind, oder |
| R' | Wasserstoff und R'' Amino, $C_1$-$C_6$-Alkoxy oder eine Gruppe |

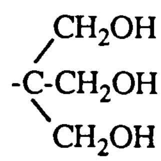

| | |
|---|---|
| | bedeutet, oder R' und R'' zusammen mit dem N-Atom den Piperidin-, Piperazin- oder Morpholinring bilden, und, wenn m 2 ist, |
| R' | Wasserstoff und R'' $C_2$-$C_{18}$-Alkylen ist. |

**13.** Dioxaphosphorinanverbindungen gemäss Anspruch 12 der Formeln IV, V und VI, worin $R_1$, $R_2$ und $R_3$ gleich sind und eine Gruppe

$$-(CH_2)_2-R_7$$

bedeuten, $R_7$ eine Gruppe $-S(C_1$-$C_{14}$-Alkyl) ,

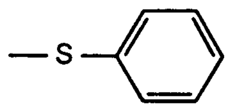 , 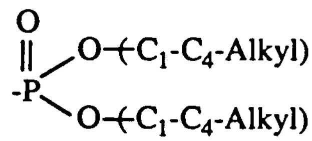 oder

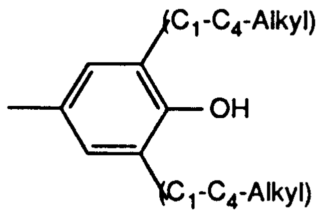

ist und $R_4$, $R_5$ und $R_6$ Wasserstoff sind, $X^{\oplus}$ $H^{\oplus}$, $Na^{\oplus}$, $K^{\oplus}$,$Ca^{2\oplus}/2$, $Mg^{2\oplus}/2$, $Zn^{2\oplus}/2$, $Cu^{2\oplus}/2$ oder $Ni^{2\oplus}/2$, n 1, A $C_1$-$C_{18}$-Alkyl, m 1, R' Wasserstoff und R'' $C_1$-$C_4$-Alkyl, $-CH_2-CH_2OH$ oder $-NH_2$ bedeuten.

**14.** Verwendung von Dioxaphosphorinanverbindungen der Formeln I, II und/oder III mit der in Anspruch 1 angegebenen Definition zum Stabilisieren von organischen Polymeren, Schmierstoffen, Metallbearbeitungsflüssigkeiten und Hydraulikflüssigkeiten gegen oxidativen, thermischen und/oder actinischen Abbau oder als Verschleissschutzmittel und Hochdruckadditive in Schmierstoffen.

**15.** Verfahren zum Stabilisieren von organischen Polymeren, Schmierstoffen, Metallbearbeitungsflüssigkeiten und Hydraulikflüssigkeiten gegen oxidativen, thermischen und/oder actinischen Abbau, dadurch gekennzeichnet, dass man diesen Materialien als Stabilisator mindestens eine Verbindung der Formeln I, II oder/und III zusetzt bzw. auf diese aufbringt.

**Patentansprüche für folgenden Vertragsstaat : ES**

**1.** Zusammensetzung enthaltend ein organisches Polymer, ausgenommen Polymere auf Epoxidharzbasis, ein Schmierstoff, eine Metallbearbeitungsflüssigkeit oder eine Hydraulikflüssigkeit und mindestens eine Dioxaphosphorinanverbindung der Formeln

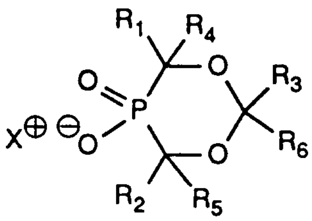

(I),

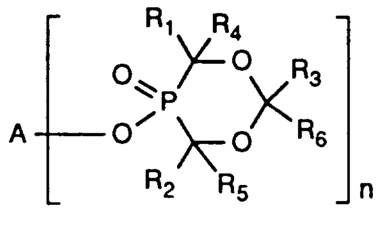

(II) oder/und

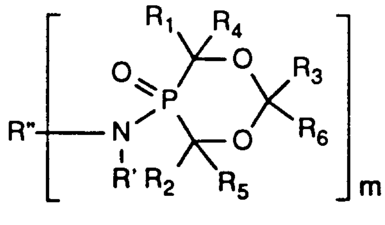

(III),

worin

$R_1$, $R_2$, $R_3$, $R_4$, $R_5$ und $R_6$ unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, Cyclohexenyl, unsubstituiertes oder durch $C_1$-$C_{18}$-Alkyl, Hydroxy, $C_1$-$C_{18}$-Alkoxy, $C_2$-$C_{18}$-Alkoxycarbonyl oder/und $C_1$-$C_{18}$-Alkylmercapto substituiertes Phenyl, eine Gruppe

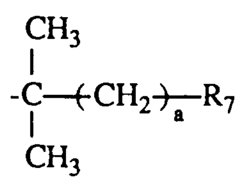

,

worin a Null oder Eins ist und $R_7$ -S-$R_8$,

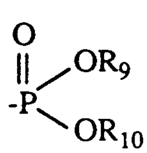

,

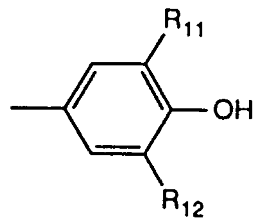

oder

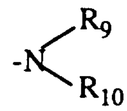

ist,

$R_8$ $C_1$-$C_{18}$-Alkyl, $C_2$-$C_{12}$-Alkenyl, Phenyl, Benzyl oder -$CH_2$-$COOR_{13}$,

$R_9$ und $R_{10}$ unabhängig voneinander Wasserstoff, $C_1$-$C_{18}$-Alkyl, $C_5$-$C_{12}$-Cycloalkyl oder Phenyl,

$R_{11}$ und $R_{12}$ unabhängig voneinander Wasserstoff, $C_1$-$C_4$-Alkyl, Cyclohexyl oder Phenyl,

$R_{13}$ Wasserstoff, $C_1$-$C_{18}$-Alkyl, $C_2$-$C_{12}$-Alkenyl, $C_5$-$C_{12}$-Cycloalkyl oder Benzyl bedeuten, oder

$R_1$, $R_2$, $R_3$, $R_4$, $R_5$ und $R_6$ unabhängig voneinander eine Gruppe -$COOR_{13}$,

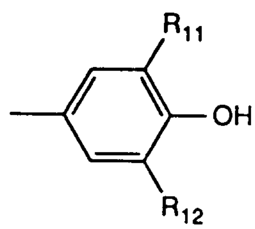

oder

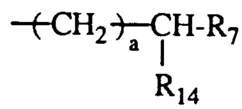

bedeuten, worin $R_7$, $R_{11}$, $R_{12}$, $R_{13}$ und a die oben angegebene Bedeutung haben und $R_{14}$, bei a = Null Wasserstoff, und bei a = 1 Wasserstoff, Methyl oder Phenyl ist,

$X^{\oplus}$ $H^{\oplus}$ oder eine Gruppe der Formeln

$$\frac{M^{r\oplus}}{r}$$

oder $N^{\oplus}(R_{15})$ $(R_{16})$ $(R_{17})$ $(R_{18})$ darstellt, wobei $M^{r\oplus}$ ein r-wertiges Metallkation, r die Zahlen 1, 2 oder 3, $R_{15}$, $R_{16}$, $R_{17}$, $R_{18}$ unabhängig voneinander Wasserstoff, $C_1$-$C_{18}$-Alkyl, $C_5$-$C_{12}$-Cycloalkyl, unsubstituiertes oder durch $C_1$-$C_{18}$-Alkyl substituiertes Phenyl bedeuten oder $R_{17}$ und $R_{18}$ zusammen mit dem N-Atom einen Pyrrolidin-, Imidazolidin-, Piperidin-, Piperazin- oder Morpholinrest, oder $R_{16}$, $R_{17}$ und $R_{18}$ zusammen mit dem N-Atom einen Pyridin-, Picolin-, Pyrazin-, Chinolin- oder Isochinolinrest bilden,

n die Zahlen 1, 2, 3 oder 4 bedeutet,

A, wenn n 1 ist,

ununterbrochenes oder durch O, S oder NH unterbrochenes $C_1$-$C_{30}$-Alkyl, $C_2$-$C_{12}$-Alkenyl, unsubstituiertes oder durch $C_1$-$C_4$-Alkyl substituiertes $C_5$-$C_{12}$-Cycloalkyl, Benzyl, unsubstituiertes oder durch $C_1$-$C_{18}$-Alkyl substituiertes Phenyl, eine Gruppe

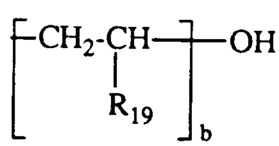

,

worin $R_{19}$ Wasserstoff oder Methyl ist und b eine Zahl von 1 bis 10 bedeutet, oder ein Rest

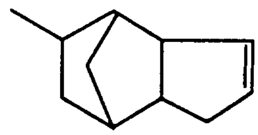
oder
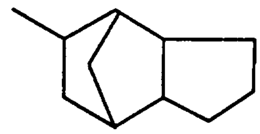

ist,
wenn n 2 ist,
$C_2$-$C_{18}$-Alkylen oder durch -O-, -NH- oder -S- unterbrochenes $C_2$-$C_{18}$-Alkylen, wenn n 3 ist,
eine Gruppe

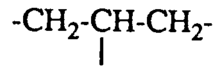

ist, und,
wenn n 4 ist,
eine Gruppe

$$C(CH_2-)_4$$

bedeutet,

m die Zahlen 1 oder 2 bedeutet, wobei,
wenn m 1 ist,

R' und R'' unabhängig voneinander Wasserstoff, ununterbrochenes oder durch O, S oder NH unterbrochenes $C_1$-$C_{18}$-Alkyl, $C_2$-$C_{12}$-Alkenyl, unsubstituiertes oder durch $C_1$-$C_4$-Alkyl substituiertes $C_5$-$C_{12}$-Cycloalkyl, unsubstituiertes oder durch $C_1$-$C_{18}$-Alkyl substituiertes Phenyl, Benzyl oder eine Gruppe

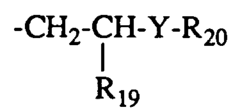

sind,
worin Y -O- oder -NH- bedeutet, $R_{19}$ die oben angegebene Bedeutung hat und $R_{20}$ Wasserstoff, -CO-($C_1$-$C_{18}$-Alkyl) oder -CO-($C_2$-$C_{12}$-Alkenyl) ist, oder

R' Wasserstoff und R'' $C_1$-$C_{12}$-Alkoxy, eine Gruppe

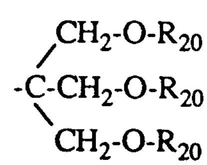
,

worin $R_{20}$ die oben angegebene Bedeutung hat,
oder eine Gruppe

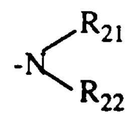

ist,
worin $R_{21}$ und $R_{22}$ unabhängig voneinander Wasserstoff, $C_1$-$C_{18}$-Alkyl, $C_2$-$C_{12}$-Alkenyl, unsubstituiertes oder durch $C_1$-$C_{18}$-Alkyl substituiertes Phenyl, -CO-($C_1$-$C_{18}$-Alkyl) oder -CO-($C_2$-$C_{12}$-Alkenyl), Benzoyl oder zusammen eine Gruppe $=CH-R_{23}$ sind, worin $R_{23}$ Wasserstoff, $C_1$-$C_{18}$-Alkyl, $C_2$-$C_{12}$-Alkenyl, $C_5$-$C_{12}$-Cycloalkyl oder Phenyl ist,
oder

R' und R'' zusammen mit dem Stickstoffatom an das sie gebunden sind, einen Pyrrolidin-, Imidazolidin-, Piperidin-, Piperazin- oder Morpholinrest bilden,
und, wenn m 2 ist,

R' Wasserstoff und R'' $C_2$-$C_{18}$-Alkylen ist.

2. Zusammensetzung gemäss Anspruch 1, dadurch gekennzeichnet, dass in den Dioxaphosphorinanverbindungen der Formeln I, II und III $R_1$, $R_2$ und $R_3$ gleich sind und die in Anspruch 1 angegebene Bedeutung haben und $R_4$, $R_5$ und $R_6$ Wasserstoff bedeuten.

3. Zusammensetzung gemäss Anspruch 1, dadurch gekennzeichnet, dass in den Dioxaphosphorinanverbindungen der Formeln I, II und III $R_1$, $R_2$ und $R_3$ gleich sind und $C_1$-$C_{18}$-Alkyl, Cyclohexyl, Cyclohexenyl oder eine Gruppe

$$-(CH_2)_2-R_7$$

bedeuten, $R_7$ eine Gruppe -S-($C_1$-$C_{18}$-Alkyl),

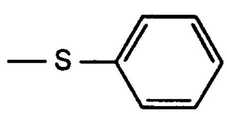 , 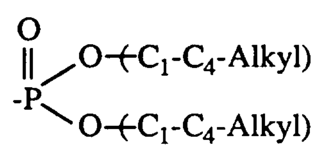 oder

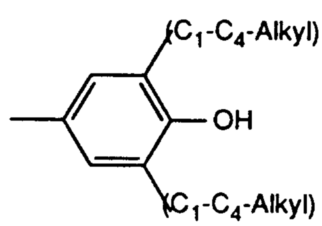

ist und $R_4$, $R_5$ und $R_6$ Wasserstoff sind.

4. Zusammensetzung gemäss Anspruch 2, dadurch gekennzeichnet, dass in den Dioxaphosphorinanverbindungen der Formeln I, II und III

$X^{\oplus}$ $H^{\oplus}$ oder eine Gruppe der Formeln

$$\frac{M^{r\oplus}}{r}$$

oder $N^{\oplus}(R_{15})(R_{16})(R_{17})(R_{18})$ darstellt, wobei $M^{r\oplus}$ ein ein- oder zweiwertiges Metallka-

tion ist und $R_{15}$, $R_{16}$, $R_{17}$, $R_{18}$ unabhängig voneinander Wasserstoff, $C_1$-$C_{12}$-Alkyl oder Cyclohexyl bedeuten,

n die Zahlen 1 oder 2 bedeutet,

A, wenn n 1 ist,
$C_1$-$C_{18}$-Alkyl, Cyclohexyl, unsubstituiertes oder durch $C_1$-$C_4$-Alkyl substituiertes Phenyl oder Benzyl bedeutet,
wenn n 2 ist,
$C_2$-$C_{12}$-Alkylen oder durch -O- oder -S- unterbrochenes $C_2$-$C_{12}$-Alkylen bedeutet,

m die Zahlen 1 oder 2 bedeutet, wobei, wenn m 1 ist,

R' und R'' unabhängig voneinander Wasserstoff, $C_1$-$C_{18}$-Alkyl, Cyclohexyl, Phenyl, Benzyl oder Hydroxy-$C_1$-$C_4$-alkyl sind, oder

R' Wasserstoff und R'' Amino, $C_1$-$C_6$-Alkylamino, $C_2$-$C_{12}$-Dialkylamino, $C_1$-$C_6$-Alkoxy oder eine Gruppe

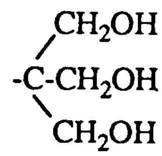

bedeutet,
oder R' unr R'' zusammen mit dem N-Atom den Piperidin-, Piperazin- oder Morpholinring bilden, und,
wenn m 2 ist,

R' Wasserstoff und R'' $C_2$-$C_{18}$-Alkylen ist.

**5.** Zusammensetzung gemäss Anspruch 1, dadurch gekennzeichnet, dass in den Dioxaphosphorinonverbindungen der Formeln I, II und III
$X^{\oplus}$ $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$, $Ni^{2\oplus}/2$, oder $^{\oplus}N(R_{15})(R_{16})(R_{17})(R_{18})$ ist und $R_{15}$, $R_{16}$, $R_{17}$ und $R_{18}$ unabhängig voneinander für Wasserstoff oder $C_1$-$C_6$-Alkyl stehen,
n die Zahlen 1 oder 2 bedeutet,
A, wenn n 1 ist, $C_1$-$C_{12}$-Alkyl,
wenn n 2 ist, $C_2$-$C_{12}$-Alkylen oder durch -O- unterbrochenes $C_2$-$C_{12}$-Alkylen,
m die Zahlen 1 oder 2 bedeutet, wobei, wenn m 1 ist,
R' und R'' unabhängig voneinander Wasserstoff, $C_1$-$C_6$-Alkyl, Hydroxy-$C_2$-$C_4$-alkyl, oder R' Wasserstoff und R'' Amino oder $C_1$-$C_4$-Alkoxy ist,
oder R' und R'' zusammen mit dem N-Atom den Piperidin-, Piperazin- oder Morpholinorest bilden,
wenn m 2 ist, R' Wasserstoff und R'' $C_2$-$C_{18}$-Alkylen bedeuten,
$R_1$, $R_2$ und $R_3$ gleich sind und $C_1$-$C_{12}$-Alkyl, Cyclohexenyl, oder eine Gruppe der Formel $-(CH_2)_2-R_7$ bedeuten, worin $R_7$ -S-$C_1$-$C_{14}$-Alkyl,

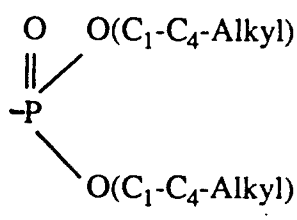

oder

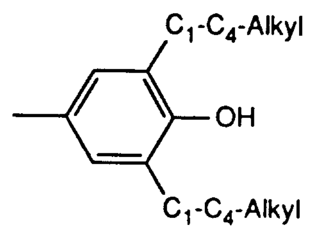

ist und $R_4$, $R_5$ und $R_6$ Wasserstoff bedeuten.

**6.** Zusammensetzung gemäss Anspruch 4, dadurch gekennzeichnet, dass in den Dioxaphosphorinanverbindungen der Formeln I, II und III $X^{\oplus}$ $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$ oder $Ni^{2\oplus}/2$, A $C_1$-$C_{18}$-Alkyl, Phenyl, Benzyl, $C_2$-$C_{12}$-Alkylen oder durch -O- oder -S- unterbrochenes $C_2$-$C_{12}$-Alkylen, R' und R'' unabhängig voneinander Wasserstoff, $C_1$-$C_{12}$-Alkyl, Phenyl, Benzyl oder Hydroxy-$C_2$-$C_4$-alkyl oder R' Wasserstoff und R'' $C_1$-$C_4$-Alkoxy, Amino oder $C_2$-$C_{18}$-Alkylen bedeuten, oder R' und R'' zusammen mit dem N-Atom den Piperidin-, Piperazin- oder Morpholinorest bilden.

**7.** Zusammensetzung gemäss Anspruch 1 enthaltend ein organisches Polymer und mindestens eine Dioxaphosphorinanverbindung der Formeln I, II oder III.

**8.** Zusammensetzung gemäss Anspruch 7, worin das organische Polymer ein thermoplastischer Kunststoff, insbesondere ein Polyolefin, oder ein Elastomer ist.

**9.** Zusammensetzung gemäss Anspruch 1 enthaltend einen Schmierstoff, eine Metallbearbeitungsflüssigkeit oder eine Hydraulikflüssigkeit und mindestens eine Dioxaphosphorinanverbindung der Formeln I, II oder III.

**10.** Zusammensetzung gemäss Anspruch 1, die zusätzlich weitere Stabilisatoren, wie Antioxidantien, Lichtschutzmittel und Verarbeitungsstabilisatoren (Hitzestabilisatoren) enthält.

**11.** Verfahren zum Stabilisieren von organischen Polymeren, Schmierstoffen, Metallbearbeitungsflüssigkeiten und Hydraulikflüssigkeiten gegen oxidativen, thermischen und/oder actinischen Abbau, dadurch gekennzeichnet, dass man diesen Materialien als Stabilisator mindestens eine Verbindung der Formeln I, II oder/und III zusetzt bzw. auf diese aufbringt.

**12.** Verfahren zur Verbesserung der Gebrauchseigenschaften von Schmierstoffen, dadurch gekennzeichnet, dass man diesen mindestens eine Verbindung der Formeln I, II oder/und III als Verschleissschutz- oder/und Hochdruckadditiv zusetzt.

**Claims**
**Claims for the following Contracting States : BE, DE, FR, GB, IT, NL**

**1.** A composition comprising an organic polymer, with the exception of polymers based on epoxy resin, a lubricant, a metal-working fluid or a hydraulic fluid and at least one dioxaphosphorinane compound of the formulae

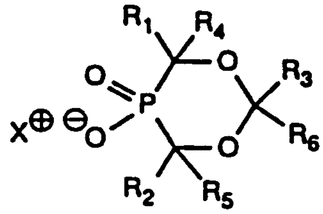

(I),

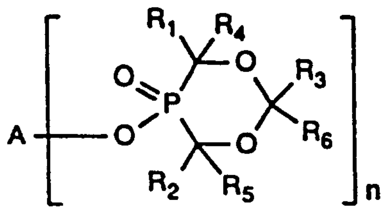

(II) or/and

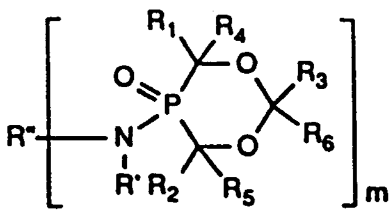

(III),

in which

$R_1$, $R_2$, $R_3$, $R_4$, $R_5$ and $R_6$, independently of one another, are hydrogen, $C_1$-$C_{18}$alkyl which is uninterrupted or interrupted by O, S or NH, $C_2$-$C_{12}$alkenyl, unsubstituted or $C_1$-$C_4$-alkyl-substituted $C_5$-$C_{12}$cycloalkyl, cyclohexenyl, phenyl which is unsubstituted or substituted with $C_1$-$C_{18}$alkyl, hydroxyl, $C_1$-$C_{18}$alkoxy, $C_2$-$C_{18}$alkoxycarbonyl or/and $C_1$-$C_{18}$alkylmercapto, or are a group

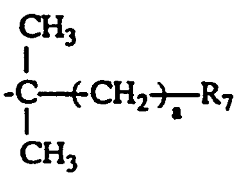 ,

in which a is zero or one and $R_7$ is -S-$R_8$,

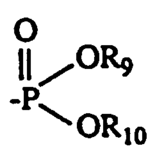 , 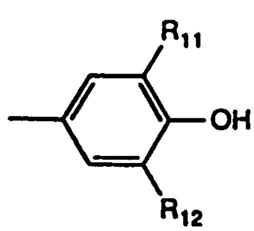 or 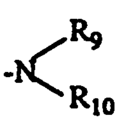 ,

$R_8$ is $C_1$-$C_{18}$alkyl,

$C_2$-$C_{12}$alkenyl, phenyl, benzyl or -$CH_2$-$COOR_{13}$, $R_9$ and $R_{10}$, independently of one another, are hydrogen, $C_1$-$C_{18}$alkyl, $C_5$-$C_{12}$cycloalkyl or phenyl, $R_{11}$ and $R_{12}$, independently of one another, are hydrogen, $C_1$-$C_4$alkyl, cyclohexyl or phenyl, $R_{13}$ is hydrogen, $C_1$-$C_{18}$alkyl, $C_2$-$C_{12}$alkenyl, $C_5$-$C_{12}$cycloalkyl or benzyl, or

$R_1$, $R_2$, $R_3$, $R_4$, $R_5$ and $R_6$, independently of one another, are a group -$COOR_{13}$,

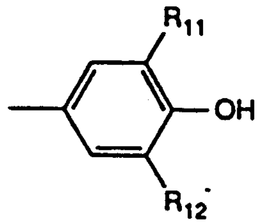 or 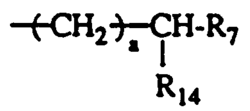 ,

in which $R_7$, $R_{11}$, $R_{12}$, $R_{13}$ and a have the abovementioned meaning and $R_{14}$ is hydrogen if a is zero and is hydrogen, methyl or phenyl if a is 1, $X^{\oplus}$ is $H^{\oplus}$ or a group of the formulae

$$\frac{M^{r\oplus}}{r}$$

or $N^{\oplus}(R_{15})(R_{16})(R_{17})(R_{18})$, in which $M^{r\oplus}$ is an r-valent metal cation,
R is the number 1, 2 or 3, $R_{15}$, $R_{16}$, $R_{17}$, $R_{18}$, independently of one another, are hydrogen, $C_1$-$C_{18}$alkyl, $C_5$-$C_{12}$cycloalkyl, unsubstituted or $C_1$-$C_{18}$alkyl-substituted phenyl or $R_{17}$ and $R_{18}$ together with the N atom form a pyrrolidine, imidazolidine, piperidine, piperazine or morpholine radical, or $R_{16}$, $R_{17}$ and $R_{18}$ together with the N atom form a pyridine, picoline, pyrazine, quinoline or isoquinoline radical,
n is the number 1, 2, 3 or 4,
if n is 1, A is $C_1$-$C_{30}$alkyl which is uninterrupted or interrupted by O, S or NH, $C_2$-$C_{12}$alkenyl, unsubstituted or $C_1$-$C_4$alkyl-substituted $C_5$-$C_{12}$cycloalkyl, benzyl, unsubstituted or $C_1$-$C_{18}$alkyl-substituted phenyl, a group

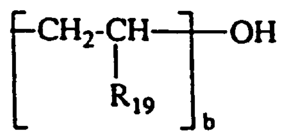 ,

in which $R_{19}$ is hydrogen or methyl and b is a number from 1 to 10, or a radical

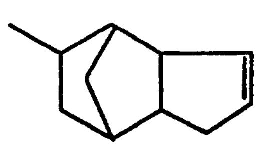 or 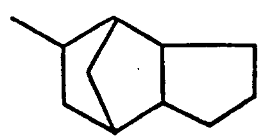 ,

if n is 2, A is $C_2$-$C_{18}$alkylene or $C_2$-$C_{18}$alkylene which is interrupted by -O-, -NH- or -S-, if n is 3, A is a group

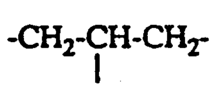

and if n is 4, A is a group

$$C(CH_2)_4 ,$$

m is the number 1 or 2, in which, if m is 1,
R' and R'', independently of one another, are hydrogen, $C_1$-$C_{18}$alkyl which is uninterrupted or interrupted by O, S or NH, $C_2$-$C_{12}$alkenyl, unsubstituted or $C_1$-$C_4$alkyl-substituted $C_5$-$C_{12}$cycloalkyl, unsubstituted or $C_1$-$C_{18}$alkyl-substituted phenyl, benzyl or a group

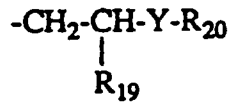,

in which Y is -O- or -NH-, $R_{19}$ has the abovementioned meaning and $R_{20}$ is hydrogen, $-CO-(C_1-C_{18}$-Alkyl) or $-CO-(C_2-C_{12}$-Alkenyl), or R' is hydrogen and R'' is $C_1-C_{12}$alkoxy, a group

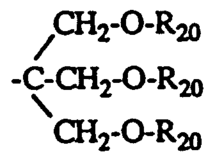,

in which $R_{20}$ is as defined above, or a group

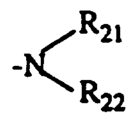,

in which $R_{21}$ and $R_{22}$, independently of one another, are hydrogen, $C_1-C_{18}$alkyl, $C_2-C_{12}$alkenyl, unsubstituted or $C_1-C_{18}$alkyl-substituted phenyl, $-CO-(C_1-C_{18}$-Alkyl) or $-CO-(C_2-C_{12}$-Alkenyl), benzoyl or together a group $=CH-R_{23}$, in which $R_{23}$ is hydrogen, $C_1-C_{18}$alkyl, $C_2-C_{12}$alkenyl, $C_5-C_{12}$cycloalkyl or phenyl, or R' and R'' together with the nitrogen atom to which they are bound form a pyrrolidine, imidazolidine, piperidine, piperazine or morpholine radical, and if m is 2, R' is hydrogen and R'' is $C_2-C_{18}$alkylene.

2. A composition as claimed in claim 1, wherein $R_1$, $R_2$ and $R_3$ in the dioxaphosphorinane compounds of the formulae I, II and III are identical and are as defined in claim 1 and $R_4$, $R_5$ and $R_6$ are hydrogen.

3. A composition as claimed in claim 1, wherein $R_1$, $R_2$ and $R_3$ in the dioxaphosphorinane compounds of the formulae I, II and III are identical and are $C_1-C_{18}$alkyl, cyclohexyl, cyclohexenyl or a group

$$-(CH_2)_2-R_7,$$

$R_7$ is a group $-S-(C_1-C_{18}$-Alkyl),

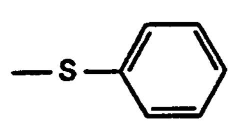, 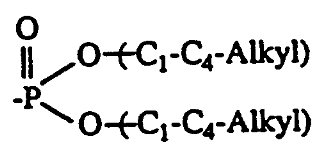

or 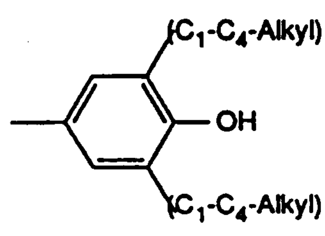

and $R_4$, $R_5$ and $R_6$ are hydrogen.

**4.** A composition as claimed in claim 2, wherein in the dioxaphosphorinane compounds of the formulae I, II and III $X^{\oplus}$ is $H^{\oplus}$ or a group of the formulae

$$\frac{M^{r\oplus}}{r}$$

or $N^{\oplus}(R_{15})(R_{16})(R_{17})(R_{18})$, in which $M^{r\oplus}$ is a mono- or divalent metal cation and $R_{15}$, $R_{16}$, $R_{17}$, $R_{18}$, independently of one another, are hydrogen, $C_1$-$C_{12}$alkyl or cyclohexyl,
n is the number 1 or 2,
if n is 1, A is $C_1$-$C_{18}$alkyl, cyclohexyl, unsubstituted or $C_1$-$C_4$alkyl-substituted phenyl or benzyl, if n is 2, A is $C_2$-$C_{12}$alkylene or $C_2$-$C_{12}$alkylene which is interrupted by -O- or -S-, m is the number 1 or 2, in which, if m is 1,
R' and R'' independently of one another are hydrogen, $C_1$-$C_{18}$alkyl, cyclohexyl, phenyl, benzyl or hydroxy-$C_1$-$C_4$alkyl, or R' is hydrogen and R'' is amino, $C_1$-$C_6$alkylamino, $C_2$-$C_{12}$dialkylamino, $C_1$-$C_6$alkoxy or a group

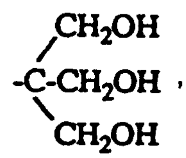

or R' and R'' together with the N atom form a piperidine, piperazine or morpholine ring and, if m is 2, R' is hydrogen and R'' is $C_2$-$C_{18}$alkylene.

**5.** A composition as claimed in claim 1, wherein in the dioxaphosphorinane compounds of the formulae I, II and III
$X^{\oplus}$ is $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$, $Ni^{2\oplus}/2$, or
$^{\oplus}N(R_{15})(R_{16})(R_{17})(R_{18})$ and $R_{15}$, $R_{16}$, $R_{17}$ and $R_{18}$, independently of one another, are hydrogen or $C_1$-$C_6$alkyl,
n is the number 1 or 2,
A is $C_1$-$C_{12}$alkyl, if n is 1, and $C_2$-$C_{12}$alkylene or $C_2$-$C_{12}$alkylene which is interrupted by -O-, if n is 2,
m is the number 1 or 2, in which, if m is 1,
R' and R'', independently of one another, are hydrogen, $C_1$-$C_6$alkyl, hydroxy-$C_2$-$C_4$alkyl, or R' is hydrogen and R'' is amino or $C_1$-$C_4$alkoxy, or R' and R'' together with the N atom form a piperidine, piperazine or morpholine radical, if m is 2, R' is hydrogen and R'' is $C_2$-$C_{18}$alkylene, $R_1$, $R_2$ and $R_3$ are identical and are $C_1$-$C_{12}$alkyl, cyclohexenyl or a group of the formula $-(CH_2)_2-R_7$, in which $R_7$ is $-S-C_1-C_{14}$alkyl,

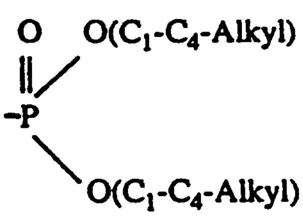

or

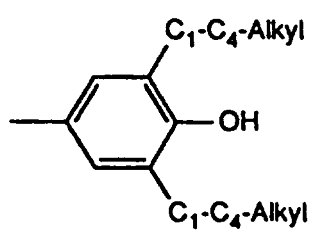

and $R_4$, $R_5$ and $R_6$ are hydrogen.

**6.** A composition as claimed in claim 4, wherein in the dioxaphosphorinane compounds of the formulae I, II and III $X^{\oplus}$ is $H^{\oplus}$, $Na^{\oplus}$,$K^{\oplus}$, $Ca^{2\oplus}/2$, $Mg^{2\oplus}/2$, $Zn^{2\oplus}/2$, $Cu^{2\oplus}/2$ or $Ni^{2\oplus}/2$, A is $C_1$-$C_{18}$alkyl, phenyl, benzyl, $C_2$-$C_{12}$alkylene or $C_2$-$C_{12}$alkylene which is interrupted by -O- or -S-, R' and R", independently of one another, are hydrogen, $C_1$-$C_{12}$alkyl, phenyl, benzyl or hydroxyl-$C_2$-$C_4$alkyl or R' is hydrogen and R" is $C_1$-$C_4$alkoxy, amino or $C_2$-$C_{18}$alkylene, or R' and R" together with the N atom form a piperidine, piperazine or morpholine radical.

**7.** A composition as claimed in claim 1, comprising an organic polymer and at least one dioxaphosphorinane compound of the formulae I, II or III.

**8.** A composition as claimed in claim 7, in which the organic polymer is a thermoplastic, in particular a polyolefin, or an elastomer.

**9.** A composition as claimed in claim 1, comprising a lubricant, a metal-working fluid or a hydraulic fluid and at least one dioxaphosphorinane compound of the formulae I, II or III.

**10.** A composition as claimed in claim 1, additionally comprising further stabilisers, such as antioxidants, light stabilisers and processing stabilisers (heat stabilisers).

**11.** A dioxaphosphorinane compound of the formula I, II or III

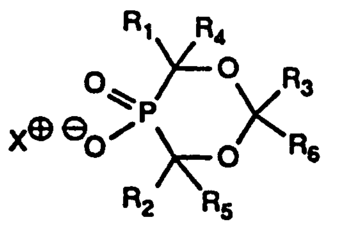

(I),

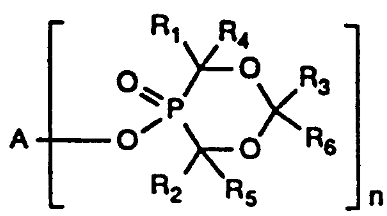

(II),

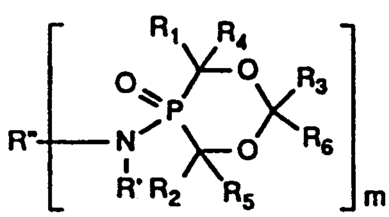

(III),

in which

$R_1$, $R_2$, $R_3$, $R_4$, $R_5$ and $R_6$, independently of one another, are hydrogen, $C_1$-$C_{18}$alkyl which is uninterrupted or interrupted by O, S or NH, $C_2$-$C_{12}$alkenyl, unsubstituted or $C_1$-$C_4$alkyl-substituted $C_5$-$C_{12}$cycloalkyl, cyclohexenyl, phenyl which is unsubstituted or substituted with $C_1$-$C_{18}$alkyl, hydroxyl, $C_1$-$C_{18}$alkoxy, $C_2$-$C_{18}$alkoxycarbonyl or/and $C_1$-$C_{18}$alkylmercapto, or are a group

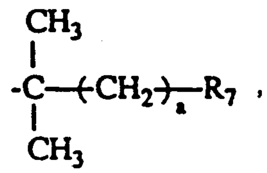

in which a is zero or one and $R_7$ is $-S-R_8$,

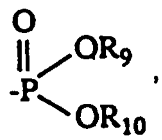

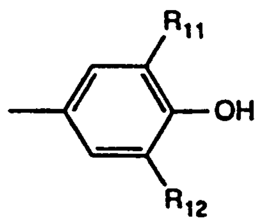

or

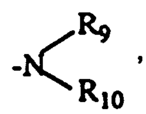

$R_8$ is $C_1$-$C_{18}$alkyl, $C_2$-$C_{12}$alkenyl, phenyl, benzyl or $-CH_2-COOR_{13}$, $R_9$ and $R_{10}$, independently of one another, are hydrogen, $C_1$-$C_{18}$alkyl, $C_5$-$C_{12}$cycloalkyl or phenyl, $R_{11}$ and $R_{12}$, independently of one another, are hydrogen, $C_1$-$C_4$alkyl, cyclohexyl or phenyl, $R_{13}$ is hydrogen, $C_1$-$C_{18}$alkyl, $C_2$-$C_{12}$alkenyl, $C_5$-$C_{12}$cycloalkyl or benzyl, or
$R_1$, $R_2$, $R_3$, $R_4$, $R_5$ and $R_6$, independently of one another, are a group $-COOR_{13}$,

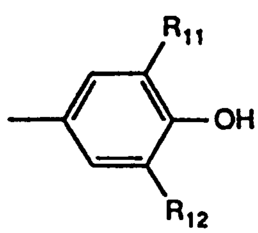

or

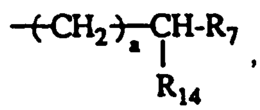

in which $R_7$, $R_{11}$, $R_{12}$, $R_{13}$ and a have the abovementioned meaning and $R_{14}$ is hydrogen if a is zero and is hydrogen, methyl or phenyl if a is 1,
on the condition that at least one of $R_1$, $R_2$, $R_3$, $R_4$, $R_5$ and $R_6$ must be a group

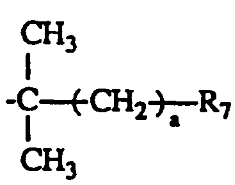

,

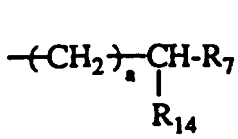

or

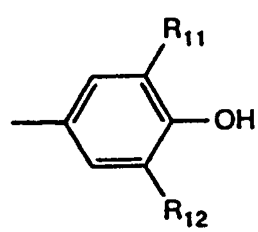

as defined above,
$X^{\oplus}$ is $H^{\oplus}$ or a group of the formulae

$$\frac{M^{r\oplus}}{r}$$

or $N^{\oplus}(R_{15})(R_{16})(R_{17})(R_{18})$, in which $M^{r\oplus}$ is an r-valent metal cation, r is the number 1, 2 or 3, $R_{15}$, $R_{16}$, $R_{17}$, $R_{18}$, independently or one another, are hydrogen, $C_1$-$C_{18}$alkyl, $C_5$-$C_{12}$cycloalkyl, unsubstituted or $C_1$-$C_{18}$alkyl-substituted phenyl or $R_{17}$ and $R_{18}$ together with the N atom form a pyrrolidine, imidazolidine, piperidine, piperazine or morpholine radical, or $R_{16}$, $R_{17}$ and $R_{18}$ together with the N atom form a pyridine, picoline, pyrazine, quinoline or isoquinoline radical,
n is the number 1, 2, 3 or 4,
if n is 1, A is $C_1$-$C_{30}$alkyl which is uninterrupted or interrupted by O, S or NH, $C_2$-$C_{12}$alkenyl, unsubstituted or $C_1$-$C_4$alkyl-substituted $C_5$-$C_{12}$cycloalkyl, benzyl, unsubstituted or $C_1$-$C_{18}$alkyl-substituted phenyl, a group

$$\left[-CH_2-\underset{\displaystyle R_{19}}{\underset{|}{CH}}-\right]_b-OH,$$

in which $R_{19}$ is hydrogen or methyl and b is a number from 1 to 10, or a radical

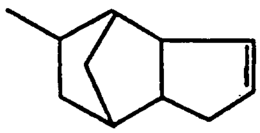 or 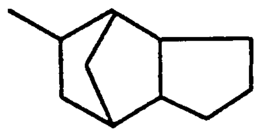 ,

if n is 2, A is $C_2$-$C_{18}$alkylene or $C_2$-$C_{18}$alkylene which is interrupted by -O-, -NH- or -S-, if n is 3, A is a group

$$-CH_2-\underset{|}{CH}-CH_2- ,$$

and, if n is 4, A is a group

$$C(CH_2)_4 ,$$

m is the number 1 or 2, in which, if m is 1,
R' and R'', independently of one another, are hydrogen, $C_1$-$C_{18}$alkyl which is uninterrupted or interrupted by O, S or NH, $C_2$-$C_{12}$alkenyl, unsubstituted or $C_1$-$C_4$alkyl-substituted $C_5$-$C_{12}$cycloalkyl, unsubstituted or $C_1$-$C_{18}$alkyl-substituted phenyl, benzyl or a group

$$-CH_2-\underset{\displaystyle R_{19}}{\underset{|}{CH}}-Y-R_{20} ,$$

in which Y is -O- or -NH-, $R_{19}$ has the abovementioned meaning and $R_{20}$ is hydrogen, -CO($C_1$-$C_{18}$alkyl) or -CO($C_2$-$C_{12}$alkenyl) , or R' is hydrogen and R'' is $C_1$-$C_{12}$alkoxy, a group

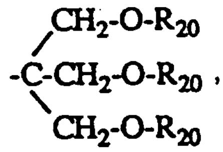

in which $R_{20}$ is as defined above, or a group

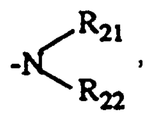

in which $R_{21}$ and $R_{22}$, independently of one another, are hydrogen, $C_1$-$C_{18}$alkyl, $C_2$-$C_{12}$alkenyl, unsubstituted or $C_1$-$C_{18}$alkyl-substituted phenyl, -CO-(-$C_1$-$C_{18}$alkyl) or -CO-(-$C_2$-$C_{12}$alkenyl), benzoyl or together a group =CH-$R_{23}$, in which $R_{23}$ is hydrogen, $C_1$-$C_{18}$alkyl, $C_2$-$C_{12}$alkenyl, $C_5$-$C_{12}$cycloalkyl or phenyl, or R' and R'' together with the nitrogen atom to which they are bound form a pyrrolidine, imidazolidine, piperidine, piperazine or morpholine radical, and if m is 2, R' is hydrogen and R'' is $C_2$-$C_{18}$alkylene.

**12.** A dioxaphosphorinane compound as claimed in claim 11 of the formula

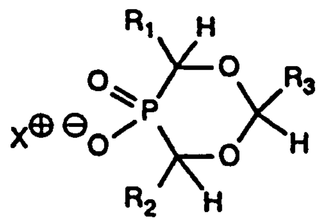

(IV),

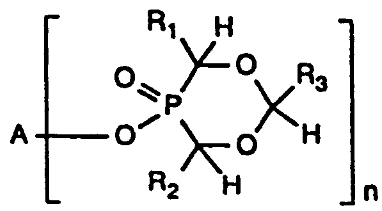

(V) and

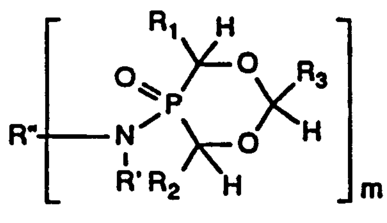

(VI),

in which
$R_1$, $R_2$ and $R_3$ are identical and are as defined in claim 11,
$X^{\oplus}$ is $H^{\oplus}$ or a group or the formulae

$$\frac{M^{r\oplus}}{r}$$

or $N^{\oplus}(R_{15})(R_{16})(R_{17})(R_{18})$, in which $M^{r\oplus}$ is a mono- or divalent metal cation and $R_{15}$, $R_{16}$, $R_{17}$, $R_{18}$, independently of one another, are hydrogen, $C_1$-$C_{12}$alkyl or cyclohexyl, n is the number 1 or 2, if n is 1, A is $C_1$-$C_8$alkyl, cyclohexyl, unsubstituted or $C_1$-$C_4$alkyl-substituted phenyl or benzyl, if n is 2, A is $C_2$-$C_{12}$alkylene or $C_2$-$C_{12}$alkylene which is interrupted by -O-, m is the number 1 or 2, in which, if m is 1, R' and R" independently of one another, are hydrogen, $C_1$-$C_{18}$alkyl, cyclohexyl, phenyl, benzyl or hydroxy-$C_2$-$C_4$alkyl, or R' is hydrogen and R" is amino, $C_1$-$C_6$alkoxy or a group

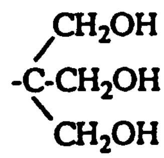 ,

or R' and R" together with the N atom form a piperidine, piperazine or morpholine ring and, if m is 2, R' is hydrogen and R" is $C_2$-$C_{18}$alkylene.

**13.** A dioxaphosphorinane compound as claimed in claim 12 of the formula IV, V or VI, in which $R_1$, $R_2$ and $R_3$ are identical and are a group

$$-(CH_2)_2-R_7 ,$$

$R_7$ is a group
-S-($C_1$-$C_{14}$-Alkyl),

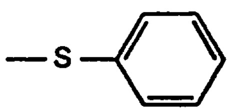 , 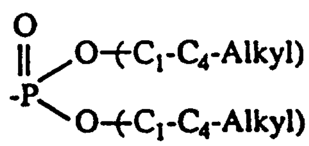 or

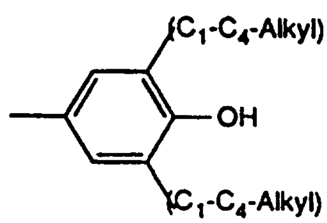

and $R_4$, $R_5$ and $R_6$ are hydrogen, $X^{\oplus}$ is $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$ or $Ni^{2\oplus}/2$, n is 1, A is $C_1$-$C_{18}$alkyl, m is 1, R' is hydrogen and R" is $C_1$-$C_4$alkyl, $-CH_2-CH_2OH$ or $-NH_2$.

**14.** Use of dioxaphosphorinane compounds of the formulae I, II and/or III as defined in claim 1 for stabilising organic polymers, lubricants, metal-working fluids and hydraulic fluids against oxidative, thermal and/or actinic degradation and as wear-resistant agents and high-pressure additives in lubricants.

**15.** A process for stabilising organic polymers, lubricants, metal-working fluids and hydraulic fluids against oxidative, thermal and/or actinic degradation, which comprises adding at least one compound of the formula I, II and/or III to these materials or applying it thereto as stabiliser.

**Claims for the following Contracting State : ES**

1. A composition comprising an organic polymer, with the exception of polymers based on epoxy resin, a lubricant, a metal-working fluid or a hydraulic fluid and at least one dioxaphosphorinane compound of the formulae

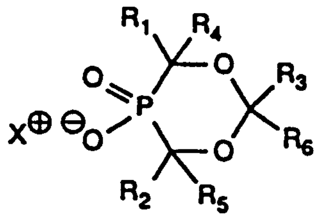

(I),

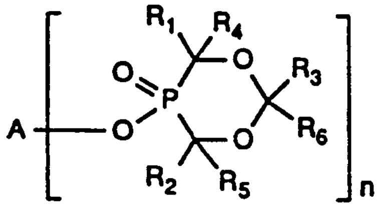

(II) or/and

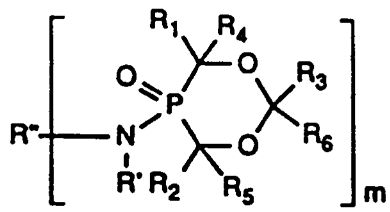

(III),

in which
$R_1$, $R_2$, $R_3$, $R_4$, $R_5$ and $R_6$, independently of one another, are hydrogen, $C_1$-$C_{18}$alkyl which is uninterrupted or interrupted by O,S or NH, $C_2$-$C_{12}$alkenyl, unsubstituted or $C_1$-$C_4$-alkyl-substituted $C_5$-$C_{12}$cycloalkyl, cyclohexenyl, phenyl which is unsubstituted or substituted with $C_1$-$C_{18}$alkyl, hydroxyl, $C_1$-$C_{18}$alkoxy, $C_2$-$C_{18}$alkoxycarbonyl or/and $C_1$-$C_{18}$alkylmercapto, or are a group

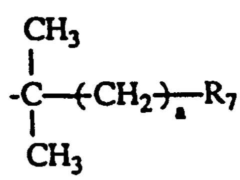

,

in which a is zero or one and $R_7$ is -S-$R_8$,

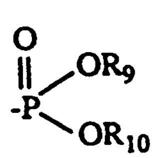

,

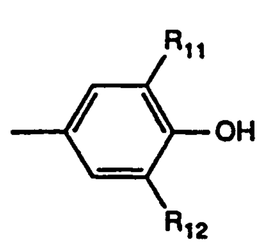

or

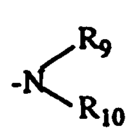

,

$R_8$ is $C_1$-$C_{18}$alkyl, $C_2$-$C_{12}$alkenyl, phenyl, benzyl or -$CH_2$-$COOR_{13}$, $R_9$ and $R_{10}$, independently of one another, are hydrogen, $C_1$-$C_{18}$alkyl, $C_5$-$C_{12}$cycloalkyl or phenyl, $R_{11}$ and $R_{12}$, independently of one another, are hydrogen, $C_1$-$C_4$alkyl, cyclohexyl or phenyl, $R_{13}$ is hydrogen, $C_1$-$C_{18}$alkyl, $C_2$-$C_{12}$alkenyl, $C_5$-$C_{12}$cycloalkyl or benzyl, or

$R_1$, $R_2$, $R_3$, $R_4$, $R_5$ and $R_6$, independently of one another, are a group -$COOR_{13}$,

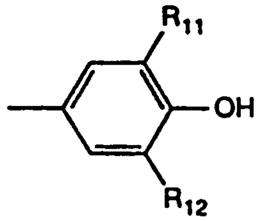

or

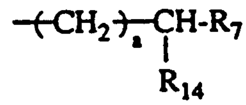

,

in which $R_7$, $R_{11}$, $R_{12}$, $R_{13}$ and a have the abovementioned meaning and $R_{14}$ is hydrogen if a is zero and is hydrogen, methyl or phenyl if a is 1, $X^{\oplus}$ is $H^{\oplus}$ or a group of the formulae

$$\frac{M^{r\oplus}}{r}$$

or $N^{\oplus}(R_{15})(R_{16})(R_{17})(R_{18})$, in which $M^{r\oplus}$ is an r-valent metal cation, R is the number 1, 2 or 3, $R_{15}$, $R_{16}$, $R_{17}$, $R_{18}$, independently of one another, are hydrogen, $C_1$-$C_{18}$alkyl, $C_5$-$C_{12}$cycloalkyl, unsubstituted or $C_1$-$C_{18}$alkyl-substituted phenyl or $R_{17}$ and $R_{18}$ together with the N atom form a pyrrolidine, imidazolidine, piperidine, piperazine or morpholine radical, or $R_{16}$, $R_{17}$ and $R_{18}$ together with the N atom form a pyridine, picoline, pyrazine, quinoline or isoquinoline radical,

n is the number 1, 2, 3 or 4,

if n is 1, A is $C_1$-$C_{30}$alkyl which is uninterrupted or interrupted by O, S or NH, $C_2$-$C_{12}$alkenyl, unsubstituted or $C_1$-$C_4$alkyl-substituted $C_5$-$C_{12}$cycloalkyl, benzyl, unsubstituted or $C_1$-$C_{18}$alkyl-substituted phenyl, a group

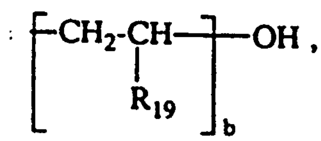

,

in which $R_{19}$ is hydrogen
or methyl and b is a number from 1 to 10, or a radical

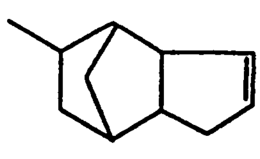

or

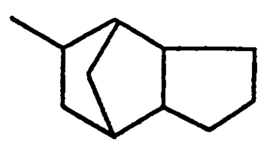

,

if n is 2, A is $C_2$-$C_{18}$alkylene or $C_2$-$C_{18}$alkylene which is interrupted by -O-, -NH- or -S-, if n is 3, A is a group

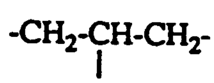

and if n is 4, A is a group

$C(CH_2\text{-})_4$ ,

m is the number 1 or 2 in which, if m is 1,

R' and R'', independently of one another, are hydrogen, $C_1$-$C_{18}$alkyl which is uninterrupted or interrupted by O, S or NH, $C_2$-$C_{12}$alkenyl, unsubstituted or $C_1$-$C_4$alkyl-substituted $C_5$-$C_{12}$cycloalkyl, unsubstituted or $C_1$-$C_{18}$alkyl-substituted phenyl, benzyl or a group

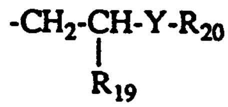 ,

in which Y is -O- or -NH-, $R_{19}$ has the abovementioned meaning and $R_{20}$ is hydrogen, -CO-($C_1$-$C_{18}$-Alkyl) or -CO-($C_2$-$C_{12}$-Alkenyl), or R' is hydrogen and R'' is $C_1$-$C_{12}$alkoxy, a group

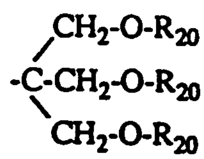 ,

in which $R_{20}$ is as defined above, or a group

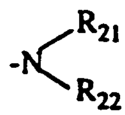 ,

in which $R_{21}$ and $R_{22}$, independently of one another, are hydrogen, $C_1$-$C_{18}$alkyl, $C_2$-$C_{12}$alkenyl, unsubstituted or $C_1$-$C_{18}$alkyl-substituted phenyl, -CO-($C_1$-$C_{18}$-Alkyl) or -CO-($C_2$-$C_{12}$-Alkenyl), benzoyl or together a group =CH-$R_{23}$, in which $R_{23}$ is hydrogen, $C_1$-$C_{18}$alkyl, $C_2$-$C_{12}$alkenyl, $C_5$-$C_{12}$cycloalkyl or phenyl, or R' and R'' together with the nitrogen atom to which they are bound form a pyrrolidine, imidazolidine, piperidine, piperazine or morpholine radical, and if m is 2, R' is hydrogen and R'' is $C_2$-$C_{18}$alkylene.

2. A composition as claimed in claim 1, wherein $R_1$, $R_2$ and $R_3$ in the dioxaphosphorinane compounds of the formulae I, II and III are identical and are as defined in claim 1 and $R_4$, $R_5$ and $R_6$ are hydrogen.

3. A composition as claimed in claim 1, wherein $R_1$, $R_2$ and $R_3$ in the dioxaphosphorinane compounds of the formulae I, II and III are identical and are $C_1$-$C_{18}$alkyl, cyclohexyl, cyclohexenyl or a group -$(CH_2)_2$-$R_7$, $R_7$ is a group -S-($C_1$-$C_{18}$alkyl),

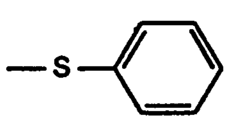 , 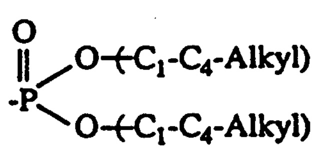 or

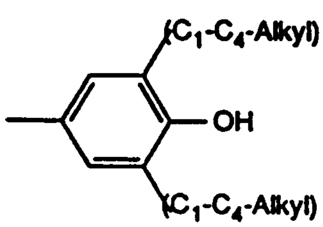

and $R_4$, $R_5$ and $R_6$ are hydrogen.

**4.** A composition as claimed in claim 2, wherein in the dioxaphosphorinane compounds of the formula I, II and III $X^{\oplus}$ is $H^{\oplus}$ or a group of the formulae

$$\frac{M^{r\oplus}}{r}$$

or $N^{\oplus}(R_{15})(R_{16})(R_{17})(R_{18})$, in which $M^{r\oplus}$ is a mono- or divalent metal cation and $R_{15}$, $R_{16}$, $R_{17}$, $R_{18}$, independently of one another, are hydrogen, $C_1$-$C_{12}$alkyl or cyclohexyl, n is the number 1 or 2, if n is 1, A is $C_1$-$C_{18}$alkyl, cyclohexyl, unsubstituted or $C_1$-$C_4$alkyl-substituted phenyl or benzyl, if n is 2, A is $C_2$-$C_{12}$alkylene or $C_2$-$C_{12}$alkylene which is interrupted by -O- or -S-, m is the number 1 or 2, in which, if m is 1,
R' and R'' independently of one another are hydrogen, $C_1$-$C_{18}$alkyl, cyclohexyl, phenyl, benzyl or hydroxy-$C_1$-$C_4$alkyl, or R' is hydrogen and R'' is amino, $C_1$-$C_6$alkylamino,
$C_2$-$C_{12}$dialkylamino, $C_1$-$C_6$alkoxy or a group

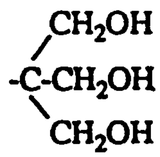

,

or R' and R'' together with the N atom form a piperidine, piperazine or morpholine ring and, if m is 2, R' is hydrogen and R'' is $C_2$-$C_{18}$alkylene.

**5.** A composition as claimed in claim 1, wherein in the dioxaphosphorinane compounds of the formulae I, II and III $X^{\oplus}$ is $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$, $Ni^{2\oplus}/2$, or $^{\oplus}N(R_{15})(R_{16})(R_{17})(R_{18})$ and $R_{15}$, $R_{16}$, $R_{17}$ and $R_{18}$, independently of one another, are hydrogen or $C_1$-$C_6$alkyl,
n is the number 1 or 2,
A is $C_1$-$C_{12}$alkyl, if n is 1, and $C_2$-$C_{12}$alkylene or $C_2$-$C_{12}$alkylene which is interrupted by -O-, if n is 2,
m is the number 1 or 2, in which, if m is 1,
R' and R'', independently of one another, are hydrogen, $C_1$-$C_6$alkyl, hydroxy-$C_2$-$C_4$alkyl, or R' is hydrogen and R'' is amino or $C_1$-$C_4$alkoxy, or R' and R'' together with the N atom form a piperidine, piperazine or morpholine radical, if m is 2, R' is hydrogen and R'' is $C_2$-$C_{18}$alkylene, $R_1$, $R_2$ and $R_3$ are identical and are $C_1$-$C_{12}$alkyl, cyclohexenyl or a group of the formula -$(CH_2)_2$-$R_7$, in which $R_7$ is -S-$C_1$-$C_{14}$alkyl,

$R_7$ -S-$C_1$-$C_{14}$-Alkyl,

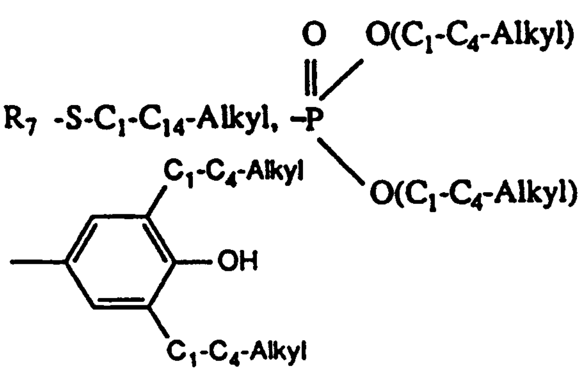

or

and $R_4$, $R_5$ and $R_6$ are hydrogen.

**6.** A composition as claimed in claim 4, wherein in the dioxaphosphorinane compounds of the formulae I, II and III $X^{\oplus}$ is $H^{\oplus}$, $Na^{\oplus}$,$K^{\oplus}$, $Ca^{2\oplus}/2$, $Mg^{2\oplus}/2$, $Zn^{2\oplus}/2$, $Cu^{2\oplus}/2$ or $Ni^{2\oplus}/2$, A is $C_1$-$C_{18}$alkyl, phenyl, benzyl, $C_2$-

$C_{12}$alkylene or $C_2$-$C_{12}$alkylene which is interrupted by -O- or -S-, R' and R'', independently of one another, are hydrogen, $C_1$-$C_{12}$alkyl, phenyl, benzyl or hydroxyl-$C_2$-$C_4$alkyl or R' is hydrogen and R'' is $C_1$-$C_4$alkoxy, amino or $C_2$-$C_{18}$alkylene, or R' and R'' together with the N atom form a piperidine, piperazine or morpholine radical.

**7.** A composition as claimed in claim 1, comprising an organic polymer and at least one dioxaphosphorinane compound of the formulae I, II or III.

**8.** A composition as claimed in claim 7, in which the organic polymer is a thermoplastic, in particular a polyolefin, or an elastomer.

**9.** A composition as claimed in claim 1, comprising a lubricant, a metal-working fluid or a hydraulic fluid and at least one dioxaphosphorinane compound of the formulae I, II or III.

**10.** A composition as claimed in claim 1, additionally comprising further stabilisers, such as antioxidants, light stabilisers and processing stabilisers (heat stabilisers).

**11.** A process for stabilising organic polymers, lubricants, metal-working fluids and hydraulic fluids against oxidative, thermal and/or actinic degradation, which comprises adding at least one compound of the formula I, II and/or III to these materials or applying it thereto as stabiliser.

**12.** A method of improving the use properties of lubricants, which comprises adding thereto at least one compound of the formula I, II and/or III as wear-resistant and/or high-pressure additives.

**Revendications**
**Revendications pour les Etats contractants suivants : BE, DE, FR, GB, IT, NL**

**1.** Composition contenant un polymère organique, à l'exception des polymères à base de résines époxy, un lubrifiant, un fluide pour le traitement des métaux ou un fluide hydraulique et au moins un composé de dioxaphosphorinane ayant les formules

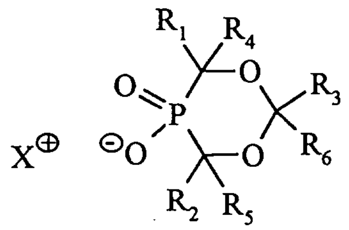

(I),

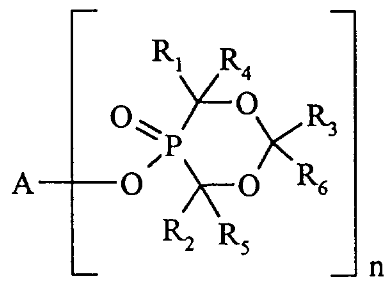

(II) ou/et

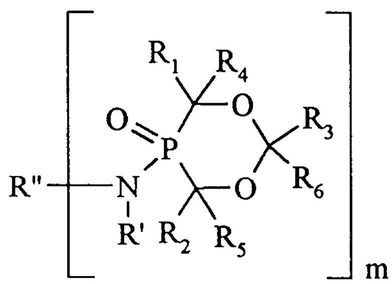

(III),

dans lesquelles

$R_1$, $R_2$, $R_3$, $R_4$, $R_5$ et $R_6$ représentent indépendamment les uns des autres un atome d'hydrogène, un groupe alkyle en $C_1$-$C_{18}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, cyclohexényle, phényle non substitué ou substitué par alkyle en $C_1$-$C_{18}$, hydroxy, alcoxy en $C_1$-$C_{18}$, alcoxycarbonyle en $C_2$-$C_{18}$ ou/et alkylmercapto en $C_1$-$C_{18}$, un groupe

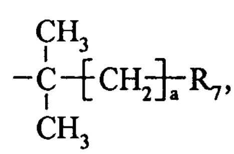

dans lequel a est 0 ou 1 et $R_7$ représente un groupe -S-$R_8$,

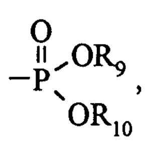 , 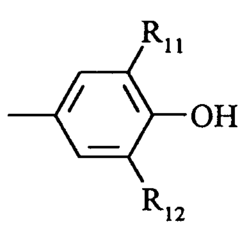 ou 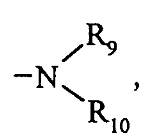 ,

$R_8$ est un groupe alkyle en $C_1$-$C_{18}$, alcényle en $C_2$-$C_{12}$, phényle, benzyle ou -$CH_2$-$COOR_{13}$,

$R_9$ et $R_{10}$ sont indépendamment l'un de l'autre un atome d'hydrogène ou un groupe alkyle en $C_1$-$C_{18}$, cycloalkyle en $C_5$-$C_{12}$ ou phényle,
$R_{11}$ et $R_{12}$ sont indépendamment l'un de l'autre un atome d'hydrogène ou un groupe alkyle en $C_1$-$C_4$, cyclohexyle ou phényle,
$R_{13}$ est un atome d'hydrogène ou un groupe alkyle en $C_1$-$C_{18}$, alcényle en $C_2$-$C_{12}$,cycloalkyle en $C_5$-$C_{12}$ ou benzyle, ou bien

$R_1$, $R_2$, $R_3$, $R_4$, $R_5$ et $R_6$ représentent indépendamment les uns des autres un groupe $-COOR_{13}$,

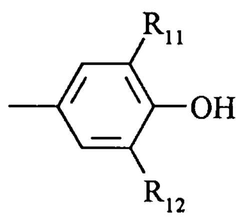 ou 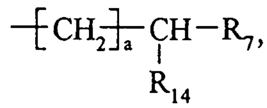

où $R_7$, $R_{11}$, $R_{12}$, $R_{13}$ et a ont les significations indiquées ci-dessus et $R_{14}$ est un atome d'hydrogène lorsque a = 0, et un atome d'hydrogène ou un group méthyle ou phényl lorsque a = 1,

$X^{\oplus}$ représente $H^{\oplus}$ ou un groupe de formule

$$\frac{M^{r\oplus}}{r}$$

ou $N^{\oplus}(R_{15})(R_{16})(R_{17})(R_{18})$, où $M^{r\oplus}$ est un cation métallique de valence r, r représente les chiffres 1, 2 ou 3, $R_{15}$, $R_{16}$, $R_{17}$, $R_{18}$ représentent indépendamment les uns des autres un atome d'hydrogène ou un groupe alkyle en $C_1$-$C_{18}$, cycloalkyle en $C_5$-$C_{12}$ ou phényle non substitué ou substitué par alkyle en $C_1$-$C_{18}$, ou bien $R_{17}$ et $R_{18}$ forment ensemble avec l'atome d'azote un reste pyrrolidine, imidazolidine, pipéridine, pipérazine ou morpholine, ou bien $R_{16}$, $R_{17}$ et $R_{18}$ forment ensemble avec l'atome d'azote un reste pyridine, picoline, pyrazine, quinoléine ou isoquinoléine,

n représente les chiffres 1, 2, 3 ou 4,

lorsque n est 1,

A représente un groupe alkyle en $C_1$-$C_{30}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, benzyle, phényle non substitué ou substitué par alkyle en $C_1$-$C_{18}$, un groupe

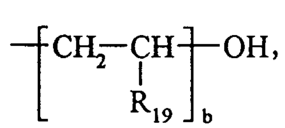

dans lequel $R_{19}$ est un hydrogène ou un méthyle et b est un nombre de 1 à 10, ou un reste

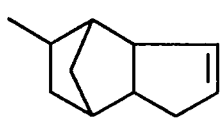 ou 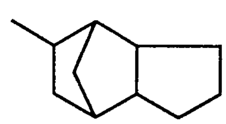,

lorsque n est 2,

A représente un groupe alkylène en $C_2$-$C_{18}$ ou alkylène en $C_2$-$C_{18}$ interrompu par -O-, -NH- ou

-S-,
lorsque n est 3,
A représente un groupe

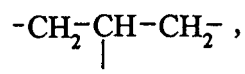

et, lorsque n est 4,

A représente un groupe $C(CH_2-)_4$ ,

m représente les chiffres 1 ou 2, et lorsque m est 1,

R' et R'' sont indépendamment l'un de l'autre un atome d'hydrogène, un groupe alkyle en $C_1$-$C_{18}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, phényle non substitué ou substitué par alkyle en $C_1$-$C_{18}$, benzyle, ou un groupe

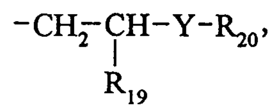

dans lequel Y est -O- ou -NH-, $R_{19}$ a la signification indiquée ci-dessus et $R_{20}$ représente un atome d'hydrogène ou un groupe -CO-(alkyle en $C_1$-$C_{18}$) ou -CO-(alcényle en $C_2$-$C_{12}$), ou

R' est un atome d'hydrogène et R'' est un groupe alcoxy en $C_1$-$C_{12}$, un groupe

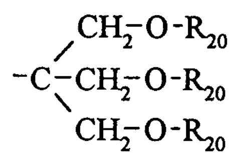

dans lequel $R_{20}$ a la signifieation donnée ci-dessus, ou un groupe

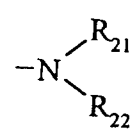

dans lequel $R_{21}$ et $R_{22}$ sont indépendamment l'un de l'autre un atome d'hydrogène ou un groupe alkyle en $C_1$-$C_{18}$, alcényle en $C_2$-$C_{12}$, phényle non substitué ou substitué par alkyle en $C_1$-$C_{18}$, -CO-(alkyle en $C_1$-$C_{18}$) ou -CO-(alcényle en $C_2$-$C_{12}$), ou benzoyle, ou forment ensemble un groupe $=CH-R_{23}$, dans lequel $R_{23}$ est un atome d'hydrogène ou un groupe alkyle en $C_1$-$C_{18}$, alcényle en $C_2$-$C_{12}$, cycloalkyle en $C_5$-$C_{12}$ ou phényle, ou

R' et R'' forment ensemble avec l'atome d'azote auquel ils sont liés un reste pyrrolidine, imidazolidine, pipéridine, pipérazine ou morpholine, et, lorsque m = 2,

R' est un atome d'hydrogène et R'' est un groupe alkylène en $C_2$-$C_{18}$.

**2.** Composition selon la revendication 1, caractérisée en ce que, dans les composés de dioxaphosphorinane de formule I, II et III, $R_1$, $R_2$ et $R_3$ sont identiques et ont la signification donnée dans la revendication 1, et $R_4$, $R_5$ et $R_6$ représentent l'hydrogène.

**3.** Composition selon la revendication 1, caractérisée en ce que, dans les composés de dioxaphosphorinane de formule I, II et III, $R_1$, $R_2$ et $R_3$ sont identiques et représentent un groupe alkyle en $C_1$-$C_{18}$, cyclohexyle, cyclohexényle ou un groupe $-(CH_2)_2-R_7$, $R_7$ est un groupe -S-(alkyle en $C_1$-$C_{18}$),

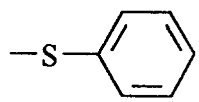,

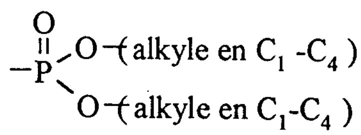 ou 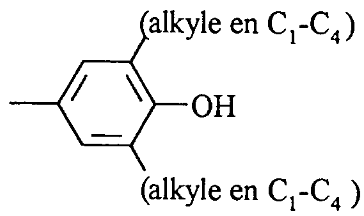,

et $R_4$, $R_5$ et $R_6$ sont des atomes d'hydrogène.

**4.** Composition selon la revendication 2, caractérisée en ce que, dans les composés de dioxaphosphorinane de formule I, II et III

$X^{\oplus}$ représente $H^{\oplus}$ ou un groupe de formule

$$\frac{M^{r\oplus}}{r}$$

ou $N^{\oplus}(R_{15})(R_{16})(R_{17})(R_{18})$, où $M^{r\oplus}$ est un cation métallique mono- ou divalent et $R_{15}$, $R_{16}$, $R_{17}$, $R_{18}$ représentent indépendamment les uns des autres un atome d'hydrogène ou un groupe alkyle en $C_1$-$C_{12}$ ou cyclohexyle,

n représente les chiffres 1 ou 2,

lorsque n est 1,

A représente un groupe alkyle en $C_1$-$C_{18}$, cyclohexyle, phényle non substitué ou substitué par alkyle en $C_1$-$C_4$, ou benzyle,

lorsque n est 2,

A représente un groupe alkylène en $C_2$-$C_{12}$ ou alkylène en $C_2$-$C_{12}$ interrompu par -O- ou -S-,

m représente les chiffres 1 ou 2, et lorsque m est 1,

R' et R'' sont indépendamment l'un de l'autre un atome d'hydrogène ou un groupe alkyle en $C_1$-$C_{18}$, cyclohexyle, phényle, benzyle ou hydroxyalkyle en $C_1$-$C_4$, ou

R' est un atome d'hydrogène et R'' est un groupe amino, alkylamino en $C_1$-$C_6$, dialkylamino en $C_2$-$C_{12}$, alcoxy en $C_1$-$C_6$ ou un groupe

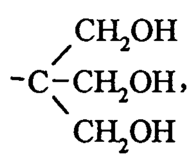,

ou

R' et R'' forment ensemble avec l'atome d'azote un reste pipéridine, pipérazine ou morpholine, ou, lorsque m = 2,

R' est un atome d'hydrogène et R'' est un groupe alkylène en $C_2$-$C_{18}$.

**5.** Composition selon la revendication 1, caractérisée en ce que, dans les composés de dioxaphosphorinane de formule I, II et III

$X^{\oplus}$ est $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$, $Ni^{2\oplus}/2$ ou $^{\oplus}N(R_{15})(R_{16})(R_{17}(R_{18})$ et $R_{15}$, $R_{16}$, $R_{17}$ et $R_{18}$ représentent indépendamment les uns des autres un atome d'hydrogène ou un groupe alkyle en $C_1$-$C_6$,

n représente les chiffres 1 ou 2,
lorsque n est 1, A est un groupe alkyle en $C_1$-$C_{12}$,
lorsque n est 2, A est un groupe alkylène en $C_2$-$C_{12}$ ou alkylène en $C_2$-$C_{12}$ interrompu par -O-,

m représente les chiffres 1 ou 2 et,

lorsque m est 1,

R' et R" sont indépendamment l'un de l'autre un atome d'hydrogène ou un groupe alkyle en $C_1$-$C_6$ ou hydroxyalkyle en $C_2$-$C_4$,

ou R' est un atome d'hydrogène et R" est un groupe amino ou alcoxy en $C_1$-$C_4$, ou R' et R" forment ensemble avec l'atome d'azote un reste pipéridine, pipérazine ou morpholine,

lorsque m est 2, R' est un hydrogène et R" est un alkylène en $C_2$-$C_{18}$, $R_1$, $R_2$ et $R_3$ sont identiques et représentent un groupe alkyle en $C_1$-$C_{12}$ ou cyclohexényle ou un groupe de formule $-(CH_2)_2-R_7$, où $R_7$ est une groupe S-(alkyle en $C_1$-$C_{14}$),

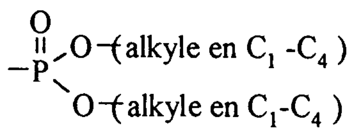 ou 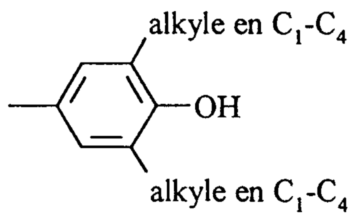 ,

et $R_4$, $R_5$ et $R_6$ sont des atomes d'hydrogène.

**6.** Composition selon la revendication 4, caractérisée en ce que, dans les composés de dioxaphosphorinane de formule I, II et III, $X^{\oplus}$ est $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$ ou $Ni^{2\oplus}/2$, A est un groupe alkyle en $C_1$-$C_{18}$, phényle, benzyle, alkylène en $C_2$-$C_{12}$ ou alkylène en $C_2$-$C_{12}$ interrompu par -O- ou -S-, R' et R" sont indépendamment l'un de l'autre un atome d'hydrogène ou un groupe alkyle en $C_1$-$C_{12}$, phényle, benzyle ou hydroxyalkyle en $C_2$-$C_4$, ou bien R' est un hydrogène et R" est un groupe alcoxy en $C_1$-$C_4$, amino ou alkylène en $C_2$-$C_{18}$, ou bien R' et R" forment ensemble avec l'atome d'azote un reste pipéridine, pipérazine ou morpholine.

**7.** Composition selon la revendication 1, contenant un polymère organique et au moins un composé de dioxaphosphorinane de formule I, II ou III.

**8.** Composition selon la revendication 7, dans laquelle le polymère organique est une matière synthétique thermoplastique, en particulier une polyoléfine, ou un élastomère.

**9.** Composition selon la revendication 1, contenant un lubrifiant, un fluide pour le traitement des métaux ou un fluide hydraulique et au moins un composé de dioxaphosphorinane de formule I, II ou III.

**10.** Composition selon la revendication 1, qui contient en plus d'autres stabilisants comme des antioxydants, des agents de protection contre la lumière et des stabilisants de mise en forme (stabilisants à la chaleur).

**11.** Composés de dioxaphosphorinane de formule I, II et III

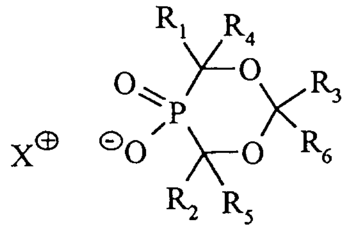

(I),

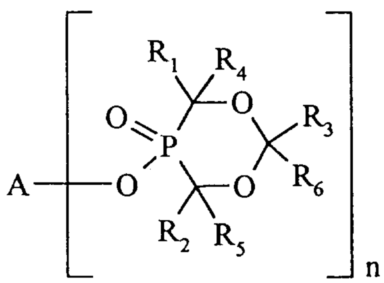

(II),

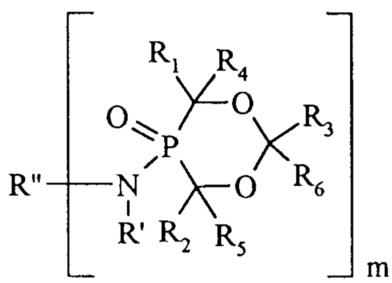

(III),

dans lesquelles

$R_1$, $R_2$, $R_3$, $R_4$, $R_5$ et $R_6$ représentent indépendamment les uns des autres un atome d'hydrogène, un groupe alkyle en $C_1$-$C_{18}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, cyclohexényle, phényle non substitué ou substitué par alkyle en $C_1$-$C_{18}$, hydroxy, alcoxy en $C_1$-$C_{18}$, alcoxycarbonyle en $C_2$-$C_{18}$ ou/et alkylmercapto en $C_1$-$C_{18}$, un groupe

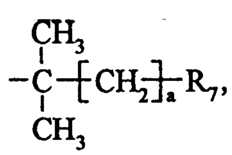

dans lequel a est 0 ou 1 et $R_7$ représente un groupe -S-$R_8$,

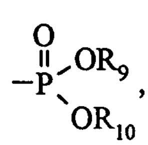 , 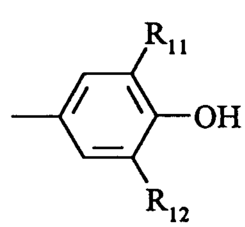 ou 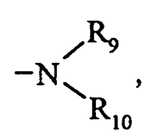 ,

$R_8$ est un groupe alkyle en $C_1$-$C_{18}$, alcényle en $C_2$-$C_{12}$, phényle, benzyle ou -$CH_2$-$COOR_{13}$,
$R_9$ et $R_{10}$ sont indépendamment l'un de l'autre un atome d'hydrogène ou un groupe alkyle en $C_1$-$C_{18}$, cycloalkyle en $C_5$-$C_{12}$ ou phényle,
$R_{11}$ et $R_{12}$ sont indépendamment l'un de l'autre un atome d'hydrogène ou un groupe alkyle en $C_1$-$C_4$, cyclohexyle ou phényle,
$R_{13}$ est un atome d'hydrogène ou un groupe alkyle en $C_1$-$C_{18}$, alcényle en $C_2$-$C_{12}$,cycloalkyle en $C_5$-$C_{12}$ ou benzyle ou bien

$R_1$, $R_2$, $R_3$, $R_4$, $R_5$, et $R_6$ représentent indépendamment les uns des autres un groupe -$COOR_{13}$,

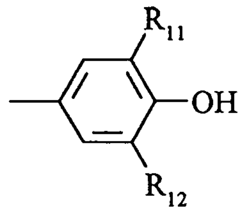 ou 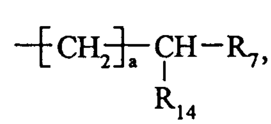

où $R_7$, $R_{11}$, $R_{12}$, $R_{13}$ et a ont les significations indiquées ci-dessus et $R_{14}$ est un atome d'hydrogène lorsque a = 0, et un atome d'hydrogène ou un groupe méthyle ou phényle lorsque a = 1, sous réserve qu'au moins l'un des $R_1$, $R_2$, $R_3$, $R_4$, $R_5$ et $R_6$ soit un groupe

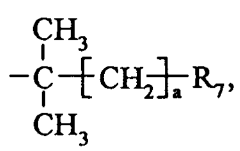 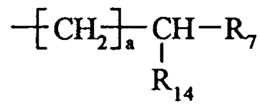 ou 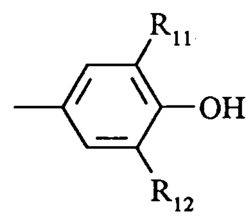

avec les significations indiquées ci-dessus,

$X^{\oplus}$ représente $H^{\oplus}$ ou un groupe de formule

$$\frac{M^{r\oplus}}{r}$$

ou $N^{\oplus}(R_{15})(R_{16})(R_{17})(R_{18})$, où $M^{r\oplus}$ est un cation métallique de valence r, r représente les chiffres 1, 2 ou 3, $R_{15}$, $R_{16}$, $R_{17}$, $R_{18}$ représentent indépendamment les uns des autres un atome d'hydrogène ou un groupe alkyle en $C_1$-$C_{18}$, cycloalkyle en $C_5$-$C_{12}$ ou phényle non substitué ou substitué par alkyle en $C_1$-$C_{18}$, ou bien $R_{17}$ et $R_{18}$ forment ensemble avec l'atome d'azote un reste pyrrolidine, imidazolidine, pipéridine, pipérazine ou morpholine, ou bien $R_{16}$, $R_{17}$ et $R_{18}$ forment ensemble avec l'atome d'azote un reste pyridine, picoline, pyrazine, quinoléine ou isoquinoléine,

n représente les chiffres 1, 2, 3 ou 4,

lorsque n est 1,

A représente un groupe alkyle en $C_1$-$C_{30}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, benzyle, phényle non substitué ou substitué par alkyle en $C_1$-$C_{18}$, un groupe

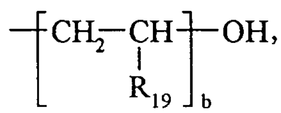

dans lequel $R_{19}$ est un hydrogène ou un méthyle et b est un nombre de 1 à 10, ou un reste

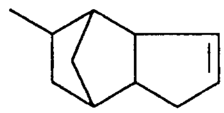 ou 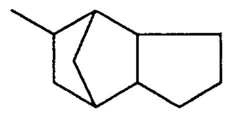 ,

lorsque n est 2,

A représente un groupe alkylène en $C_2$-$C_{18}$ ou alkylène en $C_2$-$C_{18}$ interrompu par -O-, -S- ou -NH-,

lorsque n est 3,

A représente un groupe

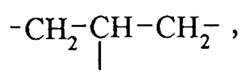

et, lorsque n est 4,

A représente un groupe $C(CH_2\text{-})_4$,

m représente les chiffres 1 ou 2, et lorsque m est 1,

R' et R" sont indépendamment l'un de l'autre un atome d'hydrogène, un groupe alkyle en $C_1$-$C_{18}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, phényle non substitué ou substitué par alkyle en $C_1$-$C_{18}$, benzyle, ou un groupe

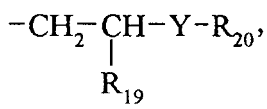

dans lequel Y est -O- ou -NH-, $R_{19}$ a la signification indiquée ci-dessus et $R_{20}$ représente un atome d'hydrogène ou un groupe -CO-(alkyle en $C_1$-$C_{18}$) ou -CO-(alcényle en $C_2$-$C_{12}$), ou

R' est un atome d'hydrogène et R" est un groupe alcoxy en $C_1$-$C_{12}$, un groupe

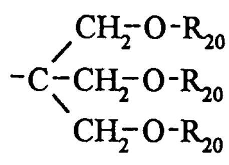

dans lequel $R_{20}$ a la signification donnée ci-dessus, ou un groupe

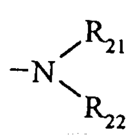

dans lequel $R_{21}$ et $R_{22}$ sont indépendamment l'un de l'autre un atome d'hydrogène ou

un groupe alkyle en $C_1$-$C_{18}$, alcényle en $C_2$-$C_{12}$, phényle non substitué ou substitué par alkyle en $C_1$-$C_{18}$, -CO-(alkyle en $C_1$-$C_{18}$) ou -CO-(alcényle en $C_2$-$C_{12}$), ou benzoyle, ou forment ensemble un groupe $=CH-R_{23}$, dans lequel $R_{23}$ est un atome d'hydrogène ou un groupe alkyle en $C_1$-$C_{18}$, alcényle en $C_2$-$C_{12}$, cycloalkyle en $C_5$-$C_{12}$ ou phényle, ou

R' et R'' forment ensemble avec l'atome d'azote auquel ils sont liés un reste pyrrolidine, imidazolidine, pipéridine, pipérazine ou morpholine, et, lorsque m = 2,

R' est un atome d'hydrogène et R'' est un groupe alkylène en $C_2$-$C_{18}$.

**12.** Composés de dioxaphosphorinane selon la revendication 11, de formule

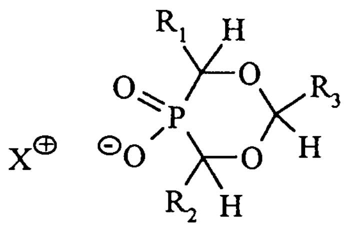

(IV),

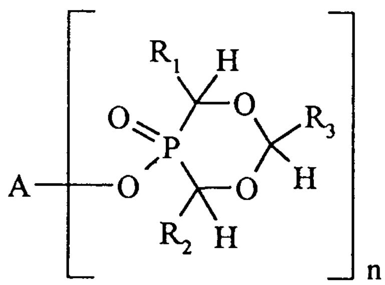

(V) et

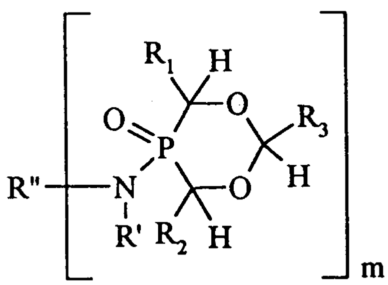

(VI),

dans lesquelles

$R_1$, $R_2$ et $R_3$ sont identiques et ont la signification donnée dans la revendication 11,

$X^{\oplus}$ représente $H^{\oplus}$ ou un groupe de formule

$$\frac{M^{r\oplus}}{r}$$

ou $N^{\oplus}(R_{15})(R_{16})(R_{17})(R_{18})$, où $M^{r\oplus}$ est un cation métallique mono- ou divalent et $R_{15}$, $R_{16}$, $R_{17}$, $R_{18}$ représentent indépendamment les uns des autres un atome d'hydrogène ou un groupe alkyle en $C_1$-$C_{12}$ ou cyclohexyle,

n représente les chiffres 1 ou 2,

lorsque n est 1,

A représente un groupe alkyle en $C_1$-$C_{18}$, cyclohexyle, phényle non substitué ou substitué par alkyle en $C_1$-$C_4$, ou benzyle,

lorsque n est 2,

A représente un groupe alkylène en $C_2$-$C_{12}$ ou alkylène en $C_2$-$C_{12}$ interrompu par -O-,

m représente les chiffres 1 ou 2, et lorsque m est 1,

R' et R" sont indépendamment l'un de l'autre un atome d'hydrogène ou un groupe alkyle en $C_1$-$C_{18}$, cyclohexyle, phényle, benzyle ou hydroxyalkyle en $C_2$-$C_4$, ou

R' est un atome d'hydrogène et R" est un groupe amino, alcoxy en $C_1$-$C_6$ ou un groupe

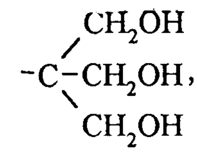

ou R' et R" forment ensemble avec l'atome d'azote un reste pipéridine, pipérazine ou morpholine,

ou, lorsque m = 2,

R' est un atome d'hydrogène et R" est un groupe alkylène en $C_2$-$C_{18}$.

**13.** Composés de dioxaphosphorinane de formule IV, V et VI selon la revendication 12, dans lesquels $R_1$, $R_2$ et $R_3$ sont identiques et représentent un groupe $-(CH_2)_2-R_7$, $R_7$ est un groupe -S-(alkyle en $C_1$-$C_{14}$),

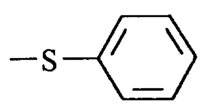
,

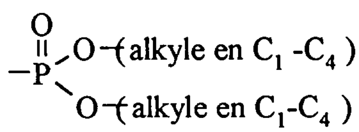
ou
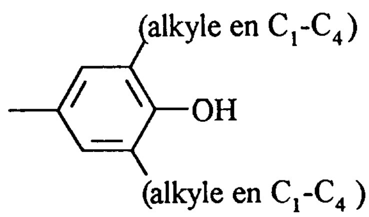
,

et $R_4$, $R_5$ et $R_6$ sont des atomes d'hydrogène, $X^{\oplus}$ est $H^{\oplus}$, $Na^{\oplus}$, $K^{\oplus}$ $Ca^{2\oplus}/2$, $Mg^{2\oplus}/2$, $Zn^{2\oplus}/2$, $Cu^{2\oplus}/2$ ou $Ni^{2\oplus}/2$, n est 1, A est un groupe alkyle en $C_1$-$C_{18}$, m est 1, R' représente l'hydrogène et R" représente un groupe alkyle en $C_1$-$C_4$, $-CH_2-CH_2OH$ ou $-NH_2$.

**14.** Utilisation de composés de dioxaphosphorinane de formule I, II et/ou III ayant la définition indiquée dans la revendication 1 pour stabiliser des polymères organiques, des lubrifiants, des fluides pour le traitement des métaux et des fluides hydrauliques contre la dégradation due à l'oxydation, la chaleur et/ou la lumière, ou comme agents anti-usure et comme additifs haute pression dans des lubrifiants.

**15.** Procédé de stabilisation de polymères organiques, de lubrifiants, de fluides pour le traitement des métaux et de fluides hydrauliques contre la dégradation due à l'oxydation, la chaleur et/ou la lumière, caractérisé en ce que l'on ajoute à ces matériaux ou on applique sur ces matériaux au moins un composé de formule I, II ou III comme stabilisant.

**Revendications pour l'Etat contractant suivant : ES**

**1.** Composition contenant un polymère organique, à l'exception des polymères à base de résines époxy, un lubrifiant, un fluide pour le traitement des métaux ou un fluide hydraulique et au moins un composé de dioxaphosphorinane ayant les formules

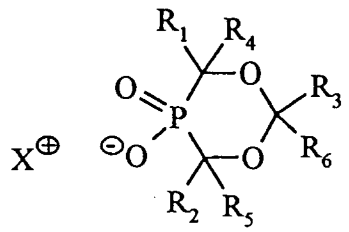

(I),

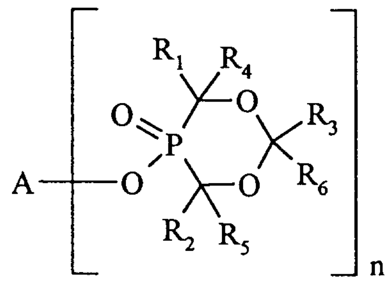

(II) ou/et

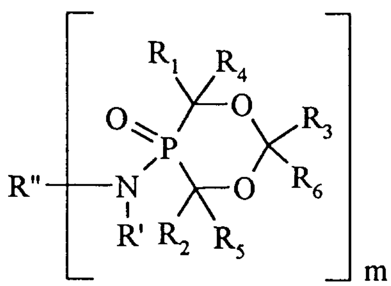

(III),

dans lesquelles

$R_1$, $R_2$, $R_3$, $R_4$, $R_5$ et $R_6$ représentent indépendamment les uns des autres un atome d'hydrogène, un groupe alkyle en $C_1$-$C_{18}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, cyclohexényle, phényle non substitué ou substitué par alkyle en $C_1$-$C_{18}$, hydroxy, alcoxy en $C_1$-$C_{18}$, alcoxycarbonyle en $C_2$-$C_{18}$ ou/et alkylmercapto en $C_1$-$C_{18}$, un groupe

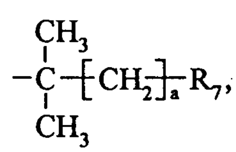

dans lequel a est 0 ou 1 et $R_7$ représente un groupe -S-$R_8$,

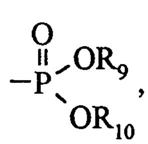 , 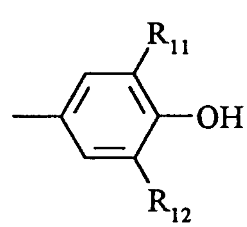 ou 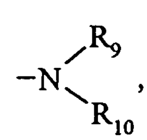 ,

$R_8$ est un groupe alkyle en $C_1$-$C_{18}$, alcényle en $C_2$-$C_{12}$, phényle,

benzyle ou $-CH_2-COOR_{13}$,
$R_9$ et $R_{10}$ sont indépendamment l'un de l'autre un atome d'hydrogène ou un groupe alkyle en $C_1$-$C_{18}$, cycloalkyle en $C_5$-$C_{12}$ ou phényle,
$R_{11}$ et $R_{12}$ sont indépendamment l'un de l'autre un atome d'hydrogène ou un groupe alkyle en $C_1$-$C_4$, cyclohexyle ou phényle,
$R_{13}$ est un atome d'hydrogène ou un groupe alkyle en $C_1$-$C_{18}$, alcényle en $C_2$-$C_{12}$,cycloalkyle en $C_5$-$C_{12}$ ou benzyle, ou bien

$R_1$, $R_2$, $R_3$, $R_4$, $R_5$ et $R_6$ représentent indépendamment les uns des autres un groupe $-COOR_{13}$,

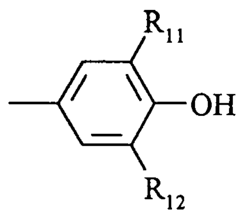 ou 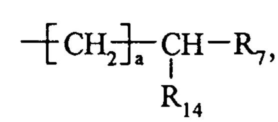

où $R_7$, $R_{11}$, $R_{12}$, $R_{13}$ et a ont les significations indiquées ci-dessus et $R_{14}$ est un atome d'hydrogène lorsque a = 0, et un atome d'hydrogène ou un groupe méthyle ou phényle lorsque a = 1,

$X^{\oplus}$ représente $H^{\oplus}$ ou un groupe de formule

$$\frac{M^{r\oplus}}{r}$$

ou $N^{\oplus}(R_{15})(R_{16})(R_{17})(R_{18})$, où $M^{r\oplus}$ est un cation métallique de valence r, r représente les chiffres 1, 2 ou 3, $R_{15}$, $R_{16}$, $R_{17}$, $R_{18}$ représentent indépendamment les uns des autres un atome d'hydrogène ou un groupe alkyle en $C_1$-$C_{18}$, cycloalkyle en $C_5$-$C_{12}$ ou phényle non substitué ou substitué par alkyle en $C_1$-$C_{18}$, ou bien $R_{17}$ et $R_{18}$ forment ensemble avec l'atome d'azote un reste pyrrolidine, imidazolidine, pipéridine, pipérazine ou morpholine, ou bien $R_{16}$, $R_{17}$ et $R_{18}$ forment ensemble avec l'atome d'azote un reste pyridine, picoline, pyrazine, quinoléine ou isoquinoléine,

n représente les chiffres 1, 2, 3 ou 4,

lorsque n est 1,

A représente un groupe alkyle en $C_1$-$C_{30}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, benzyle, phényle non substitué ou substitué par alkyle en $C_1$-$C_{18}$, un groupe

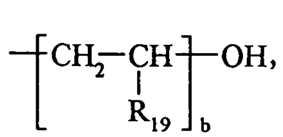

dans lequel $R_{19}$ est un hydrogène ou un méthyle et b est un nombre de 1 à 10, ou un reste

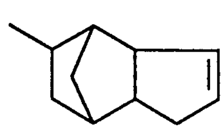 ou 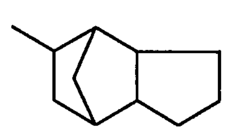 ,

lorsque n est 2,

A représente un groupe alkylène en $C_2$-$C_{18}$ ou alkylène en $C_2$-$C_{18}$ interrompu par -O-, -NH- ou

-S-,
lorsque n est 3,
A représente un groupe

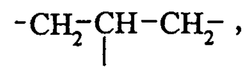

et, lorsque n est 4,

A représente un groupe $C(CH_2-)_4$,

m représente les chiffres 1 ou 2, et lorsque m est 1,

R' et R'' sont indépendamment l'un de l'autre un atome d'hydrogène, un groupe alkyle en $C_1$-$C_{18}$ non interrompu ou interrompu par O, S ou NH, alcényle en $C_2$-$C_{12}$, cycloalkyle en $C_5$-$C_{12}$ non substitué ou substitué par alkyle en $C_1$-$C_4$, phényle non substitué ou substitué par alkyle en $C_1$-$C_{18}$, benzyle, ou un groupe

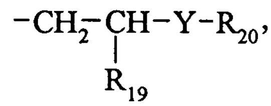

dans lequel Y est -O- ou -NH-, $R_{19}$ a la signification indiquée ci-dessus et $R_{20}$ représente un atome d'hydrogène ou un groupe -CO-(alkyle en $C_1$-$C_{18}$) ou -CO-(alcényle en $C_2$-$C_{12}$), ou

R' est un atome d'hydrogène et R'' est un groupe alcoxy en $C_1$-$C_{12}$, un groupe

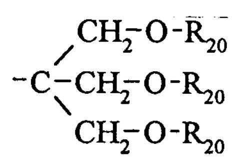

dans lequel $R_{20}$ a la signification donnée ci-dessus, ou un groupe

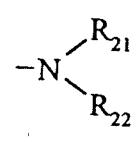

dans lequel $R_{21}$ et $R_{22}$ sont indépendamment l'un de l'autre un atome d'hydrogène ou un groupe alkyle en $C_1$-$C_{18}$, alcényle en $C_2$-$C_{12}$, phényle non substitué ou substitué par alkyle en $C_1$-$C_{18}$, -CO-(alkyle en $C_1$-$C_{18}$) ou -CO-(alcényle en $C_2$-$C_{12}$), ou benzoyle, ou forment ensemble un groupe $=CH-R_{23}$, dans lequel $R_{23}$ est un atome d'hydrogène ou un groupe alkyle en $C_1$-$C_{18}$, alcényle en $C_2$-$C_{12}$, cycloalkyle en $C_5$-$C_{12}$ ou phényle, ou

R' et R'' forment ensemble avec l'atome d'azote auquel ils sont liés un reste pyrrolidine, imidazolidine, pipéridine, pipérazine ou morpholine, et, lorsque m = 2,

R' est un atome d'hydrogène et R'' est un groupe alkylène en $C_2$-$C_{18}$.

**2.** Composition selon la revendication 1, caractérisée en ce que, dans les composés de dioxaphosphorinane de formule I, II et III, $R_1$, $R_2$ et $R_3$ sont identiques et ont la signification donnée dans la revendication 1, et $R_4$, $R_5$ et $R_6$ représentent l'hydrogène.

**3.** Composition selon la revendication 1, caractérisée en ce que, dans les composés de dioxaphosphorinane de formule I, II et III, $R_1$, $R_2$ et $R_3$ sont identiques et représentent un groupe alkyle en $C_1$-$C_{18}$, cyclohexyle, cyclohexényle ou un groupe $-(CH_2)_2-R_7$, $R_7$ est un groupe -S-(alkyle en $C_1$-$C_{18}$),

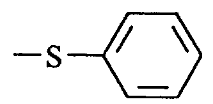,

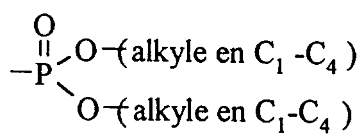 ou 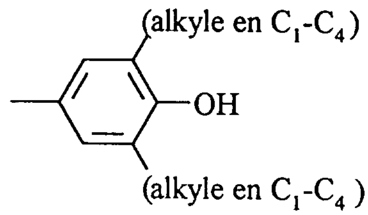,

et $R_4$, $R_5$ et $R_6$ sont des atomes d'hydrogène.

**4.** Composition selon la revendication 2, caractérisée en ce que, dans les composés de dioxaphosphorinane de formule I, II et III

X$^{\oplus}$ représente H$^{\oplus}$ ou un groupe de formule

$$\frac{M^{r\oplus}}{r}$$

ou $N^{\oplus}(R_{15})(R_{16})(R_{17})(R_{18})$, où $M^{r\oplus}$ est un cation métallique mono- ou divalent et $R_{15}$, $R_{16}$, $R_{17}$, $R_{18}$ représentent indépendamment les uns des autres un atome d'hydrogène ou un groupe alkyle en $C_1$-$C_{12}$ ou cyclohexyle,

n représente les chiffres 1 ou 2,

lorsque n est 1,

A représente un groupe alkyle en $C_1$-$C_{18}$, cyclohexyle, phényle non substitué ou substitué par alkyle en $C_1$-$C_4$, ou benzyle,

lorsque n est 2,

A représente un groupe alkylène en $C_2$-$C_{12}$ ou alkylène en $C_2$-$C_{12}$ interrompu par -O- ou -S-,

m représente les chiffres 1 ou 2, et lorsque m est 1,

R' et R" sont indépendamment l'un de l'autre un atome d'hydrogène ou un groupe alkyle en $C_1$-$C_{18}$, cyclohexyle, phényle, benzyle ou hydroxyalkyle en $C_1$-$C_4$, ou

R' est un atome d'hydrogène et R" est un groupe amino, alkylamino en $C_1$-$C_6$, dialkylamino en $C_2$-$C_{12}$, alcoxy en $C_1$-$C_6$ ou un groupe

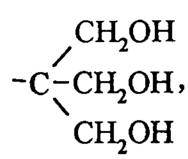,

ou

R' et R" forment ensemble avec l'atome d'azote un reste pipéridine, pipérazine ou morpholine,

ou, lorsque m = 2,

R' est un atome d'hydrogène et R" est un groupe alkylène en $C_2$-$C_{18}$.

**5.** Composition selon la revendication 1, caractérisée en ce que, dans les composés de dioxaphosphorinane de formule I, II et III,

X$^{\oplus}$ est H$^{\oplus}$, Na$^{\oplus}$, K$^{\oplus}$, $Ca^{2\oplus}/2$, $Mg^{2\oplus}/2$, $Zn^{2\oplus}/2$, $Cu^{2\oplus}/2$ ou $Ni^{2\oplus}/2$ ou $^{\oplus}N(R_{15})(R_{16})(R_{17})(R_{18})$ et $R_{15}$, $R_{16}$, $R_{17}$ et $R_{18}$ représentent indépendamment les uns des autres un atome d'hydrogène ou un groupe alkyle en $C_1$-$C_6$,

n représente les chiffres 1 ou 2,
lorsque n est 1, A est un groupe alkyle en $C_1$-$C_{12}$,
lorsque n est 2, A est un groupe alkylène en $C_2$-$C_{12}$ ou alkylène en $C_2$-$C_{12}$ interrompu par -O-,

m représente les chiffres 1 ou 2 et,
lorsque m est 1,
R' et R" sont indépendamment l'un de l'autre un atome d'hydrogène ou un groupe alkyle en $C_1$-$C_6$ ou hydroxyalkyle en $C_2$-$C_4$,
ou R' est un atome d'hydrogène et R" est un groupe amino ou alcoxy en $C_1$-$C_4$, ou R' et R" forment ensemble avec l'atome d'azote un reste pipéridine, pipérazine ou morpholine,
lorsque m est 2, R' est un hydrogène et R" est un alkylène en $C_2$-$C_{18}$, $R_1$, $R_2$ et $R_3$ sont identiques et représentent un groupe alkyle en $C_1$-$C_{12}$ ou cyclohexényle ou un groupe de formule $-(CH_2)_2-R_7$, où $R_7$ est un groupe S-(alkyle en $C_1$-$C_{14}$),

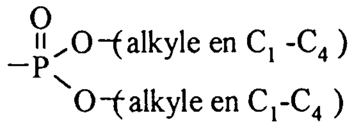
ou
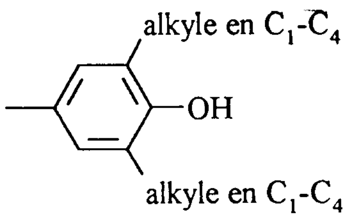
,

et $R_4$, $R_5$ et $R_6$ sont des atomes d'hydrogène.

**6.** Composition selon la revendication 4, caractérisée en ce que, dans les composés de dioxaphosphorinane de formule I, II et III, $X^{\oplus}$ est $H^{\oplus}$, $Na^{\oplus}$, $K^{\oplus}$, $Ca^{2\oplus}/2$, $Mg^{2\oplus}/2$, $Zn^{2\oplus}/2$, $Cu^{2\oplus}/2$ ou $Ni^{2\oplus}/2$, A est un groupe alkyle en $C_1$-$C_{18}$, phényle, benzyle, alkylène en $C_2$-$C_{12}$ ou alkylène en $C_2$-$C_{12}$ interrompu par -O- ou -S-, R' et R" sont indépendamment l'un de l'autre un atome d'hydrogène ou un groupe alkyle en $C_1$-$C_{12}$, phényle, benzyle ou hydroxyalkyle en $C_2$-$C_4$, ou bien R' est un hydrogène et R" est un groupe alcoxy en $C_1$-$C_4$, amino ou alkylène en $C_2$-$C_{18}$, ou bien R' et R" forment ensemble avec l'atome d'azote un reste pipéridine, pipérazine ou morpholine.

**7.** Composition selon la revendication 1, contenant un polymère organique et au moins un composé de dioxaphosphorinane de formule I, II ou III.

**8.** Composition selon la revendication 7, dans laquelle le polymère organique est une matière synthétique thermoplastique, en particulier une polyoléfine, ou un élastomère.

**9.** Composition selon la revendication 1, contenant un lubrifiant, un fluide pour le traitement des métaux ou un fluide hydraulique et au moins un composé de dioxaphosphorinane de formule I, II ou III.

**10.** Composition selon la revendication 1, qui contient en plus d'autres stabilisants comme des antioxydants, des agents de protection contre la lumière et des stabilisants de mise en forme (stabilisants à la chaleur).

**11.** Procédé de stabilisation de polymères organiques, de lubrifiants, de fluides pour le traitement des métaux et de fluides hydrauliques contre la dégradation due à l'oxydation, la chaleur et/ou la lumière, caractérisé en ce que l'on ajoute à ces matériaux ou on applique sur ces matériaux au moins un composé de formule I, II ou III comme stabilisant.

**12.** Procédé pour améliorer les propriétés d'emploi de lubrifiants, caractérisé en ce qu'on leur ajoute au moins un composé de formule I, II ou/et III en tant qu'agent anti-usure ou/et additif haute pression.